# EUROPEAN PATENT APPLICATION

(11) **EP 4 632 902 A1**
(43) Date of publication of application: **15.10.2025**
(21) Application number: 24741217.4
(22) Date of filing: 09.01.2024
(51) Int. Cl.: H01M 50/209

(54) **HIGH-CAPACITY BATTERY AND METHOD FOR REPAIRING HIGH-CAPACITY BATTERY**

(30) Priority: 11.01.2023 CN 202310041077; 11.01.2023 CN 202310040966; 11.01.2023 CN 202310040887; 11.01.2023 CN 202310040863; 11.01.2023 CN 202310040868; 11.01.2023 CN 202310041289; 11.01.2023 CN 202310041133; 11.01.2023 CN 202310041129; 11.01.2023 CN 202310040928; 11.01.2023 CN 202310040927; 13.01.2023 CN 202310058450; 13.01.2023 CN 202310058282; 28.04.2023 CN 202310474182; 24.08.2023 CN 202311072312; 24.08.2023 CN 202311072310; 24.08.2023 CN 202311072336; 24.08.2023 CN 202311072319
(71) Applicant: D-Aus Energy Storage Technology (Xi'an) Co., Ltd, Xi' An, Shaanxi 710075 (CN)
(72) Inventor: LEI, Zhengjun, Shaanxi 710075 (CN); ZHANG, Sanxue, Shaanxi 710075 (CN); ZHENG, Gaofeng, Shaanxi 710075 (CN); CHEN, Mengqi, Shaanxi 710075 (CN); HAN, Xiaoyu, Shaanxi 710075 (CN)
(74) Representative: Zacco GmbH
(86) International application number: PCT/CN2024/071261
(87) International publication number: WO 2024/149218

(57) **Abstract**

The present application provides a high-capacity battery and a method for repairing the high-capacity battery, primarily resolving the problems with existing high-capacity batteries of limited upper capacity limits and limited number of cycles, caused by poor consistency. The high-capacity battery comprises multiple battery cells connected in parallel, an inner cavity of each battery cell comprises a gas region and an electrolyte region; and the electrolyte regions of the battery cells being in communication, thereby forming a shared electrolyte system. In the high-capacity battery of the present application, the electrolyte regions of each battery cell are communicated, so that the electrolytes of all battery cells are in the same system, the difference among battery cells is reduced, and the performance and cycle life of the high-capacity battery are increased.

## Description

### Technical Field

The present invention relates to the technical field of batteries, and particularly relates to a high-capacity battery and a method for repairing the high-capacity battery.

### Background

In recent years, with the further development of lithium ion batteries, the application scenarios of the lithium ion batteries are becoming more and more extensive, especially some use scenarios with higher requirements for battery capacities, for example, power batteries of automobiles, energy storage batteries constituting household optical storage all-in-one machines, batteries constituting energy storage systems for power plants, etc.

In the above use scenarios, in order to meet the higher capacity requirements, an existing method is to connect a plurality of battery cells (the battery cells are generally cylindrical batteries or square batteries) together in a series-parallel combination mode to form a high-capacity battery. However, due to the own differences of the battery cells in the above high-capacity battery, the uniformity of the battery cells in the high-capacity battery is worse, which directly results in a limited capacity and a limited cycle life of a battery pack or the high-capacity battery.

### Summary

Some embodiments of the present invention provide a method for repairing a high-capacity battery, which mainly solves the problems of limited capacity upper limits and limited number of cycles of existing high-capacity batteries due to worse consistency.

In order to solve the above problems, the technical solutions of the present invention are as follows:
Some embodiments of the present invention provide a high-capacity battery. The high-capacity battery includes a plurality of battery cells connected in parallel, wherein an inner cavity of each of the plurality of battery cells includes a gas region and an electrolyte region; and the electrolyte regions of the plurality of battery cells communicate with each other to form an electrolyte sharing system. The core principle of the high-capacity battery in this structural form is that the consistency of the plurality of battery cells is guaranteed by sharing the electrolyte of the plurality of battery cells, that is, the electrolyte regions of the plurality of battery cells communicate with each other, so that the electrolyte of all battery cells is in the same system, thereby reducing the differences among the plurality of battery cells, improving the performance of the high-capacity battery, and prolonging the cycle life of the high-capacity battery.

The electrolyte sharing system includes a first hollow member, and the first hollow member communicates with the electrolyte regions of the plurality of battery cells.

In an embodiment, the first hollow member includes a plurality of first hollow units that are disposed on lower cover plates of the plurality of battery cells and communicate with the electrolyte regions of the plurality of battery cells respectively, and a plurality of second hollow units configured for communicating the plurality of first hollow units. The structure may be formed at a time by using an extrusion process, and thus the use effect is better.

In an embodiment, one end of the first hollow member is provided with an explosion venting valve, the electrolyte sharing system is used as an explosion venting channel, and when thermal runaway occurs in any one of the plurality of battery cells, almost all free-state electrolyte in the high-capacity battery is discharged in time, thereby reducing the possibility of continuously triggering thermal runaway.

In the present invention, the high-capacity battery in the above structural form is optimized, a repair apparatus is added on the basis of the above structure, the repair apparatus is configured for increasing the overall number of cycles and the capacity upper limit of the high-capacity battery, and prolonging the service life of the high-capacity battery, and the repair apparatus will be described below.

The repair apparatus includes a liquid injection and replacement mechanism, and the liquid injection and replacement mechanism is configured for injecting electrolyte into the electrolyte sharing system, or replacing the electrolyte in the electrolyte sharing system in an injection and extraction mode. The liquid injection and replacement mechanism is connected to the electrolyte sharing system, and electrolyte or a lithium supplementation additive may be regularly and quantitatively added into the high-capacity battery by the liquid injection and replacement mechanism, or the electrolyte of the electrolyte sharing system is regularly replaced, thereby further improving the cycle performance of the high-capacity battery.

In an embodiment, according to the structural features of the first hollow member, the liquid injection and replacement mechanism may be disposed on one end of the first hollow member, and meanwhile, the explosion venting valve is disposed on the other end of the first hollow member. Thus, the first hollow member may not only serve as a liquid injection and replacement channel, but may also serve as the explosion venting channel of the high-capacity battery when thermal runaway occurs in a certain battery cell, thereby not only facilitating a liquid injection and replacement operation, but also improving the safety of the high-capacity battery.

The liquid injection and replacement mechanism has a plurality of forms, and the present invention provides the following two embodiments:
The specific structure of the liquid injection and replacement mechanism in the first embodiment is that the liquid injection and replacement mechanism includes a valve and a liquid extraction and injection device, one end of the valve communicates with the first hollow member, and the other end thereof communicates with the liquid extraction and injection device, wherein the valve may be a three-way valve, a first port of the three-way valve may be communicate with the first hollow member, a second port thereof communicates with the liquid extraction and injection device, and a third port thereof is configured for connecting a vacuumizing apparatus. Such a design may not only meet a liquid extraction and injection function, but may also complete a vacuumizing operation before liquid injection, so that the electrolyte may smoothly enter each of the plurality of battery cells.

The specific structure of the liquid injection and replacement mechanism in the second embodiment is that the liquid injection and replacement mechanism includes a sealing cap and a rubber pad; the sealing cap is hermetically installed on an end portion of the first hollow member and is configured for sealing the end portion from the outside; and the rubber pad is fixedly disposed in the first hollow member at a position close to the sealing cap, and the rubber pad may be configured for inserting a liquid injection needle tube. The liquid injection and replacement mechanism seals the first hollow member by using the detachable cap when the high-capacity battery works normally, the cap is disassembled when it is necessary to perform liquid injection and replacement, and a liquid injection and replacement operation may be implemented by inserting the liquid injection needle tube. The structural form of the second liquid injection and replacement mechanism has a simple structure and a lower structural cost compared with the structure of the first liquid injection and replacement mechanism, and has higher safety since there is no electric device in the liquid injection and replacement mechanism, however, the operation is relatively tedious, and the working efficiency is relatively low.

In an embodiment, in order to improve the liquid injection and replacement effect of the second liquid injection and replacement mechanism, the liquid injection and replacement mechanism further includes a third hollow member fixed in the first hollow member; a plurality of first through holes are uniformly formed in the third hollow member; and the forming position of each of the plurality of first through holes corresponds to one battery cell, meanwhile, a plurality of second through holes are formed in a tube wall of the liquid injection needle tube, and the plurality of second through holes are in one-to-one correspondence with the plurality of first through holes. In order to better hermetically connect a rubber stopper in the first hollow member, the liquid injection and replacement mechanism further includes a fixing ring, the fixing ring is fixed in the first hollow member, and the rubber pad is intercalated into the fixing ring.

The repair apparatus includes at least one lithium source disposed in the electrolyte sharing system; and at least part of the at least one lithium source is electrically conducted with at least one shell of the plurality of battery cells, so that lithium ions in the at least one lithium source are released and intercalated into a negative electrode material of each of the plurality of battery cells. After the high-capacity battery is powered on, since each of the at least one shell of the plurality of battery cells is electrically conducted with a positive electrode, the at least one lithium source is electrically conducted with the positive electrode of at least one battery cell, and due to the existence of a potential difference, the lithium ions released from the at least one lithium source are intercalated into the negative electrode material of each of the plurality of battery cells, thereby compensating for lithium ions consumed when a solid electrolyte interphase (SEI) film is formed on the surface of a negative electrode of each of the plurality of battery cells, and improving the own capacity upper limit value of each of the plurality of battery cells. Based on the lithium supplementation mechanism of the at least one lithium source, with the continuous work of the high-capacity battery, the at least one lithium source may continuously perform lithium supplementation repair on the high-capacity battery, thereby greatly reducing the capacity attenuation speed of the high-capacity battery caused by the loss of the lithium ions, and prolonging the service life of cyclic charging and discharging of the high-capacity battery.

In an embodiment, according to the features of the first hollow member, the at least one lithium source may be directly disposed in the first hollow member, and the assembly relationship is that the at least one lithium source is located in the first hollow member, the at least one lithium source is hermetically connected with one end of the first hollow member, and the other end of the first hollow member is provided with a liquid injection and replacement mechanism or an explosion venting valve. By disposing the liquid injection and replacement mechanism on the first hollow member, the high-capacity battery may have a liquid injection and replacement function, when electrolyte is injected for the first time by the liquid injection and replacement mechanism, the plurality of battery cells of the high-capacity battery may be located in the same electrolyte system, and electrolyte is subsequently injected by the liquid injection and replacement mechanism, or the electrolyte in the high-capacity battery may be replaced to further repair the capacity of the high-capacity battery, thereby compensating for the consumption of the electrolyte in the electrolyte sharing system. If the liquid injection and replacement mechanism is replaced with the explosion venting valve, when thermal runaway occurs in a certain battery cell in the high-capacity battery, a thermal runaway flue gas may be released to the outside by the first hollow member and the explosion venting valve, and is treated in a single or combined mode such as ignition, adsorption, or cooling, so as to ensure the safety of the high-capacity battery.

In an embodiment, when the at least one lithium source is installed on the first hollow member, in order to not only ensure that the at least one lithium source is electrically conducted with at least one shell of the plurality of battery cells, but also ensure that the at least one lithium source remains sealed and isolated from an external environment, in the present invention, the structure of the at least one lithium source and an assembly relationship with the first hollow member are as follows: the at least one lithium source includes a conductive end cap, a lithium rod and a sealing plug; an outer surface of the conductive end cap is provided with threads, and a central through hole is formed in the outer surface of the conductive end cap; the conductive end cap is in threaded connection with a port of one end of the first hollow member; the lithium rod includes a conductive section and a lithium supplementation section; the conductive section is located in the central through hole and is in contact with a hole wall of the central through hole, and the lithium supplementation section at least partially extends out of the central through hole and is configured for releasing lithium ions into the first hollow member; and the sealing plug is disposed in the central through hole and is configured for hermetically isolating the lithium rod from the external environment. By using the above structure, after the lithium rod is in contact with the conductive end cap via the conductive section, electrical conduction with the first hollow member is realized, that is, electrical conduction with at least one shell of the plurality of battery cells is realized, so that the lithium supplementation section may release lithium ions into the electrolyte sharing system; and meanwhile, the sealing plug is disposed in the conductive end cap to isolate the lithium rod from the external environment.

In an embodiment, since the lithium metal is very active, in order to prevent the lithium rod from reacting with the air before being disposed in the electrolyte sharing system, it is also necessary to ensure that the lithium rod may release lithium ions after being disposed in the electrolyte sharing system, and the lithium supplementation section in the lithium source provided in the present invention may use the following two embodiments:
The lithium supplementation section in the first embodiment is a metal lithium or a lithium oxide provided with a protective layer; the protective layer is dissolved under the soaking of the electrolyte, and when the protective layer is dissolved, the metal lithium or the lithium oxide is in contact with the electrolyte in the electrolyte sharing system. The protective layer wraps the lithium metal or the lithium oxide to avoid a contact between the lithium metal or the lithium oxide and the air when the lithium rod is in the external environment, and meanwhile, when the lithium supplementation section is in the electrolyte sharing system, the protective layer is dissolved under the soaking of the electrolyte, and after the protective layer is dissolved, the metal lithium or the lithium oxide is in contact with the electrolyte in the electrolyte sharing system, so that lithium ions may be released to supplement lithium to the high-capacity battery. The protective layer is made from polymethyl methacrylate.

The lithium supplementation section in the second embodiment is a fourth hollow member insoluble in the electrolyte, an inner wall of the fourth hollow member is provided with a metal lithium layer or a lithium oxide layer, and a port of the end of the fourth hollow member that is away from the conductive section is provided with a sealing film soluble in the electrolyte. Due to the existence of the conductive section on one end and the existence of the sealing film on the other end, the lithium supplementation section in this form may also avoid the contact of the metal lithium layer or the lithium oxide layer with the air when the lithium rod is in the external environment, and meanwhile, after the lithium supplementation section is located in the electrolyte sharing system, the sealing film is dissolved under the action of the electrolyte, and the metal lithium layer or the lithium oxide layer is in contact with the electrolyte in the electrolyte sharing system, so that lithium ions may be released to supplement lithium to the high-capacity battery.

The repair apparatus is an adsorption mechanism, which is disposed in the electrolyte sharing system and is configured for adsorbing impurities in the electrolyte. By disposing the adsorption mechanism in the electrolyte sharing system, the adsorption mechanism may absorb moisture introduced into the electrolyte during a working process of manufacturing the high-capacity battery, thereby avoiding the problem that the performance of the battery is affected due to the generation of HF, meanwhile reducing the gas production amount in a formation process, and reducing the swelling degree of the battery, thus ensuring the performance and the cycle life of the high-capacity battery.

In an embodiment, according to the structural features of the first hollow member, the adsorption apparatus may be hermetically disposed on one end of the first hollow member, the adsorption mechanism is an adsorption mandrel, the adsorption mandrel is at least partially located in the first hollow member, and meanwhile, a liquid injection and replacement mechanism is disposed on the other end of the first hollow member. Therefore, the electrolyte sharing system of the high-capacity battery not only has an adsorption function for impurity water, but also has a liquid injection and replacement function for the electrolyte sharing system. The liquid injection and replacement mechanism may also be replaced with an explosion venting valve, and when thermal runaway occurs in a certain battery cell, the first hollow member may serve as an explosion venting channel of the high-capacity battery.

In an embodiment, the adsorption apparatus itself may have a liquid injection and replacement function, and the specific disposition mode is that one end of the first hollow member is provided with an explosion venting valve, the other end thereof is provided with a sealing end cap, and a positioning blind hole is formed in the end cap; a support ring is disposed in the first hollow member; the adsorption mechanism is a double-layer adsorption tube, one end of the double-layer adsorption tube is inserted into the blind hole of the sealing end cap, a part of the double-layer adsorption tube penetrates through the support ring, and the other end thereof is open; an inner-layer tube of the double-layer adsorption tube serves as a liquid injection channel, and an outer tube serves as an adsorption layer; and a rubber plug is disposed on the end of the double-layer adsorption tube that is located in the positioning blind hole for inserting a liquid injection needle tube. At work, the sealing end cap may be disassembled, then electrolyte is injected into the first hollow member by the liquid injection needle tube from the inner-layer tube of the double-layer adsorption tube, and the outer-layer tube is exposed from the electrolyte as the adsorption layer, so that the moisture in the electrolyte may be adsorbed.

In an embodiment, the material of the adsorption mandrel is α-Al₂O₃. Impurity gases generated during the normal work of the battery may be adsorbed.

In an embodiment, the material of the adsorption mandrel is a lithiated molecular sieve, compared with a common molecular sieve, the lithiated molecular sieve not only basically maintains the excellent adsorption performance of the common molecular sieve, but also greatly reduces the introduction of impurity ions Na+ in the electrolyte system, and thus is one of the most effective and most economical physical methods among methods for removing trace water from lithium ion batteries.

In an embodiment, the adsorption structure is a resin package disposed in the hollow member, and the resin package includes a core layer and a cladding layer wrapped on the core layer; and the core layer is resin containing a polar amide group, and the cladding layer is a filter screen which the electrolyte may freely enter and exit. Such resin has high polarity, and may absorb micromolecular impurities such as H₂O, PF₅ and HF in the electrolyte, purify the electrolyte, and improve the cycle performance of the high-capacity battery.

The repair apparatus includes a uniform mixing mechanism; and the uniform mixing mechanism is configured for uniformly mixing the electrolyte in the electrolyte sharing system, thereby ensuring the distribution uniformity of lithium ions, thereby improving the performance of the high-capacity battery and prolonging the cycle life of the high-capacity battery.

In an embodiment, the uniform mixing mechanism has a plurality of implementation forms, and the present invention provides the following two embodiments:
The uniform mixing mechanism in the first embodiment is an ultrasonic vibration rod; and when the electrolyte sharing system uses the first hollow member, a liquid injection and replacement mechanism may be installed on one end of the first hollow member, and the ultrasonic vibration rod is installed inside the first hollow member from the other end of the first hollow member. After the ultrasonic vibration rod is powered on, ultrasonic waves are emitted into the electrolyte, so that the electrolyte in the electrolyte sharing system starts to flow under the action of a vibration force, thereby achieving the purpose of uniformly mixing the electrolyte.

The uniform mixing mechanism in the second embodiment is an electric stirrer; and the specific structure of the electric stirrer includes a motor, a stirring shaft, and spiral blades disposed on the stirring shaft.

When the electrolyte sharing system uses the first hollow member, a liquid injection and replacement mechanism may be installed on one end of the first hollow member, the motor of the electric stirrer is installed outside the other end of the first hollow member, and the stirring shaft is located in the first hollow member. The electric stirrer stirs the electrolyte in the electrolyte sharing system, so that the electrolyte starts to flow, thereby achieving the purpose of uniformly mixing the electrolyte.

In an embodiment, in the embodiments of the above two uniform mixing mechanisms, an explosion venting valve may be installed on the end of the first hollow member where the liquid injection and replacement mechanism is installed. When thermal runaway occurs in a certain battery cell in the high-capacity battery, the thermal runaway flue gas may be released by the first hollow member and the explosion venting valve, thereby ensuring the safety of the high-capacity battery.

The repair apparatus is a third electrode, and the third electrode is made from a conductive material insoluble in the electrolyte; a part of the third electrode is disposed in the electrolyte sharing system and is in contact with the electrolyte, and a potential difference is generated between the third electrode and a positive electrode or a negative electrode of at least one battery cell, so that lithium ions of the high-capacity battery are supplemented, and thus the repair of the high-capacity battery is completed. After the electrolyte is injected into the electrolyte sharing system of the high-capacity battery for the first time, the potential difference is generated between the third electrode and the positive electrode or the negative electrode of the at least one battery cell, and free lithium ions in the electrolyte in the electrolyte sharing system are intercalated into the plurality of battery cells, thereby compensating for lithium ions consumed when a solid electrolyte interphase (SEI) film is formed on the surface of the negative electrode of each of the plurality of battery cells. Similarly, after the high-capacity battery runs for a period of time, capacity attenuation occurs, at this time, electrolyte may be injected into the electrolyte sharing system of the high-capacity battery again, so that a potential difference is generated between the third electrode and the positive electrode or the negative electrode of the at least one battery cell again, and the free lithium ions in the electrolyte in the electrolyte sharing system are supplemented into the plurality of battery cells, thereby implementing lithium supplementation repair of the high-capacity battery; and by repeating this process, the capacity attenuation speed of the high-capacity battery may be effectively delayed, thereby prolonging the service life of cyclic charging and discharging of the high-capacity battery.

In an embodiment, in order to ensure a sufficient potential difference between the third electrode and the positive electrode or the negative electrode of the battery cell, so as to enable the lithium ions of the electrolyte in the electrolyte sharing system to be smoothly supplemented into the plurality of battery cells, in the present invention, a voltage source is disposed between the third electrode and the positive electrode or the negative electrode of the at least one battery cell.

In an embodiment, many materials are soluble in the electrolyte and have conductivity, for example, gold, silver, platinum, etc. In the present invention, a silver rod is selected as the third electrode under the consideration of cost.

In an embodiment, since electrolyte or a lithium supplementation additive needs to be injected into the electrolyte sharing system to implement the lithium supplementation of the third electrode in the present invention, according to the structural features of the first hollow member in the present invention, the third electrode and the liquid injection and replacement mechanism may be both disposed on the first hollow member and are respectively disposed on two ends of the first hollow member, and the specific structural form is that one end of the first hollow member is hermetically connected with the third electrode, and a part of the third electrode is located in the first hollow member; and the other end of the first hollow member is provided with the liquid injection and replacement mechanism.

In an embodiment, in addition to disposition mode in which the third electrode and the liquid injection and replacement mechanism are independently installed on the first hollow member, in the present embodiment, the third electrode itself may also be set as the liquid injection and replacement mechanism, and the specific structural form thereof is as follows: the third electrode includes a fifth hollow member, a sealing end cap and a rubber stopper; the fifth hollow member is hermetically connected with a port of one end of the first hollow member, a part of the fifth hollow member is located in the first hollow member, the part is provided with at least one through hole for liquid injection and replacement, and the other part of the fifth hollow member is located outside the first hollow member; the sealing end cap is disposed a port of the other part of the fifth hollow member and is configured for isolating the fifth hollow member from the outside; the rubber stopper is fixedly disposed in the fifth hollow member, is close to one side of the sealing end cap, and is configured for inserting a liquid injection needle tube; and the other end of the first hollow member is provided with an explosion venting valve. When it is necessary to perform a liquid injection and replacement operation, the sealing end cap needs to be disassembled at first, then the liquid injection needle tube is inserted into the rubber stopper, and finally electrolyte is started to be injected into or extracted from the first hollow member by using the liquid injection needle tube; and after the liquid injection and replacement are completed, the sealing end cap is reinstalled on the first hollow member.

Meanwhile, since the explosion venting valve is additionally disposed in the specific structural form, the high-capacity battery has the following two features at the same time: 1, the third electrode may complete the liquid injection and replacement function for the high-capacity battery and perform lithium supplementation repair on the high-capacity battery; and 2, explosion venting release is performed on the thermal runaway flue gas by the first hollow member and the explosion venting valve.

In an embodiment, in order to improve the liquid injection and replacement effect of the second liquid injection and replacement mechanism, the through holes are formed in a side wall of the other part of the fifth hollow member, the number of the through holes is the same as the number of the plurality of battery cells, and meanwhile, the positions of the through holes correspond to the positions of the plurality of battery cells.

In the present invention, the high-capacity battery of the above structure is optimized again, on the basis that the electrolyte regions of the plurality of battery cells communicate with each other to form the electrolyte sharing system, an electrolyte chamber is added; and the electrolyte chamber is connected with the electrolyte sharing system and is configured for injecting electrolyte into the electrolyte sharing system. The electrolyte chamber is connected with the electrolyte sharing system, thereby further improving the performance of the high-capacity battery, such as the multiplying power, the service life and the cycle, and avoids performance problems caused by the consumption of the electrolyte of the high-capacity battery.

On the basis of the above electrolyte chamber, a repair apparatus may also be disposed to improve the performance of the high-capacity battery and prolong the service life of the high-capacity battery.

The repair apparatus includes a control valve and/or an active liquid supplementation apparatus disposed between an inner cavity of the electrolyte chamber and an inner cavity of the electrolyte sharing system, and the active liquid supplementation apparatus is configured for actively injecting the electrolyte in the electrolyte chamber into the electrolyte sharing system.

In an embodiment, the electrolyte sharing system includes a first hollow member, an inner cavity of the first hollow member communicates with inner cavities of a plurality of battery cells, the electrolyte chamber is filled with electrolyte, and the electrolyte in the electrolyte chamber communicates with the electrolyte in the electrolyte sharing system. The electrolyte may be preset in the electrolyte chamber, and electrolyte may be continuously supplemented to the electrolyte sharing system, so that the electrolyte in the electrolyte sharing system may always meet the cycle performance of the high-capacity battery.

In an embodiment, since the electrolyte has certain corrosivity, the sealing performance of the entire structure needs to be guaranteed during liquid supplementation or liquid replacement. On this basis, one end of the first hollow member extends into the electrolyte chamber, the control valve and the active liquid supplementation apparatus are disposed on the first hollow member in the electrolyte chamber. By disposing the control valve and the active liquid supplementation apparatus in the electrolyte chamber, even if leakage occurs at the joint, the leaked electrolyte may flow into the electrolyte chamber and thus generate no influence on an external device or environment.

In an embodiment, in order to monitor the injected electrolyte in time, a pressure measurement apparatus may be disposed on the first hollow member, so as to avoid the situation in which potential safety hazards are generated by the generation of a high pressure in the plurality of battery cells due to excessive injection of the electrolyte.

The above structure may perform liquid supplementation and liquid injection on the electrolyte sharing system to improve the performance of the battery, however, after the electrolyte is configured for a long time, substances therein may not meet the performance of the high-capacity battery. On this basis, the above high-capacity battery further includes a liquid injection mechanism, the liquid injection mechanism is connected with the electrolyte chamber and is configured for adding electrolyte into the electrolyte chamber, the liquid injection mechanism may replace or add the electrolyte in the high-capacity battery, and by discharging old electrolyte and injecting new electrolyte, the performance of the high-capacity battery is further improved. The liquid injection mechanism has a variety of forms as long as use requirements thereof may be met, and the present invention provides the following two structures: the specific structure of the first liquid injection mechanism is that the liquid injection mechanism is a liquid injection valve and a liquid injection pump, which are disposed on the electrolyte chamber. The specific structure of the second liquid injection mechanism is that an opening is formed in a side wall of the electrolyte chamber, the liquid injection mechanism is a sealing rubber pad disposed on the electrolyte chamber for sealing the opening, and the sealing rubber pad may be configured for inserting a liquid injection needle tube. A drain valve is disposed at the bottom of the electrolyte chamber, and the structure has a simple structure and a lower structural cost relative to the first liquid injection mechanism structure, and meanwhile, since the liquid injection mechanism has no electric device, the safety is high.

When the repair apparatus includes a lithium source, the electrolyte in the electrolyte chamber communicates with the electrolyte in the electrolyte sharing system; and the lithium source is disposed in the electrolyte chamber and is at least partially soaked in the electrolyte; and the lithium source is conducted with the positive electrode of at least one battery cell, so that lithium ions in the lithium source are released in the electrolyte. In the present invention, after the high-capacity battery is powered on, the lithium source is electrically conducted with the positive electrode of the at least one battery cell, and the lithium ions released from the lithium source are intercalated into the negative electrode material of each of the plurality of battery cells, thereby compensating for lithium ions consumed when the solid electrolyte interphase (SEI) film is formed on the surface of the negative electrode of each of the plurality of battery cells, and improving the own capacity upper limit value of each of the plurality of battery cells. Based on the lithium supplementation mechanism of the lithium source, with the continuous work of the high-capacity battery, the lithium source may continuously perform lithium supplementation repair on the high-capacity battery, thereby greatly reducing the capacity attenuation speed of the high-capacity battery due to the loss of the lithium ions in the electrolyte, and prolonging the service life of cyclic charging and discharging of the high-capacity battery.

In an embodiment, in order to facilitate the manufacturing of the high-capacity battery, the electrolyte sharing system includes a first hollow member, and an inner cavity of the first hollow member communicates with the electrolyte chamber and the inner cavities of the plurality of battery cells. After the high-capacity battery is powered on, since each of the at least one shell of the plurality of battery cells itself is electrically conducted with the positive electrode, the electrolyte chamber and the first hollow member may be electrically connected with the at least one shell of the plurality of battery cells, and the at least one lithium source is electrically connected with the side wall of the electrolyte chamber, so that the at least one lithium source is conducted with the positive electrode of at least one battery cell. In this way, the installation and the structure of the at least one lithium source are simpler.

In an embodiment, the at least one lithium source is a lithium metal or a lithium oxide. The part of the at least one lithium source soaked in the electrolyte is provided with a protective layer, the protective layer is configured for isolating the at least one lithium source from the electrolyte in the electrolyte chamber, the protective layer is dissolved under the soaking of the electrolyte, and after the protective layer is dissolved, the metal lithium or the lithium oxide is in contact with the electrolyte in the electrolyte chamber. The protective layer protects the at least one lithium source before the same is installed in the high-capacity battery, so as to avoid pollution or failure of the at least one lithium source in the early stage of installation.

In an embodiment, the at least one lithium source is of a hollow structure, at least one end of the hollow structure is provided with a sealing portion, the hollow structure enables the at least one lithium source to meet the requirement of light weight, and meanwhile, the sealing portion is provided with a liquid injection mechanism, so that the at least one lithium source not only has a lithium supplementation function, but also has a liquid injection and replacement function.

In an embodiment, in order to facilitate the replacement or maintenance of the at least one lithium source, the at least one lithium source is detachably disposed on the side wall of the electrolyte chamber, specifically, the at least one lithium source may be hermetically disposed on the side wall of the electrolyte chamber via threads and may also be hermetically disposed on the side wall of the electrolyte chamber by clamping, and the sealing may be implemented by a sealing gasket or a sealant, etc.

In an embodiment, a circulation pipe and a circulation pump may also be added in the electrolyte chamber and the electrolyte sharing system, one end of the circulation pipe communicates with the electrolyte sharing system, and the other end thereof communicates with the electrolyte chamber, so that the circulation pipe, the plurality of battery cells, the electrolyte chamber and the electrolyte in the electrolyte sharing system form a liquid circulation channel, and the circulation pump provides power for the circulation of the electrolyte in the circulation pipe, the plurality of battery cells, the electrolyte chamber and the electrolyte sharing system. At this time, electrolyte circulation may be performed while lithium supplementation is performed on the electrolyte, so that the electrolyte that has been subjected to the lithium supplementation is filled in the plurality of battery cells of the entire high-capacity battery by means of circulation, thereby further improving the performance of the high-capacity battery.

The repair apparatus includes an adsorption mechanism; and the adsorption mechanism is configured for adsorbing and treating impurities in the electrolyte. Therefore, the performance of the high-capacity battery is improved, and the cycle life of the high-capacity battery is prolonged.

In an embodiment, the electrolyte in the electrolyte chamber communicates with the electrolyte in the electrolyte sharing system. Since the electrolyte in the electrolyte chamber communicates with the electrolyte in the electrolyte sharing system, the adsorption mechanism disposed in the electrolyte chamber may perform continuous adsorption treatment on the electrolyte that communicates with each other, so that the electrolyte that has been subjected to the adsorption treatment meets the requirement of high performance of the high-capacity battery.

In an embodiment, in order to facilitate the manufacturing of the high-capacity battery, the electrolyte sharing system includes a first hollow member, an inner cavity of the first hollow member communicates with the inner cavities of the plurality of battery cells, one end of the first hollow member extends into the electrolyte chamber and is provided with a control valve and a liquid extraction pump, and the control valve is configured for separating the electrolyte in the first hollow member from the electrolyte in the electrolyte chamber. After the control valve and the liquid extraction pump are disposed, the electrolyte chamber and the electrolyte sharing system are two independent cavities, the electrolyte may be not preset in the electrolyte chamber, when it is necessary to adsorb the electrolyte, the electrolyte in the first hollow member may be extracted into the electrolyte chamber, the adsorption treatment is performed by the adsorption mechanism disposed in the electrolyte chamber, and then the electrolyte that has been subjected to the adsorption treatment is returned to the electrolyte sharing system. In this way, the adsorption treatment may be regularly performed on the electrolyte.

In an embodiment, the adsorption mechanism may use apparatuses in a plurality of structural forms as long as meeting an adsorption requirement, for example, the adsorption mechanism is an adsorption rod or an adsorption layer disposed on the inner wall of the electrolyte chamber, and the adsorption rod and the adsorption layer have simple structures and may be reliably and conveniently disposed on the inner wall of the electrolyte chamber.

In an embodiment, an outer side of the adsorption mechanism is provided with a protective layer soluble in the electrolyte, and the protective layer protects the adsorption mechanism before being installed on the high-capacity battery, so as to avoid pollution or failure of the adsorption mechanism in the early stage of installation.

In an embodiment, the adsorption mechanism is of a hollow structure, at least one end of the hollow structure is provided with a sealing portion, the hollow structure enables the adsorption mechanism to meet the requirement of light weight, and meanwhile, the sealing portion is provided with a liquid injection mechanism, so that the adsorption mechanism not only has an adsorption function for impurities, but also has a liquid injection and replacement function.

In an embodiment, in order to facilitate the replacement or maintenance of the adsorption mechanism, the adsorption mechanism is detachably disposed on the side wall of the electrolyte chamber, specifically, the adsorption mechanism may be hermetically disposed on the side wall of the electrolyte chamber via threads and may also be hermetically disposed on the side wall of the electrolyte chamber by clamping, and the sealing may be implemented by a sealing gasket or a sealant, etc.

In an embodiment, a circulation pipe and a circulation pump may also be added in the electrolyte chamber and the electrolyte sharing system, one end of the circulation pipe communicates with the inner cavities of the plurality of battery cells, and the other end thereof communicates with the electrolyte chamber, so that the circulation pipe, the plurality of battery cells, the electrolyte chamber and the electrolyte in the electrolyte sharing system form a liquid circulation channel, and the circulation pump provides power for the circulation of the electrolyte in the circulation pipe, the plurality of battery cells, the electrolyte chamber and the electrolyte sharing system. At this time, electrolyte circulation may be performed while adsorption treatment is performed on the electrolyte, so that the electrolyte that has been subjected to the adsorption treatment is filled in the plurality of battery cells of the entire high-capacity battery. The adsorption mechanism may be installed in the electrolyte chamber or the circulation pipe, as long as the adsorption treatment may be performed on the electrolyte.

In an embodiment, the adsorption apparatus is an adsorption rod or an adsorption layer, and the material of the adsorption rod or the adsorption layer is a lithiated molecular sieve. Compared with a common molecular sieve, the lithiated molecular sieve not only basically maintains the excellent adsorption performance of the common molecular sieve, but may also greatly reduce the introduction of impurity ions Na+ in the electrolyte system, and thus is one of the most effective and most economical physical methods among methods for removing trace water from lithium ion batteries. The material of the adsorption rod or the adsorption layer may also be α-Al₂O₃. Impurity gases generated during the normal work of the battery may be adsorbed.

In an embodiment, the adsorption apparatus is a resin package, and the resin package includes a core layer and a cladding layer wrapped on the core layer; and the core layer is resin containing a polar amide group, and the cladding layer is a filter screen which the electrolyte may freely enter and exit. Such resin has high polarity, and may absorb micromolecular impurities such as H₂O, PF₅ and HF in the electrolyte, purify the electrolyte, and improve the cycle performance of the high-capacity battery.

When the repair apparatus includes a uniform mixing mechanism, the uniform mixing mechanism is configured for uniformly mixing the electrolyte. The uniform mixing mechanism in the high-capacity battery in the present invention may uniformly mix the electrolyte of the plurality of battery cells, so that the electrolyte of the plurality of battery cells is in the same state, thereby achieving an ideal state in which the electrolyte of the plurality of battery cells is shared and the working states are substantially the same, and thus improving the performance of the high-capacity battery and prolonging the cycle life of the high-capacity battery.

In an embodiment, the electrolyte chamber is filled with electrolyte, the electrolyte in the electrolyte chamber communicates with an electrolyte in the electrolyte sharing system, and the uniform mixing mechanism is disposed inside the electrolyte chamber or outside the electrolyte chamber. In this way, since the electrolyte in the electrolyte chamber communicates with the electrolyte in the electrolyte sharing system, the uniform mixing mechanism may continuously and uniformly mix the electrolyte that communicates with each other, so that the uniformly mixed electrolyte meets the requirement of high performance of the high-capacity battery.

In an embodiment, in order to facilitate the manufacturing of the high-capacity battery, the electrolyte sharing system includes a first hollow member, an inner cavity of the first hollow member communicates with the inner cavities of the plurality of battery cells, one end of the first hollow member extends into the electrolyte chamber and is provided with a control valve and a liquid extraction pump, and the liquid extraction pump is configured for extracting the electrolyte in the first hollow member into the electrolyte chamber, the control valve is configured for separating the electrolyte in the first hollow member from the electrolyte in the electrolyte chamber, and the uniform mixing mechanism is disposed inside the electrolyte chamber or outside the electrolyte chamber. In the structure, after the control valve and the liquid extraction pump are disposed, the electrolyte chamber and the electrolyte sharing system are two independent cavities, the electrolyte may be not preset in the electrolyte chamber, when it is necessary to uniformly mix the electrolyte, the electrolyte in the first hollow member may be extracted into the electrolyte chamber, the electrolyte is uniformly mixed in the electrolyte chamber, and then the uniformly mixed electrolyte is returned to the electrolyte sharing system. In this way, the electrolyte may be uniformly mixed regularly, and it is also possible to reduce energy consumption when a part of the uniform mixing mechanism is used.

In an embodiment, the uniform mixing mechanism is a stirring apparatus, the stirring apparatus is disposed in the electrolyte chamber, or the uniform mixing mechanism is a vibration apparatus, and the vibration apparatus is disposed in the electrolyte chamber or on an outer wall of the electrolyte chamber. The stirring apparatus may be a spiral blade stirrer, and the stirring apparatus may be an ultrasonic vibrator, which may also uniformly mix the electrolyte.

The uniform mixing mechanism is implemented in another external circulation mode, and specifically includes an external circulation pipe and an external circulation pump, one end of the external circulation pipe communicates with the inner cavity of the electrolyte sharing system, the other end thereof is connected with the electrolyte chamber, and the external circulation pump is disposed on the external circulation pipe to provide power for the circulation of the electrolyte in the external circulation pipe, the plurality of battery cells, the electrolyte chamber and the electrolyte sharing system. When the electrolyte is uniformly mixed in a liquid external circulation mode, the mixing effect is better, and the electrolyte in the entire high-capacity battery may be driven to flow, so that the electrolyte in the entire high-capacity battery is uniformly mixed thoroughly.

In an embodiment, the uniform mixing mechanism in the external circulation mode further includes a stirring apparatus or a vibration apparatus, the stirring apparatus is disposed in the electrolyte chamber, the vibration apparatus is disposed in the electrolyte chamber or on the outer wall of the electrolyte chamber, and the stirring apparatus or the vibration apparatus forms a dual mixing function with the external circulation pipe and the external circulation pump, so that the consistency of the electrolyte in the entire high-capacity battery is better.

The uniform mixing mechanism is implemented in another internal circulation mode, the electrolyte sharing system includes a first hollow member, an inner cavity of the first hollow member communicates with the inner cavity of the electrolyte chamber and the inner cavities of the plurality of battery cells, the uniform mixing mechanism includes an internal circulation pipe and an internal circulation pump, the internal circulation pipe is disposed in the first hollow member, one end of the internal circulation pipe extends into the electrolyte chamber, and the internal circulation pump is disposed on the circulation pipe in the electrolyte chamber. When the electrolyte is uniformly mixed by internal circulation, the effect is better, and since the internal circulation pipe and the internal circulation pump are installed in a built-in mode, there is no leakage point during the circulation of the electrolyte, and the safety of the entire high-capacity battery is better.

In an embodiment, the uniform mixing mechanism further includes a stirring apparatus or a vibration apparatus, the stirring apparatus is disposed in the electrolyte chamber, the vibration apparatus is disposed in the electrolyte chamber or on the outer wall of the electrolyte chamber, and the stirring apparatus or the vibration apparatus forms a dual mixing function with the internal circulation pipe and the internal circulation pump, so that the consistency of the electrolyte in the entire high-capacity battery is better.

In an embodiment, the high-capacity battery further includes a liquid injection mechanism, and the liquid injection mechanism is disposed on the electrolyte sharing system or the electrolyte chamber. The liquid injection mechanism has the following advantages: 1, when the high-capacity battery is manufactured, electrolyte may be injected into the high-capacity battery to form the electrolyte sharing system; 2, the electrolyte or lithium supplementation additive may be added into the high-capacity battery again after the high-capacity battery is formed, so that lithium ions in the electrolyte consumed by an SEI film during formation may be compensated, thereby solving the problem of the SEI film consuming irreversible lithium to a certain extent; and 3, after the high-capacity battery runs for a certain number of cycles, the electrolyte of the electrolyte sharing system may be supplemented and replaced regularly, thereby further improving the cycle performance of the high-capacity battery.

The repair apparatus includes a third electrode; the electrolyte in the electrolyte chamber communicates with the electrolyte in the electrolyte sharing system; the third electrode is disposed in the electrolyte chamber, and the third electrode is made from a conductive material insoluble in the electrolyte; the third electrode is at least partially soaked in the electrolyte of the electrolyte chamber, and is configured for forming a potential difference with a positive electrode or a negative electrode of at least one battery cell, so that lithium ions of the high-capacity battery are supplemented, and thus the repair of the high-capacity battery is completed. By generating the potential difference between the third electrode and the positive electrode or the negative electrode of the battery cell, the present invention has the following advantages: 1, when the high-capacity battery is manufactured, lithium ions in the electrolyte injected into the electrolyte chamber are supplemented to the negative electrode of each of the plurality of battery cells, thereby compensating for lithium ions consumed when the plurality of battery cells form the SEI film to a certain extent, improving the performance of the high-capacity battery and prolonging the cycle life of the high-capacity battery; and 2, after the high-capacity battery runs for a certain number of cycles, the electrolyte or lithium supplementation additive may be supplemented regularly to generate a potential difference between the third electrode and the positive electrode or the negative electrode of the battery cell again, thereby realizing lithium supplementation of the high-capacity battery and completing the repair work of the high-capacity battery, thus further improving the performance of the high-capacity battery and prolonging the cycle life of the high-capacity battery.

In an embodiment, in the present invention, the third electrode is disposed on the electrolyte chamber and thus has a plurality of installation modes, but since the third electrode is at least electrically connected with the positive electrode or the negative electrode of one battery cell, the following installation mode is preferentially considered: one end of the third electrode is immersed in the electrolyte of the electrolyte chamber, and the other end thereof extends out of the electrolyte chamber to be electrically connected with the positive electrode or the negative electrode of the battery cell.

In an embodiment, in order to ensure a sufficient potential difference between the third electrode and the positive electrode or the negative electrode of the battery cell, so as to enable the lithium ions of the electrolyte to be smoothly supplemented into each of the plurality of battery cells, in the present invention, a voltage source is disposed between the third electrode and the positive electrode or the negative electrode of the at least one battery cell.

In an embodiment, a handover switch is further disposed between the third electrode and the positive or negative electrode of the battery cell; and the handover switch controls the third electrode to be electrically conducted with the positive electrode of the battery cell or controls the third electrode to be electrically conducted with the negative electrode of the battery cell. In the present invention, the potential difference is generated between the third electrode and the positive electrode or the negative electrode of the battery cell via the handover switch. In this way, the material selection of the third electrode has diversity.

In an embodiment, many materials are soluble in the electrolyte and have conductivity, for example, gold, silver, platinum, etc. In the present invention, a silver rod is selected as the third electrode under the consideration of cost.

In an embodiment, the high-capacity battery in the present invention further includes a liquid injection mechanism, and the liquid injection mechanism is disposed on the third electrode or the electrolyte chamber. When electrolyte is injected for the first time by the liquid injection and replacement mechanism, the plurality of battery cells of the high-capacity battery may be located in the same electrolyte system, electrolyte is subsequently injected by the liquid injection and replacement mechanism, or the electrolyte in the high-capacity battery may be replaced to further repair the capacity of the high-capacity battery and compensate for the consumption of the electrolyte in the electrolyte sharing system.

In an embodiment, the third electrode is of a hollow structure, the hollow structure enables the third electrode to meet the requirement of light weight. One end of the hollow structure is provided with a sealing portion, and the liquid injection mechanism is connected with the sealing portion, so that the third electrode not only has a lithium supplementation function, but also has a liquid injection and replacement function.

In an embodiment, in order to facilitate the replacement or maintenance of the third electrode, the third electrode is detachably disposed on the side wall of the electrolyte chamber, specifically, the third electrode may be hermetically disposed on the side wall of the electrolyte chamber via threads and may also be hermetically disposed on the side wall of the electrolyte chamber by clamping, and the sealing may be implemented by a sealing gasket or a sealant, etc.

In an embodiment, a circulation pipe and a circulation pump may also be added in the electrolyte chamber and the electrolyte sharing system, one end of the circulation pipe communicates with the electrolyte sharing system, and the other end thereof communicates with the electrolyte chamber, so that the circulation pipe, the plurality of battery cells, the electrolyte chamber and the electrolyte in the electrolyte sharing system form a liquid circulation channel, and the circulation pump provides power for the circulation of the electrolyte in the circulation pipe, the plurality of battery cells, the electrolyte chamber and the electrolyte sharing system. At this time, electrolyte circulation may be performed while lithium supplementation is performed on the electrolyte, so that the electrolyte that has been subjected to the lithium supplementation is filled in the plurality of battery cells of the entire high-capacity battery by means of circulation, thereby further improving the performance of the high-capacity battery.

On the basis of the above structures of the high-capacity battery, the high-capacity battery is further optimized:
Since the electrolyte sharing system is added, when the plurality of battery cells are grouped, a re-unpacking step is necessarily increased compared with a high-capacity battery of an existing non-shared system, this is because the electrolyte in the plurality of battery cells may communicate with each other to realize sharing only after the plurality of battery cells are unpacked and the unpacking positions are communicated; due to the increase of an electrolyte sharing link, regardless of whether new electrolyte is added in the link (one way is to enable the original electrolyte in the plurality of battery cells to flow into the sharing system to realize communication, and the other way is to add new electrolyte into the electrolyte sharing system to realize communication), the high-capacity battery in which the electrolyte is shared will generate more gases in use (even if unpacking sharing is performed in a vacuum environment, the intrusion of ambient gases is caused because there is no absolute vacuum environment; and in addition, in order to improve the performance of the high-capacity battery, formation may be performed again after the electrolyte is shared, and the new formation link may also lead to the generation of gases), and if these gases may not be discharged in time, the comprehensive performance of the high-capacity battery may be reduced. Therefore, in the present invention, in addition to adding the electrolyte sharing system and the repair apparatus, an exhaust system is further added, thereby facilitating the exhaust of the gases generated after the electrolyte is shared, and effectively solving problems possibly generated by the sharing link.

By additionally disposing the exhaust system, the gas may be discharged in use, thereby avoiding the generation of a series of problems affecting the comprehensive performance of the high-capacity battery, for example, the swelling of the shell of the battery cell, due to the fact that the gas may not be discharged. When thermal runaway occurs in the plurality of battery cells, the thermal runaway flue gas is discharged in time by using the exhaust system, thereby avoiding the situation in which the thermal runaway flue gas needs to overcome the dual pressures of the electrolyte in the sharing system and the explosion venting valve when there is only the electrolyte sharing system, and improving the safety of the high-capacity battery when a safety accident occurs; and moreover, the thermal runaway flue gas is discharged by the exhaust system, thereby generating no excessive influence on the other battery cells in the sharing system, and thus the comprehensive performance is better than that of the existing high-capacity battery.

The high-capacity battery includes a plurality of battery cells connected in parallel, and an inner cavity of each of the plurality of battery cells includes a gas region and an electrolyte region; the electrolyte regions of the plurality of battery cells communicate with each other to form an electrolyte sharing system; the gas regions of the plurality of battery cells communicate with each other via a second hollow member, and the second hollow member is configured for providing a path to discharge the gases in the plurality of battery cells, wherein the gas regions of the plurality of battery cells communicate with each other via the second hollow member, so that gas pressures in the plurality of battery cells are in a balance system, and the plurality of battery cells are always under the same gas pressure, thereby reducing the differences among the plurality of battery cells caused by inconsistent gas pressures in the plurality of battery cells. The purpose of this design is to form the electrolyte sharing system and a gas balance discharge system inside the high-capacity battery, so as to realize the dual balance of the electrolyte and the gas pressures among the plurality of battery cells and to prolong the cycle service life of the high-capacity battery.

For the battery cell, for example, an existing commercially available square-shell battery cell, the liquid level of the internal electrolyte is generally about 70% of the height of a square shell. Therefore, in the present invention, the gas region is defined as a region above the liquid level of the electrolyte of the battery cell, the region is mainly configured for accommodating gases generated during the formation or charging and discharging circulation of the battery, and in general, the battery swells due to the generation of gases; and for a battery fully filled with electrolyte, the second hollow member may be directly regarded as the gas region, and the second hollow member mainly functions to discharge the gases when it is necessary to discharge the gases generated inside the high-capacity battery.

In an embodiment, a pressure relief component is disposed on the second hollow member, and the pressure relief component is configured for discharging the gas in any battery cell. Since the second hollow member is connected with the gas region of the battery cell, a high-temperature gas is directly discharged from the pressure relief component without affecting the electrolyte. By additionally disposing the pressure relief component, when thermal runaway occurs in the battery cell, the high-pressure gas may be discharged in time by using an exhaust channel, thereby improving the safety of the high-capacity battery when a safety accident occurs.

In an embodiment, the pressure relief component includes a pressure relief valve, and the pressure relief valve is disposed on one end or two ends of the second hollow member. The pressure relief valve may be opened manually or automatically, and the pressure relief valve is opened regularly, so that the gas in the gas region in each of the plurality of battery cells may be discharged after passing through the second hollow member and the pressure relief valve. Meanwhile, the pressure relief component further includes an explosion venting film, the pressure relief valve is disposed on one end of the second hollow member, and the explosion venting film is disposed on the other end of the second hollow member. The explosion venting film is configured for enabling the thermal runaway flue gas to break through the explosion venting film to be discharged from the second hollow member when thermal runaway occurs in any battery cell; and the explosion venting film, as a preferred structure selection, is mainly configured for discharging the thermal runaway flue gas after the same is generated.

In an embodiment, in order to facilitate the manufacturing and installation of the high-capacity battery, the second hollow member includes third hollow units that are disposed on the upper cover plates of the plurality of battery cells and communicate with the gas regions, and a plurality of fourth hollow units configured for hermetically connecting the third hollow units. The second hollow member has relatively more structural forms, but it should be at least guaranteed that top regions of the plurality of battery cells are communicated and sealed, for example, an elongated tube having the same number of holes as the plurality of battery cells may be provided, and the elongated tube communicates with the gas regions of the plurality of battery cells via hose pipes or welding; and the third hollow units and the fourth hollow units may be directly formed at a time in an extrusion mode during machining, and moreover, have good connection strength and sealing performance and controllable overall costs, and thus are better structural forms.

In an embodiment, in order to prevent the influence on the other battery cells by the high-temperature gas generated when thermal runaway occurs a certain battery cell in the high-capacity battery, a one-way valve with an opening pressure of P1 is further disposed on a region between the third hollow unit and the gas region of the battery cell, and when the gas pressure in any battery cell exceeds P1, the one-way valve is opened to discharge the high-pressure gas in the battery cell. The P1 is determined according to the material and thickness of the battery cell shell, and is preferably 0.5-0.7 MPa, and the pressure is generally a maximum pressure which a relatively thin battery shell may bear before deformation.

In an embodiment, the second hollow member is composed of a plurality of sections of hollow sub-members; two through holes are formed in the upper cover plate of each of the plurality of battery cells; the two ends of each section of hollow sub-member communicate with one of the through holes in the upper cover plates of adjacent battery cells respectively; and at least one of the remaining through holes of the two battery cells on the outermost side is provided with an explosion venting valve or an explosion venting film.

The present invention further provides another high-capacity battery. The high-capacity battery includes a battery pack main body; the battery pack main body includes a plurality of battery cells connected in parallel; an inner cavity of each of the plurality of battery cells includes a gas region and an electrolyte region; the electrolyte regions of the plurality of battery cells communicate with each other to form an electrolyte sharing system; and a repair interface is configured on the high-capacity battery, and the repair interface is connected with a repair apparatus to improve the performance of the high-capacity battery and prolong the service life of the high-capacity battery.

The present invention further provides a method for repairing a high-capacity battery, wherein the high-capacity battery includes a battery pack main body, and the battery pack main body includes a plurality of battery cells connected in parallel; an inner cavity of each of the plurality of battery cells includes a gas region and an electrolyte region; the electrolyte regions of the plurality of battery cells communicate with each other to form an electrolyte sharing system; and after the capacity of the high-capacity battery attenuates, the high-capacity battery is repaired to improve the capacity and prolong the cycle life thereof.

In an embodiment, the repair is performed in a running process of the high-capacity battery.

Compared with the related art, the technical solutions of the present invention have the following advantages:
1. According to the high-capacity battery in the present invention, the electrolyte regions of the plurality of battery cells communicate with each other to form the electrolyte sharing system. The electrolyte sharing system enables the plurality of battery cells to be in a unified electrolyte system, thereby reducing the differences among the plurality of battery cells, and improving the consistency of the plurality of battery cells to a certain extent, thus prolonging the cycle life of the high-capacity battery.
2. The high-capacity battery in the present invention is provided with the electrolyte chamber, the electrolyte chamber may inject electrolyte into the electrolyte sharing system of the high-capacity battery, so that the electrolyte of the high-capacity battery is always kept within a proper range, thereby further improving the performance of the high-capacity battery, and avoiding affecting the performance of the high-capacity battery by excessively little electrolyte.
3. The repair apparatus of the high-capacity battery in the present invention is the liquid injection and replacement mechanism, the liquid injection and replacement mechanism is configured for injecting electrolyte into the electrolyte sharing system, or replacing the electrolyte in the electrolyte sharing system by means of injection and extraction. By means of the liquid injection and replacement mechanism, the electrolyte or the lithium supplementation additive may be regularly and quantitatively added into the high-capacity battery, or the electrolyte of the electrolyte sharing system may be replaced regularly, thereby improving the cycle performance of the high-capacity battery.
4. The repair apparatus of the high-capacity battery in the present invention is the at least one lithium source; and at least a part of the at least one lithium source is electrically conducted with at least one shell of the plurality of battery cells, so that the lithium ions in the at least one lithium source are released and intercalated into the negative electrode material of the plurality of battery cells, so as to ensure that the lithium in the high-capacity battery is in a sufficient state, thereby reducing the capacity attenuation speed of the high-capacity battery caused by the loss of the lithium ions, and prolonging the service life of cyclic charging and discharging of the high-capacity battery.
5. The repair apparatus of the high-capacity battery in the present invention is the adsorption mechanism. The adsorption mechanism may absorb impurities such as moisture introduced into the electrolyte during the working process of manufacturing the high-capacity battery, thereby avoiding the problem that the performance of the battery is affected due to the generation of HF, meanwhile reducing the gas production amount in the formation process, and reducing the swelling degree of the battery, thus ensuring the performance and the cycle life of the high-capacity battery.
6. The repair apparatus of the high-capacity battery in the present invention is the uniform mixing mechanism, the uniform mixing mechanism is configured for uniformly mixing the electrolyte in the high-capacity battery, so that the distribution uniformity of the lithium ions is ensured, and the plurality of battery cells are located in the same electrolyte, thereby improving the performance of the high-capacity battery and prolonging the cycle life of the high-capacity battery.
7. The repair apparatus of the high-capacity battery in the present invention is the third electrode, and the third electrode is made from the conductive material insoluble in the electrolyte; and the potential difference is generated between the third electrode and the positive electrode or the negative electrode of at least one battery cell, so that the lithium ions of the high-capacity battery are supplemented, and the repair of the high-capacity battery is completed, thereby effectively delaying the capacity attenuation speed of the high-capacity battery, and prolonging the service life of cyclic charging and discharging of the high-capacity battery.
8. The high-capacity battery in the present invention is additionally provided with a gas channel composed of the second hollow member, and the gas channel may discharge the high pressure gas generated by each of the plurality of battery cells or the thermal runaway flue gas generated by thermal runaway, thereby avoiding the generation of a series of problems affecting the comprehensive performance of the high-capacity battery, for example, the swelling of the battery shell, due to the fact that the gases may not be discharged, and thus improving the performance and safety of the high-capacity battery.
9. The gas regions of the plurality of battery cells of the high-capacity battery in the present invention communicate with each other via the second hollow member, so that the gas pressures in the plurality of battery cells are in a balance system, and the plurality of battery cells are always under the same gas pressure, thereby reducing the differences among the plurality of battery cells caused by inconsistent gas pressures in the plurality of battery cells. The purpose of this design is to form the electrolyte sharing system and the gas balance discharge system inside the high-capacity battery, so as to realize the dual balance of the electrolyte and the gas pressures among the plurality of battery cells and to prolong the cycle service life of the high-capacity battery.
10. The high-capacity battery in the present invention is additionally provided with the gas channel composed of the second hollow member, by additionally providing the exhaust system, when thermal runaway occurs in the plurality of battery cells, the thermal runaway flue gas is discharged in time by using the exhaust system, thereby avoiding the situation in which the thermal runaway flue gas needs to overcome the dual pressures of the electrolyte in the sharing system and the explosion venting valve when there is only the electrolyte sharing system, and improving the safety of the high-capacity battery when a safety accident occurs; and moreover, the thermal runaway flue gas is discharged by the exhaust system, thereby generating no excessive influence on the other battery cells in the sharing system, and thus the comprehensive performance is better than that of the existing high-capacity battery.
11. The repair interface, the repair apparatus and the repair method in the present invention are all for the high-capacity battery having the electrolyte sharing system, and compared with the mode of respectively repairing each of the plurality of battery cells in an existing PACK, the repair interface, the repair apparatus and the repair method in the present invention may repair a plurality of battery cells at the same time, which may not only reduce the repair cost, but may also improve the overall performance of the high-capacity battery during the repair.

### Brief Description of the Drawings

Fig. 1 is a schematic structural diagram of a high-capacity battery in Embodiment 2 of the present invention;
Fig. 2 is a schematic structural diagram of a high-capacity battery in Embodiment 2 of the present invention;
Fig. 3 is a schematic assembly diagram of a first hollow member during grouping of battery cells in Embodiment 3 of the present invention;
Fig. 4 is a schematic structural diagram of Embodiment 3 of the present invention;
Fig. 5 is a schematic structural diagram of a liquid injection and replacement mechanism in Embodiment 3 of the present invention;
Fig. 6 is a schematic structural diagram of a liquid injection and replacement mechanism in Embodiment 3 of the present invention (the valve is a three-way valve);
Fig. 7 is a schematic structural diagram of a liquid injection and replacement mechanism in Embodiment 4 of the present invention;
Fig. 8 is a schematic structural diagram of a high-capacity battery in Embodiment 5 of the present invention;
Fig. 9 is a schematic structural diagram of a lithium source in Embodiment 5 of the present invention (a lithium rod is of a solid rod-like structure);
Fig. 10 is a schematic diagram of a local structure at a cooperation position of a lithium source and a first hollow member in Fig. 9;
Fig. 11 is a schematic structural diagram of a lithium source in Embodiment 5 of the present invention (a lithium rod is a fourth hollow member);
Fig. 12 is a schematic diagram of a local structure at a cooperation position of a lithium source and a first hollow member in Fig. 11;
Fig. 13 is a schematic structural diagram of a liquid injection and replacement mechanism in Embodiment 5 of the present invention (the valve is a two-way valve);
Fig. 14 is a schematic structural diagram of a liquid injection and replacement mechanism in Embodiment 5 of the present invention (the valve is a three-way valve);
Fig. 15 is a schematic structural diagram of a high-capacity battery in Embodiment 6 of the present invention;
Fig. 16 is a schematic diagram in Embodiment 6 of the present invention, in which an adsorption mechanism is an adsorption mandrel;
Fig. 17 is a schematic structural diagram of a liquid injection and replacement mechanism in Embodiment 7 of the present invention;
Fig. 18 is a schematic structural diagram of a high-capacity battery in Embodiment 8 of the present invention;
Fig. 19 is a schematic diagram in Embodiment 8 of the present invention, in which an adsorption mechanism is a double-layer adsorption tube;
Fig. 20 is a schematic structural diagram of Embodiment 9 of the present invention (a uniform mixing mechanism is an ultrasonic vibration rod);
Fig. 21 is a schematic structural diagram of a liquid injection and replacement mechanism in Embodiment 10 of the present invention;
Fig. 22 is a schematic structural diagram of Embodiment 10 of the present invention (a uniform mixing mechanism is an electric stirrer);
Fig. 23 is a schematic structural diagram of a high-capacity battery in Embodiment 11 of the present invention;
Fig. 24 is a section view of the high-capacity battery in Embodiment 11 of the present invention;
Fig. 25 is a schematic structural diagram of the high-capacity battery in Embodiment 11 of the present invention;
Fig. 26 is a schematic structural diagram of a liquid injection and replacement mechanism in Embodiment 12 of the present invention;
Fig. 27 is a section view of a high-capacity battery in Embodiment 13 of the present invention;
Fig. 28 is a partial section view of Fig. 27;
Fig. 29 is a schematic structural diagram of a high-capacity battery in Embodiment 14 of the present invention;
Fig. 30 is a first schematic structural diagram of a high-capacity battery in Embodiment 15 of the present invention;
Fig. 31 is a second schematic structural diagram of the high-capacity battery in Embodiment 15 of the present invention;
Fig. 32 is a schematic structural diagram of a high-capacity battery in Embodiment 16 of the present invention;
Fig. 33 is a first schematic structural diagram of a high-capacity battery in Embodiment 18 of the present invention;
Fig. 34 is a second schematic structural diagram of the high-capacity battery in Embodiment 18 of the present invention;
Fig. 35 is a schematic structural diagram of a high-capacity battery in Embodiment 19 of the present invention;
Fig. 36 is a schematic structural diagram of a high-capacity battery in Embodiment 20 of the present invention;
Fig. 37 is a first schematic structural diagram of a high-capacity battery in Embodiment 21 of the present invention;
Fig. 38 is a second schematic structural diagram of the high-capacity battery in Embodiment 21 of the present invention;
Fig. 39 is a schematic structural diagram of a high-capacity battery in Embodiment 22 of the present invention;
Fig. 40 is a schematic structural diagram of a high-capacity battery in Embodiment 23 of the present invention;
Fig. 41 is a schematic structural diagram of a high-capacity battery in Embodiment 24 of the present invention;
Fig. 42 is a first schematic structural diagram of a high-capacity battery in Embodiment 25 of the present invention;
Fig. 43 is a second schematic structural diagram of the high-capacity battery in Embodiment 25 of the present invention;
Fig. 44 is a third schematic structural diagram of the high-capacity battery in Embodiment 25 of the present invention;
Fig. 45 is a schematic structural diagram of a high-capacity battery in Embodiment 26 of the present invention;
Fig. 46 is a schematic structural diagram of a high-capacity battery in Embodiment 27 of the present invention;
Fig. 47 is a first schematic structural diagram of a high-capacity battery in Embodiment 28 of the present invention;
Fig. 48 is a second schematic structural diagram of the high-capacity battery in Embodiment 28 of the present invention;
Fig. 49 is a third schematic structural diagram of the high-capacity battery in Embodiment 28 of the present invention;
Fig. 50 is a schematic structural diagram of a high-capacity battery in Embodiment 29 of the present invention;
Fig. 51 is a first schematic structural diagram of a high-capacity battery in Embodiment 30 of the present invention;
Fig. 52 is a second schematic structural diagram of the high-capacity battery in Embodiment 30 of the present invention;
Fig. 53 is a schematic structural diagram of a high-capacity battery in Embodiment 31 of the present invention;
Fig. 54 is a schematic structural diagram of a high-capacity battery in Embodiment 32 of the present invention;
Fig. 55 is a schematic structural diagram of a high-capacity battery in Embodiment 33 of the present invention;
Fig. 56 is a schematic structural diagram of a high-capacity battery in Embodiment 34 of the present invention;
Fig. 57 is a first schematic structural diagram of a high-capacity battery in Embodiment 35 of the present invention;
Fig. 58 is a second schematic structural diagram of the high-capacity battery in Embodiment 35 of the present invention;
Fig. 59 is a schematic structural diagram of a high-capacity battery in Embodiment 36 of the present invention;
Fig. 60 is a schematic structural diagram of a battery cell in Embodiment 36 of the present invention; and
Fig. 61 is a curve graph illustrating the capacity retention rate of a battery using α-Al₂O₃ as an adsorption mandrel material in Embodiment 7, wherein the abscissa is the number of cycles, and the ordinate is the capacity retention rate.

Reference signs: 11-battery cell, 12-first hollow member, 13-first hollow unit, 14-second hollow unit, 15-explosion venting valve, 21-liquid injection and replacement mechanism, 211-valve, 212-liquid extraction and injection device, 213-three-way valve, 214-third port, 215-sealing cap, 216-rubber pad, 217-fixing ring, 22-battery cell, 23-first hollow member, 231-first hollow unit, 232-second hollow unit, 24-explosion venting valve, 25-third hollow member, 251-first through hole, 31-lithium source, 311-conductive end cap, 312-lithium rod, 3121-conductive section, 3122-lithium supplementation section, 313-sealing plug, 314-central through hole, 315-support ring, 32-battery cell, 33-first hollow member, 34-liquid injection and replacement mechanism, 341-valve, 342-liquid extraction and injection device, 343-third port, 35-L-shaped connecting plate, 41-adsorption mechanism, 411-adsorption mandrel, 412-sealed connecting cover, 413-sealing end cap, 414-positioning blind hole, 415-support ring, 416-double-layer adsorption tube, 417-rubber plug, 42-battery cell, 43-first hollow member, 44-liquid injection and replacement mechanism, 441-valve, 442-liquid extraction and injection device, 443-third port, 444-sealing cap, 445-rubber pad, 446-fixing ring, 51-uniform mixing mechanism, 52-battery cell, 53-first hollow member, 54-liquid injection and replacement mechanism, 511-motor, 512-stirring shaft, 513-spiral blade, 541-valve, 542-liquid extraction and injection device, 543-third port, 61-third electrode, 611-sealing plug, 612-fifth hollow member, 6121-through hole, 613-sealing end cap, 614-rubber stopper, 62-battery cell, 63-first hollow member, 64-L-shaped connecting plate, 65-voltage source, 66-liquid injection and replacement mechanism, 661-valve, 662-liquid extraction and injection device, 663-third port, 664-sealing cap, 665-rubber pad, 666-fixing ring, 71-battery cell, 72-electrolyte sharing system, 73-electrolyte chamber, 74-control valve, 75-active liquid supplementation apparatus, 76-pressure measurement apparatus, 77-liquid injection mechanism, 78-vacuumizing apparatus, 79-explosion venting valve, 710-exhaust valve, 711-vacuumizing device, 721-first hollow member, 731-partition plate, 771-liquid injection valve, 772-liquid injection pump, 81-battery cell, 82-electrolyte sharing system, 83-electrolyte chamber, 84-lithium source, 87-liquid injection mechanism, 88-vacuumizing apparatus, 89-circulation pipe, 810-circulating pump, 811-explosion venting valve, 812-exhaust apparatus, 813-vacuumizing device, 821-first hollow member, 871-liquid injection valve, 872-liquid injection pump, 8101-positive electrode, 91-battery cell, 92-electrolyte sharing system, 93-electrolyte chamber, 94-adsorption mechanism, 95-control valve, 96-liquid extraction pump, 97-liquid injection mechanism, 98-vacuumizing apparatus, 99-circulation pipe, 910-circulation pump, 911-explosion venting valve, 912-exhaust apparatus, 913-vacuumizing device, 921-first hollow member, 931-partition plate, 971-liquid injection valve, 972-liquid injection pump, 101-battery cell, 102-electrolyte sharing system, 103-electrolyte chamber, 104-uniform mixing mechanism, 105-control valve, 106-liquid extraction pump, 107-liquid injection mechanism, 108-external circulation pipe, 109-external circulation pump, 1010-internal circulation pipe, 1011-internal circulation pump, 1012-vacuumizing apparatus, 1013-explosion venting valve, 1014-exhaust apparatus, 1015-vacuumizing device, 1016-isolation valve, 1021-first hollow member, 1031-partition plate, 1071-liquid injection valve, 1072-liquid injection pump, 111-battery cell, 112-electrolyte sharing system, 113-electrolyte chamber, 114-third electrode, 115-voltage source, 116-liquid injection mechanism, 117-vacuumizing apparatus, 118-circulation pipe, 119-circulation pump, 1110-explosion venting valve, 1111-exhaust apparatus, 1112-vacuumizing device, 1121-first hollow member, 1161-liquid injection pump, 1162-liquid injection valve, 1113-positive electrode, 1114-negative electrode, 121-battery cell, 122-second hollow member, 123-one-way valve, 124-pressure relief component, 125-liquid injection and replacement mechanism, 126-adsorption apparatus, 127-pressure measurement apparatus, 128-hollow sub-member, 129-branch pipe, 1211-upper cover plate, 1221-third hollow unit, 1222-fourth hollow unit, 1241-pressure relief valve, 1251-liquid injection valve, 1252-liquid injection pump, 1253-vacuumizing apparatus.

### Detailed Description of the Embodiments

The present invention will be described in detail below in combination with the drawings and specific implementations. It should be understood by those skilled in the art that these implementations are merely used to explain the technical principles of the present invention, and are not intended to limit the protection scope of the present invention.

In a high-capacity battery in the present invention, electrolyte in a plurality of battery cells communicates with each other to form an electrolyte sharing system. The purpose of the electrolyte sharing system is to communicate the electrolyte of the plurality of battery cells, so that all battery cells are in an electrolyte system, which is able to be implemented in a plurality of modes:
1. Openings are formed in the plurality of battery cells, and then the plurality of battery cells are soaked in a sealed box body filled with electrolyte, so that the electrolyte in electrolyte regions of the plurality of battery cells communicates with the electrolyte in the sealed box body to form an electrolyte system, that is, the electrolyte sharing system of the high-capacity battery is formed; and under the structure of the electrolyte sharing system, positive and negative electrodes of the plurality of battery cells connected in parallel are electrically connected with positive and negative electrodes of the sealed box body, so as to form the high-capacity battery having the electrolyte sharing system.
2. Openings are formed in the plurality of battery cells, communication is formed with the opening of each of the plurality of battery cells via a tube (i.e., a first hollow member), so that the electrolyte in the electrolyte regions of the plurality of battery cells communicates with the electrolyte in the pipeline and forms an electrolyte system, that is, the electrolyte sharing system of the high-capacity battery is formed.

The above electrolyte sharing system enables the plurality of battery cells to be in a unified electrolyte system, thereby reducing the differences among the capacities of the plurality of battery cells and improving the consistency of the plurality of battery cells to a certain extent, thus prolonging the cycle life of the high-capacity battery to a certain extent.

### Embodiment 1

A high-capacity battery in the present embodiment includes a plurality of battery cells, the battery cell is able to be a 280 Ah square-shell battery cell, and the square-shell battery cell includes a shell, an upper cover plate, a lower cover plate, a cylinder, and a battery core; the upper cover plate, the cylinder and the lower cover plate form a battery shell, the battery core is disposed in the battery shell, and electrolyte is further injected into the battery shell, wherein through holes are formed in the lower cover plates of the battery shells, and the through holes are in sealed communication with a first hollow member to form an electrolyte sharing system. The first hollow member is a porous tube, wherein the number of holes in the porous tube is the same as the number of the plurality of battery cells, and the structure in which the through hole in the lower cover plate of each battery shell communicates with the first hollow member, that is, the porous tube, includes the following types:
(1) a connection is formed by using a branch pipe, and welding is performed on a connection position; the mode has the advantages of high reliability at the connection position, but the entire welding process and the welding procedure are relatively complex, so that the cost is relatively high; however, for the high-capacity battery, especially for a high-capacity battery applied to an energy storage system, the use duration thereof is basically more than 10 years, therefore the welding mode is better one of various connection modes;
(2) a connection is formed by using a branch pipe, a threaded connection is performed on a connection position, and a sealing gasket is additionally disposed at the threaded connection position; the mode has the advantages that the connection cost is lower, and the threaded connection is the most common sealed connection mode, however, since the high-capacity battery used in the energy storage system is used for a longer time, and the airtight reliability of the threaded connection is suspected, the threaded connection mode is an optimal implementation solution on the premise that the connection air tightness is able to be guaranteed; and
(3) a branch pipe is integrally disposed at the position of the through hole in the lower cover plate of each battery shell, and the branch pipe and each hole in the first hollow member are installed in an extrusion mode via interference fit; the mode is a better solution in terms of connection reliability and assembly process, and is interference fit in nature; however, since the sealed connection is achieved in the extrusion mode, the air tightness after extrusion must be guaranteed, which proposes a relatively harsh requirement for the quality of the material at an extrusion position.

### Embodiment 2

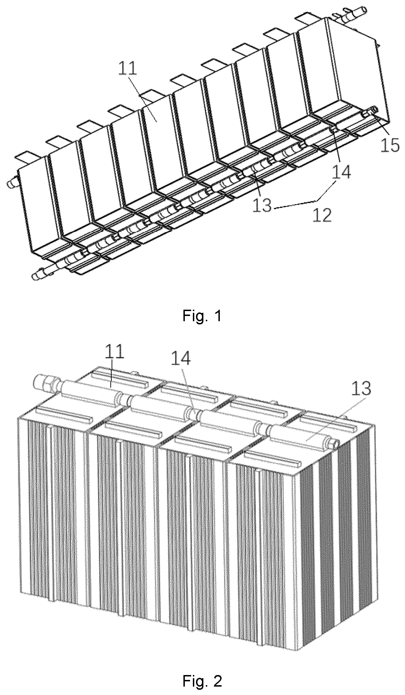

As shown in Fig. 1 and Fig. 2, a high-capacity battery in the present embodiment includes a plurality of battery cells 11, the battery cell 11 is able to be a 280 Ah square-shell battery cell, and the square-shell battery cell includes a shell, an upper cover plate, a lower cover plate, a cylinder, and a battery core; the upper cover plate, the cylinder and the lower cover plate form a battery shell, the battery core is disposed in the battery shell, and electrolyte is further injected into the battery shell; first hollow units 13 are disposed on the lower cover plates, the plurality of first hollow units 13 on the lower cover plates of the plurality of battery cells communicate with each other to form a first hollow member 12 (i.e., an electrolyte sharing system), or the plurality of first hollow units 13 are spliced by second hollow units 14 to form the first hollow member 12. In the mode in which separate hollow units are respectively disposed on the lower cover plates of the square-shell battery cells and are spliced finally, the tightness of the hollow member formed after communication should be ensured, and on this basis, the present embodiment provides the following better structural solutions:
(1) A sealed plug-in connection is directly performed by using interference fit between tubular structures

Specifically, if a traditional threaded connection structure is directly configured for sealing, since the lower cover plate and the cylinder are of an integrated structure, when the first hollow unit on the lower cover plate is of a threaded structure, when a threaded connection is performed on two left and right square-shell battery cells, the two batteries are not able to be rotated relatively, and thus the threaded connection is not able to be operated.

On this basis, it is suggested that the connection of the electrolyte sharing system of each square-shell battery cell is realized by using a mutual extrusion connection mode of tubular structures; on a specific extrusion structure, one end of a connection section of two ends of the first hollow unit on the square-shell battery cell is able to be set to be a conical structure on an inner wall, an outer wall of the other end is set to be an outer conical structure adapting to the conical structure of the inner wall, the adaptation requires that when an extrusion connection is performed on two square-shell battery cells, the conical structure of the outer wall of one battery cell is extruded into the conical structure of the inner wall of the other battery cell, and the two battery cells are in interference fit to ensure the sealing performance after the extrusion is completed; and in order to further improve the sealing performance, it may be considered that the outer wall is coated with an electrolyte corrosion resistant functional coating or is provided with a flexible sealing sleeve and other structures.

### (2) A sealed plug-in connection is performed by using intermediate connecting pieces via interference fit

If the mode in (1) is used, the plurality of first hollow units on the lower cover plates of two square-shell battery cells are directly connected, the two square-shell battery cells has only one connection point, and the reduction of the connection points helps to improve the assembly efficiency in a production process. However, since the plurality of first hollow units are directly disposed on the lower cover plates of the square-shell battery cells and are connected in the extrusion mode, the requirement for machining precision is extremely high, if it is not able to be guaranteed that the plurality of first hollow units of two adjacent square-shell battery cells are collinear and coplanar, during the extrusion connection, the plurality of first hollow units may generate displacements relative to the lower cover plates or the lower cover plates generate displacements relative to the shell, resulting in a damage to the battery. Therefore, in the mode, the procedures are relatively simplified, but the precision requirements are higher. On this basis, intermediate connecting pieces are introduced to solve the above problems, interference fit is formed with reference to the extrusion connection in (1), so as to realize the sealed plug-in connection, that is, the plurality of first hollow units 13 are communicated by the second hollow units 14. In this way, errors caused by machining are able to be shared to the intermediate connecting pieces, thereby reducing the requirements for the machining precision, however, for two adjacent square-shell battery cells, the connection points becomes from one to two, which relatively reduces the machining efficiency in the production process.

### (3) A sealed connection is performed by using intermediate connecting pieces via a threaded connection

It is equivalent to the connection mode in (2), it may be considered that the extrusion connection mode is replaced with a threaded connection mode, that is, the two ends of the second hollow units 14 are respectively provided with threads, and the matching positions of the plurality of first hollow units 13 and the second hollow units 14 are provided with adapted threads; when the threaded connection is utilized, compared with the extrusion mode in (2), the efficiency is lower, the synchronism of the square-shell battery cells on the two sides should be noted during assembly, and the plurality of first hollow units on the square-shell battery cells on the two sides are hermetically connected at the same by separately adjusting the second hollow units 14; and of course, in order to further improve the sealing performance, it may be considered that the outer wall is coated with an electrolyte corrosion resistant functional coating or is provided with a flexible sealing sleeve and other structures.

In an embodiment, an explosion venting mechanism may also be disposed on the first hollow member 12, that is, an explosion venting valve 15 or an explosion venting film is disposed. Since the first hollow member is used as an electrolyte sharing system, when the first hollow member, when serving as an explosion venting channel, discharges almost all free-state electrolyte in the high-capacity battery in time, thereby reducing the possibility of thermal runaway being continuously triggered for this part of electrolyte (the possibility is relatively low), and meanwhile, if an electrolyte collection apparatus is disposed in a system composed of the high-capacity battery, this part of discharged electrolyte is able to be recycled in time for continued use.

The purpose of the electrolyte sharing system is to communicate the electrolyte of the plurality of battery cells, so that all battery cells are in one electrolyte system, this mode may improve the performance of the high-capacity battery to a certain extent, but a capacity attenuation phenomenon is inevitably present during the use of the high-capacity battery, resulting in a limited cycle life of the high-capacity battery, therefor how to repair the capacity of the high-capacity battery to prolong the cycle life is a problem to be solved. On this basis, in the present invention, a repair apparatus is added in the high-capacity battery, and the repair apparatus repairs the capacity of the high-capacity battery to prolong the cycle life thereof. The repair apparatus is able to be a liquid injection and replacement mechanism, a lithium source, an adsorption mechanism, a uniform mixing mechanism, a third electrode, etc.

In an embodiment, the repair apparatus is a liquid injection and replacement mechanism, the liquid injection and replacement mechanism is configured for injecting electrolyte into the electrolyte sharing system, or replacing the electrolyte in the high-capacity battery in an injection and extraction mode. The liquid injection and replacement mechanism has the following advantages: 1, the liquid injection and replacement mechanism may inject the electrolyte into the high-capacity battery during the manufacturing of the high-capacity battery, so as to form the electrolyte sharing system; 2, after the high-capacity battery is formed, the liquid injection and replacement mechanism adds electrolyte or a lithium supplementation additive into the high-capacity battery again, so that lithium ions in the electrolyte consumed by an SEI film during formation are able to be compensated, thereby solving the problem of the SEI film consuming irreversible lithium is solved to a certain extent; and 3, after the high-capacity battery runs for a certain number of cycles, the electrolyte of the electrolyte sharing system is able to be replaced regularly, thereby further improving the cycle performance of the high-capacity battery.

In another embodiment, the repair apparatus is a lithium source, in a charging process of each of the plurality of battery cells (i.e., in a formation process), the lithium ions in each of the plurality of battery cells are de-intercalated from a positive electrode and enter a negative electrode, and then are de-intercalated from the negative electrode and enter the positive electrode in a discharging process. During this process, the capacity of a positive electrode material is attenuated by about 5% to 15%, this is because of the formation of a solid electrolyte interphase (SEI) film on the surface of a negative electrode sheet, therefore a certain number of lithium ions are consumed, thereby reducing the capacity of the battery cell and affecting the capacity and the cycle life of the high-capacity battery to a certain extent. The capacity of the high-capacity battery is gradually attenuated after being configured for a period of time with the consumption of the lithium ions, resulting in the problem of a limited cycle life of the high-capacity battery, and at this time, the at least one lithium source is added on the high-capacity battery; and at least part of the at least one lithium source is electrically conducted with the positive electrode of at least one battery cell, so that lithium ions in the at least one lithium source are released and intercalated into a negative electrode material of each of the plurality of battery cells, thereby compensating for lithium ions consumed when the solid electrolyte interphase (SEI) film is formed on the surface of the negative electrode of each of the plurality of battery cells. With the continuous work of the high-capacity battery, the at least one lithium source may continuously perform lithium supplementation repair on the high-capacity battery, thereby greatly reducing the problem of capacity attenuation of the high-capacity battery caused by the loss of the lithium ions, and prolonging the service life of cyclic charging and discharging of the high-capacity battery.

In another embodiment, the repair apparatus is an adsorption mechanism, after the high-capacity battery is manufactured or used for a period of time, impurities such as water, organic matters and trace metal ions are inevitably present, and the content of the impurities will affect the performance of the high-capacity battery, for example, the number of cycles is reduced. At this time, the adsorption mechanism is added, the adsorption mechanism is mainly configured for absorbing impurities such as moisture in the electrolyte of the high-capacity battery, so as to avoid the influence of the impurities on the performance of the battery, and meanwhile, the adsorption mechanism also reduces the gas production amount in the formation process and reduces the swelling degree of the battery, thereby improving the performance of the high-capacity battery and prolonging the cycle life of the high-capacity battery.

In another embodiment, the repair apparatus is a uniform mixing mechanism, when electrolyte or a lithium supplementation additive is injected into an existing high-capacity battery, the performance of the high-capacity battery is affected by the uneven distribution of the lithium ions in the system, at this time, the uniform mixing mechanism is added, and the uniform mixing mechanism is configured for uniformly mixing the electrolyte in the electrolyte sharing system. The uniform mixing mechanism may uniformly mix new electrolyte that is injected into the electrolyte sharing system for the first time with the original electrolyte, or uniformly mixing the electrolyte or the lithium supplementation additive in the original electrolyte in the system after the electrolyte or the lithium supplementation additive is subsequently supplemented, thereby ensuring the distribution uniformity of the lithium ions, thus improving the performance of the high-capacity battery and prolonging the cycle life of the high-capacity battery. In an embodiment, after the high-capacity battery runs for a period of time, the differences among the plurality of battery cells are gradually increased, the uniform mixing mechanism is regularly started to mix the electrolyte in the high-capacity battery, so that the differences among the plurality of battery cells is able to be compensated to a certain extent.

In another embodiment, the repair apparatus is a third electrode, the plurality of battery cells in the existing high-capacity battery consume the lithium ions due to the formation of the SEI film, and the capacity of the high-capacity battery is gradually attenuated after being used for a period of time with the consumption of the lithium ions, resulting in the problem of a limited cycle life of the high-capacity battery, at this time, the third electrode is added into the high-capacity battery, a potential difference is generated between the third electrode and the positive electrode or the negative electrode of the battery cell, which has advantages as follows: 1, when the high-capacity battery is manufactured, free lithium ions in the electrolyte injected into the electrolyte sharing system are supplemented into the plurality of battery cells, so that the lithium ions consumed when the SEI films are formed on the plurality of battery cells are compensated to a certain extent, the performance of the high-capacity battery is improved, and the cycle life of the high-capacity battery is prolonged; and 2, after the high-capacity battery runs for a certain number of cycles, the electrolyte or lithium supplementation additive is regularly supplemented to the electrolyte sharing system, and a potential difference is generated between the third electrode and the positive electrode or the negative electrode of the battery cell again, thereby implementing lithium supplementation of the high-capacity battery, and completing the repair work of the high-capacity battery, thus further improving the performance of the high-capacity battery and prolonging the cycle life of the high-capacity battery.

The above repair apparatus are able to be disposed on the high-capacity battery that is provided with a sealed box body, and may also be disposed on the high-capacity battery which forms the electrolyte sharing system via tubes. If being disposed on the high-capacity battery that is provided with the sealed box body, the installation mode of the repair apparatus is as follows: the liquid injection and replacement mechanism is able to be directly disposed on the sealed box body. The at least one lithium source is able to be directly soaked in the electrolyte of the sealed box body, and meanwhile is in contact with the part of the sealed box body provided with a positive electrode. The uniform mixing mechanism is installed on the sealed box body and acts in the electrolyte to complete the mixing of the electrolyte. The adsorption mechanism is able to be directly soaked in the electrolyte of the sealed box body to complete the adsorption of moisture in the electrolyte. A voltage source is connected between a part of the third electrode (the part is able to be exposed from the sealed box body) and the positive or negative electrode of the sealed box body, and the other part of the third electrode (the part may extend into the sealed box body) is in contact with the electrolyte of the sealed box body.

The structure and installation of the repair apparatus are described in detail below on the basis of the high-capacity battery of the electrolyte sharing system formed by the tubes.

### Embodiment 3

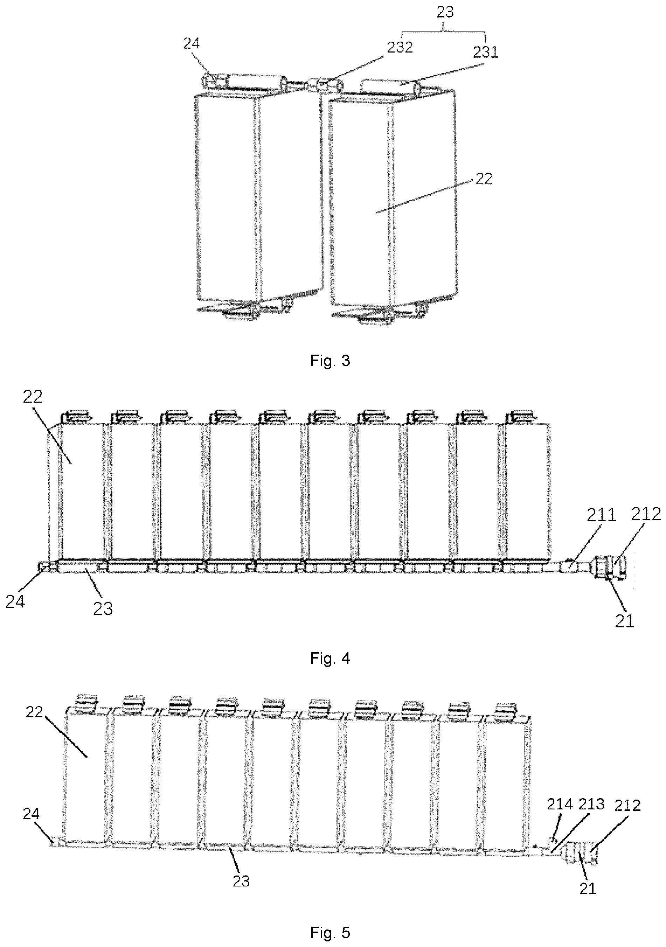

As shown in Figs. 3 to 6, a high-capacity battery in the present embodiment includes a repair apparatus and a plurality of battery cells 22; and the plurality of battery cells 22 are disposed in parallel, and the plurality of battery cells 22 are communicated by a first hollow member 23 to form an electrolyte sharing system of the high-capacity battery. The repair apparatus is a liquid injection and replacement mechanism 21, the liquid injection and replacement mechanism 21 is disposed on one end of the first hollow member 23, and the other end of the first hollow member 23 is able to be provided with an explosion venting valve 24 or a plug. The purpose of disposing the explosion venting valve lies in that: when the explosion venting valve is disposed, once thermal runaway occurs in a certain battery cell in the high-capacity battery, a thermal runaway flue gas is able to be released to the outside by the first hollow member and the explosion venting valve and is treated in a single or combined mode of ignition, adsorption or cooling, thereby ensuring the safety of the high-capacity battery.

In the present embodiment, the first hollow member 23 is actually an elongated hollow tube formed in a splicing mode, and the specific structure thereof is shown in Fig. 3: the first hollow member 23 includes a plurality of first hollow units 231 that are disposed on lower cover plates of the plurality of battery cells 22 and communicate with electrolyte regions of the plurality of battery cells 22 respectively, and a plurality of second hollow units 232 configured for communicating the plurality of first hollow units 231. When the plurality of battery cells are grouped side by side, the first hollow member 23 is able to be formed by the butt joint of the plurality of first hollow units 231 and the plurality of second hollow units 232, thereby simplifying the assembly program, and meanwhile, the butt joint of the plurality of first hollow units 231 and the second hollow units 232 may also well control the sealing performance of the entire electrolyte sharing system. It should be noted that in the present embodiment, the first hollow unit 231 is a hollow pipe fitting integrally formed on the lower cover plate directly (which is usually manufactured by extrusion forming). The second hollow unit 232 is a separate hollow pipe fitting (which is similar to a joint).

As shown in Fig. 4, in the present embodiment, the liquid injection and replacement mechanism 21 uses the mode of a valve + a liquid extraction and injection device, a valve 211 is a manual or electric stop valve, one port of the valve 211 communicates with the first hollow member 23, and the other end thereof is able to be connected to a liquid extraction and injection device 212. In use, the valve 211 is opened, and the liquid extraction and injection device 212 is used to inject electrolyte or a lithium supplementation additive into the electrolyte sharing system or replace the electrolyte in the electrolyte sharing system.

As shown in Fig. 5, on the basis of the liquid injection and replacement mechanism, in order to further improve the function of the liquid injection and replacement mechanism, the valve may also be selected as a three-way valve 213, a first port of the three-way valve 213 communicates with the first hollow member 23, a second port thereof communicates with the liquid extraction and injection device 212, and a third port 214 thereof is configured for communicating with a vacuumizing apparatus. In this way, in addition to a liquid injection and replacement function, a vacuumizing operation may also be performed on the electrolyte sharing system by the liquid injection and replacement mechanism, so as to ensure that the electrolyte is able to smoothly enter the electrolyte sharing system during subsequent liquid injection. In the present embodiment, the liquid extraction and injection device is able to be an electric pump.

### Embodiment 4

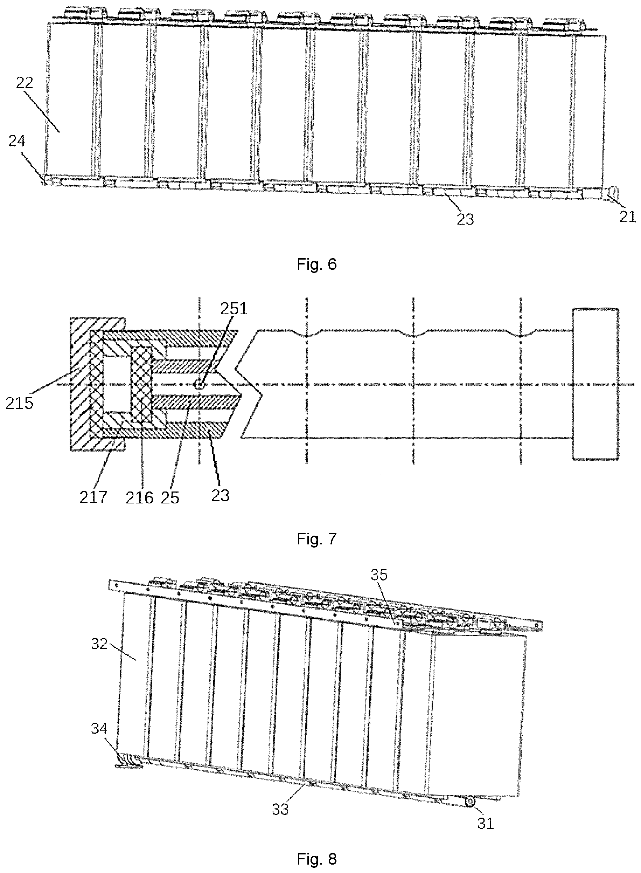

The present embodiment has approximately the same structure as Embodiment 3, and differs from Embodiment 3 in that a different liquid injection and replacement mechanism 21 is used. As shown in Fig. 7, the liquid injection and replacement mechanism 21 in the present embodiment uses a combined form of a sealing cap + a rubber pad + a liquid injection needle tube, that is, the liquid injection and replacement mechanism 21 includes a sealing cap 215, a rubber pad 216 and a liquid injection needle tube (not shown in the figure); the sealing cap 215 is hermetically installed on an end portion of the first hollow member 23 and is configured for sealing the end portion from the outside; and the rubber pad 216 is fixedly disposed in the first hollow member 23 at a position close to the sealing cap 215, and the rubber pad 216 is able to be configured for inserting the liquid injection needle tube. The main purpose of disposing the sealing cap on the liquid injection and replacement mechanism in this mode is to implement twice sealing on the first hollow member together with the rubber pad, thereby improving the overall sealing performance to realize isolation from an external environment, meanwhile, the corrosion to the rubber pad by the external environment due to the direct contact of the rubber pad 216 with the external environment is avoided. In some other embodiments, the sealing cap 215 may also be not required.

In use, the sealing cap 215 is disassembled from the first hollow member 23, then the liquid injection needle tube is inserted into the first hollow member 23 from the rubber pad 216, and electrolyte or a lithium supplementation additive is able to be injected into the electrolyte sharing system or the electrolyte in the electrolyte sharing system is able to be replaced via the liquid injection needle tube.

In order to improve the liquid injection and replacement effect and to ensure the uniformity of the electrolyte in each of the plurality of battery cells in the electrolyte sharing system in a liquid injection and replacement process, a third hollow member 25 (the third hollow member 25 is an elongated hollow tube with an outer diameter smaller than that of the first hollow member 23) may also be disposed in the first hollow member 23; a plurality of first through holes 251 are uniformly formed in the third hollow member 25; and the forming position of each of the plurality of first through holes 251 corresponds to one battery cell 22, meanwhile, a plurality of second through holes are formed in a tube wall of the liquid injection needle tube, and the plurality of second through holes are in one-to-one correspondence with the plurality of first through holes 251. After the liquid injection needle tube is inserted into the third hollow member 25, in the liquid injection and replacement process, the electrolyte is able to be injected from the second through holes in the liquid injection needle tube to the plurality of first through holes corresponding to the third hollow member 25, and finally enters the plurality of battery cells from the openings of the plurality of battery cells, or the electrolyte in the plurality of battery cells are sequentially extracted from the openings of the plurality of battery cells, the plurality of first through holes and the second through holes.

In order to conveniently fix the rubber pad in the first hollow member 23, in the present embodiment, a fixing ring 217 made from the same material as the first hollow member 23 is provided, the rubber pad 216 is intercalated into the fixing ring 217, and the fixing ring 217 is fixed in the first hollow member 23 by riveting or welding.

### Embodiment 5

As shown in Fig. 8, a high-capacity battery in the present embodiment includes a repair apparatus and a plurality of battery cells 32; the plurality of battery cells 32 are disposed in parallel (in the present embodiment, two L-shaped connecting plates 35 are used, the two L-shaped connecting plates respectively conduct positive electrodes and negative electrodes of the plurality of battery cells, so as to realize the parallel disposition of the plurality of battery cells), the plurality of battery cells 32 are communicated by a first hollow member 33, and then electrolyte regions of the plurality of battery cells 32 and the first hollow member 33 form an electrolyte sharing system of the high-capacity battery; and the repair apparatus includes a lithium source 31, the at least one lithium source 31 is located in the first hollow member 33, the at least one lithium source is hermetically fixed with one end of the first hollow member 33, and the other end of the first hollow member is provided with a liquid injection and replacement mechanism 34 or an explosion venting valve.

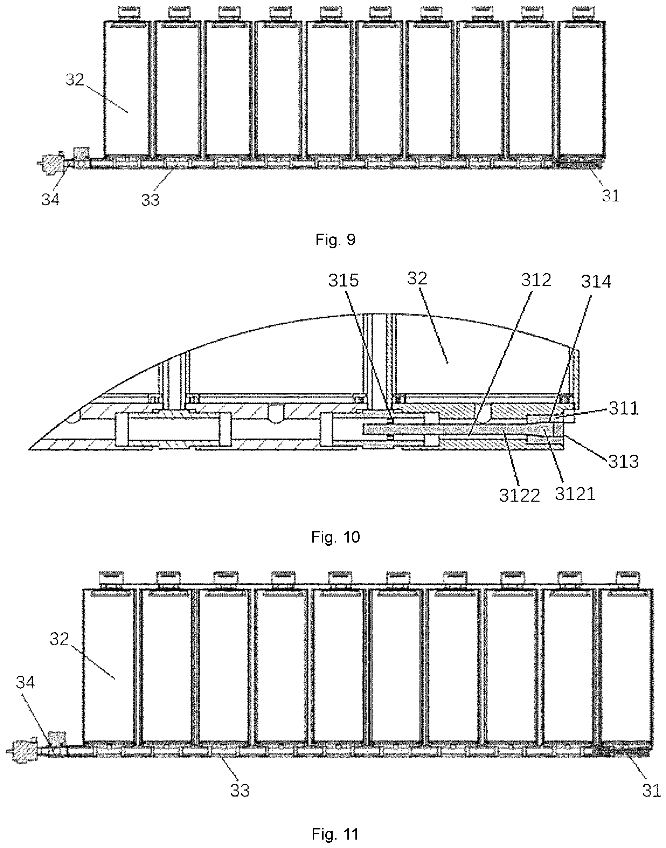

In the present embodiment, the specific structure of the at least one lithium source 31 and an assembly relationship with the first hollow member 33 are shown in Fig. 9 and Fig. 10; the at least one lithium source 31 includes a conductive end cap 311, a lithium rod 312, and a sealing plug 313; an outer surface of the conductive end cap 311 is provided with threads, and a central through hole 314 is formed in the outer surface of the conductive end cap 311; the conductive end cap 311 is connected to a port of one end of the first hollow member 33 via threads; the lithium rod 312 includes a conductive section 3121 and a lithium supplementation section 3122; the conductive section 3121 is located in the central through hole 314 and is in contact with a hole wall of the central through hole 314, in order to ensure the tightness of the connection and good conductivity, both the conductive section 3121 and the part of the central through hole 314 cooperating with the conductive section 3121 is able to be set to be conical, the lithium supplementation section 3122 at least partially extends out of the central through hole 314 and is configured for releasing lithium ions into the first hollow member 33; and the sealing plug 313 is disposed in the central through hole 314 and is configured for hermetically isolating the lithium rod 312 from an external environment.

In the present embodiment, at least one support ring 315 is further disposed in the first hollow member 33, and the lithium rod 312 is able to be stably installed in the first hollow member 33 under the support of the support ring 315 and the two sides of the conductive end cap 311.

The assembly process of the at least one lithium source 31 is as follows: first, the conductive end cap 311 is connected to one end of the first hollow member 33 via threads, and a liquid injection and replacement mechanism 34 is installed on the other end of the first hollow member 33; then, the lithium rod 312 is inserted from the central through hole 314 of the conductive end cap 311, and it is ensured that the conductive section is in close contact with the central through hole 314, and it is preferred that the lithium supplementation section 3122 is completely located in the first hollow member 33; next, the sealing plug 313 is pushed from the outside into the central through hole 314, and the lithium rod 312 is positioned and sealed; and then, the liquid injection and replacement mechanism 34 is installed on the other end of the first hollow member 33, and electrolyte is able to be added into the high-capacity battery by the liquid injection and replacement mechanism 34.

In order to prevent the contact between the lithium supplementation section in the lithium rod 312 with the air before assembly, and meanwhile, after the lithium rod 312 is installed on the electrolyte sharing system, the lithium supplementation section 3122 in the lithium rod 312 releases lithium ions, in the present embodiment, the conductive section 3121 and the lithium supplementation section 3122 in the lithium rod 312 are of rod-shaped structures integrally formed by a metal lithium or a lithium oxide, and both the conductive section 3121 and the lithium supplementation section 3122 are set to be solid rods, wherein an outer layer of the conductive section 3121 is able to be plated with a conductive metal material, and the conductive metal material is not corroded by the air and does not react with the electrolyte in the case of electric conduction. An outer layer of the lithium supplementation section 3122 is provided with a protective layer; the protective layer is dissolved under the soaking of the electrolyte, and after the protective layer is dissolved, the metal lithium or the lithium oxide is in contact with the electrolyte in the electrolyte sharing system. When the lithium supplementation section 3122 is in the electrolyte sharing system, the protective layer is dissolved under the soaking of the electrolyte, and after the protective layer is dissolved, the metal lithium or the lithium oxide is in contact with the electrolyte in the electrolyte sharing system, so that lithium ions are able to be released to supplement lithium to the high-capacity battery.

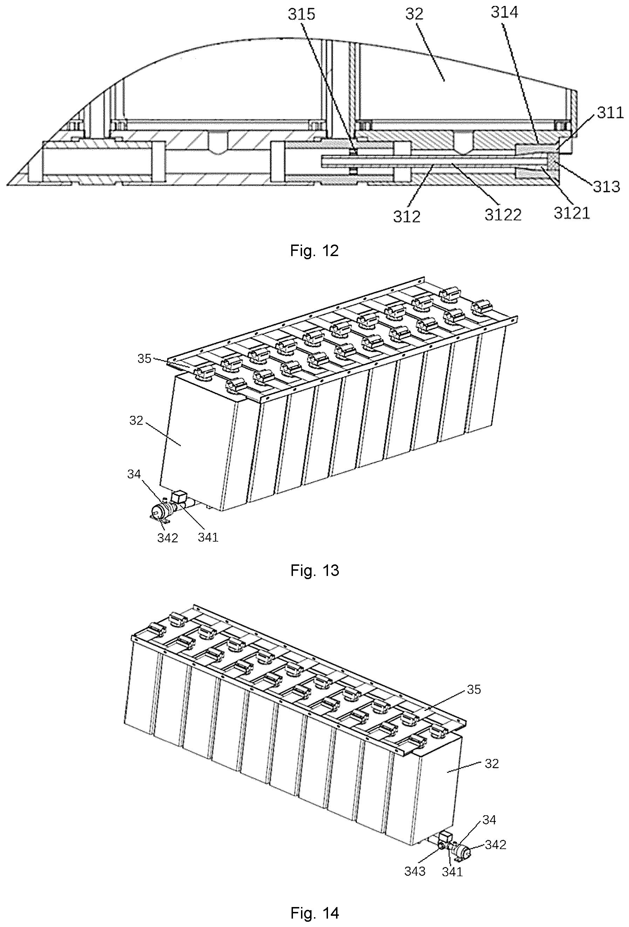

As shown in Fig. 11 and Fig. 12, in some other embodiments, the conductive section 3121 and the lithium supplementation section 3122 in the lithium rod 312 are able to be fixed into a whole by welding or riveting, wherein the conductive section 3121 is made from a conductive metal material, the metal material is not corroded by the air and meanwhile does not react with the electrolyte in the case of electric conduction. The lithium supplementation section 3122 is a fourth hollow member insoluble in the electrolyte, an inner wall of the fourth hollow member is provided with a metal lithium layer or a lithium oxide layer, and a port of the end of the fourth hollow member that is away from the conductive section 3121 is provided with a sealing film soluble in the electrolyte (Fig. 12 shows a schematic diagram after the sealing film is dissolved in the electrolyte, therefore the sealing film is not shown in the figure). It should be noted that the conductive section 3121 is solid or hollow, and if the conductive section 3121 is hollow, it is only necessary to ensure that one end of the conductive section 3121 is sealed. Due to the existence of the sealed end of the conductive section 3121 on one end of the lithium supplementation section 3122 and the existence of the sealing film on the other end in this form, the contact between the metal lithium or the lithium oxide with the air may also be avoided when the lithium rod is in the external environment, and meanwhile, after the lithium supplementation section 3122 is located in the electrolyte sharing system, the sealing film is dissolved under the action of the electrolyte, the metal lithium layer or the lithium oxide layer is in contact with the electrolyte in the electrolyte sharing system, and thus lithium ions are able to be released to supplement lithium to the high-capacity battery.

It is discovered in researches that polystyrene (PS), polymethyl methacrylate (PMMA), thermoplastic polyurethane elastomer rubber (TPU), polyacrylate resin copolymer (SMMA) and engineering plastic (ASA) are able to be well dissolved in the electrolyte and do not pollute the electrolyte, especially the polymethyl methacrylate (PMMA) may also serve as an electrolyte additive to improve the performance of the battery after being dissolved in the electrolyte, therefore in the above two forms, both the protective layer and the sealing film are made from polymethyl methacrylate.

Regarding the above two forms of the lithium rod, since the lithium rod 312 is a solid rod in the present embodiment, enough lithium ions are able to be released, the lithium supplementation section 3122 of the lithium rod 312 in the other form is of a hollow structure, so that the weight is able to be reduced to a certain extent, however, the number of lithium ions that the metal lithium layer or the lithium oxide layer may supplement has a certain difference compared with the present embodiment, thus in order to ensure a sufficient lithium ion release amount, the lithium rod structure in the present embodiment is preferred.

In the present embodiment, the first hollow member is actually an elongated hollow tube formed in a splicing mode, and the elongated hollow tube needs to be made from a conductive metal material. For a specific structure, reference is able to be made to the structures of the first hollow members in Embodiment 1 and Embodiment 2, and thus details are not described again in the present embodiment.

In the present embodiment, the liquid injection and replacement mechanism 34 uses the mode of a valve + a liquid extraction and injection device, specifically as shown in Fig. 13, a valve 341 is a manual or electric stop valve, one port of the valve communicates with the first hollow member, and the other end thereof is able to be connected with a liquid extraction and injection device 342. In use, the valve is opened, and the liquid extraction and injection device is used to inject electrolyte or a lithium supplementation additive into the electrolyte sharing system or replace the electrolyte in the electrolyte sharing system.

As shown in Fig. 14, on the basis of the above liquid injection and replacement mechanism, in order to further improve the function of the liquid injection and replacement mechanism, the valve may also be selected as a three-way valve, a first port of the three-way valve communicates with the first hollow member, a second port thereof communicates with the liquid extraction and injection device, and a third port 343 thereof is configured for communicating with a vacuumizing apparatus. In this way, in addition to a liquid injection and replacement function, a vacuumizing operation may also be performed on the electrolyte sharing system by the liquid injection and replacement mechanism, so as to ensure that the electrolyte is able to smoothly enter the electrolyte sharing system during subsequent liquid injection. In the present embodiment, the liquid extraction and injection device is able to be an electric pump.

### Embodiment 6

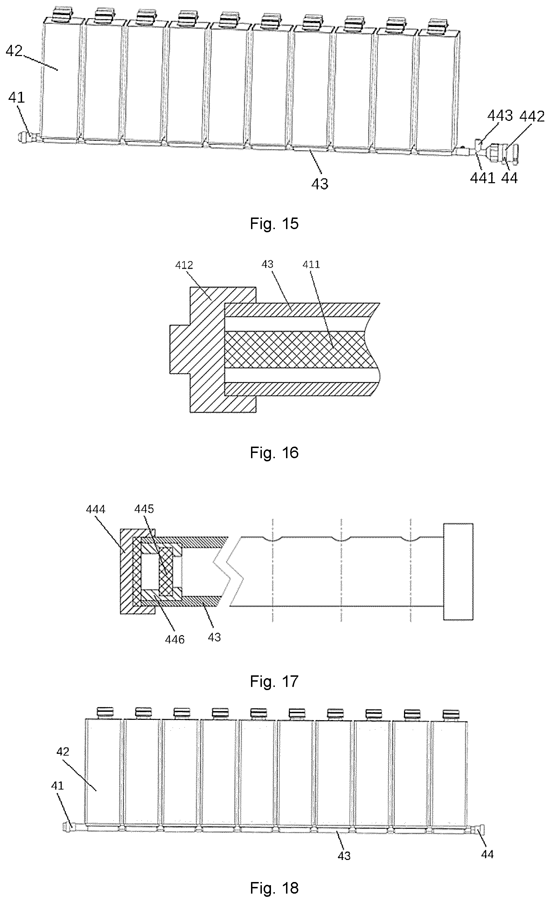

As shown in Fig. 15, a high-capacity battery in the present embodiment includes a repair apparatus and a plurality of battery cells 42; the plurality of battery cells 42 are disposed in parallel, the plurality of battery cells 42 are communicated by a first hollow member 43, and then electrolyte regions of the plurality of battery cells 42 and the first hollow member 43 form an electrolyte sharing system of the high-capacity battery; and the repair apparatus is an adsorption mechanism 41, the adsorption mechanism 41 is located in the first hollow member 43, the adsorption mechanism 41 is hermetically fixed with one end of the first hollow member 43, and the other end of the first hollow member 43 is provided with a liquid injection and replacement mechanism 44 or an explosion venting valve. When the explosion venting valve is disposed, once thermal runaway occurs in a certain battery cell in the high-capacity battery, a thermal runaway flue gas is able to be released to the outside by the first hollow member and the explosion venting valve and is treated in a single or combined mode of ignition, adsorption or cooling, thereby ensuring the safety of the high-capacity battery.

As shown in Fig. 16, the adsorption mechanism is an adsorption mandrel 411, and the adsorption mandrel 411 is at least partially located in the first hollow member 43; in order to prevent the situation in which the adsorption performance of the adsorption mandrel is affected or even the adsorption mandrel fails due to the fact that the adsorption mandrel 411 adsorbs moisture in the air when making contact with external air, in the present embodiment, an outer layer of the adsorption mandrel 411 is able to be provided with a protective layer soluble in the electrolyte. The protective layer is able to be made from the protective layer material provided in Embodiment 5, and is preferably made from polymethyl methacrylate, which will not be described in detail herein again.

The specific form of hermetically fixing the adsorption mandrel 411 with one end of the first hollow member is diversified, in the present embodiment, the adsorption mandrel 411 is able to be fixed on a sealed connection cover 412 having external threads, and the adsorption mandrel 411 with the sealed connection cover 412 is directly fixed on one end of the first hollow member 43 in a threaded connection mode during installation, and in order to ensure the sealing performance, a threaded connection position is able to be coated with a sealant.

In the present embodiment, the first hollow member 43 is actually an elongated hollow tube formed in a splicing mode, the specific structure may refer to the structures of the first hollow members in Embodiment 1 and Embodiment 2, and thus details will not be described again in the present embodiment.

As shown in Fig. 15, in the present embodiment, the liquid injection and replacement mechanism 44 uses the mode of a valve 441 + a liquid extraction and injection device 442, the valve 2441 is a manual or electric stop valve, one port of the valve communicates with the first hollow member 43, and the other end thereof is able to be connected to the liquid extraction and injection device 442. In use, the valve 211 is opened, and the the liquid extraction and injection device is used to inject electrolyte or a lithium supplementation additive into the electrolyte sharing system or replace the electrolyte in the electrolyte sharing system. On the basis of the liquid injection and replacement mechanism, in order to further improve the function of the liquid injection and replacement mechanism, the valve may also be selected as a three-way valve, a first port of the three-way valve communicates with the first hollow member 43, a second port thereof communicates with the liquid extraction and injection device 442, and a third port 443 thereof is configured for communicating with a vacuumizing apparatus. In this way, in addition to a liquid injection and replacement function, a vacuumizing operation may also be performed on the electrolyte sharing system by the liquid injection and replacement mechanism, so as to ensure that the electrolyte is able to smoothly enter the electrolyte sharing system during subsequent liquid injection. In the present embodiment, the liquid extraction and injection device is able to be an electric pump.

### Embodiment 7

The present embodiment has approximately the same structure as Embodiment 6, and differs from Embodiment 6 in that a different liquid injection and replacement mechanism 44 is used, the adsorption mandrel is a molecular sieve, and a lithiated molecular sieve is preferably used. Compared with a common molecular sieve, the lithiated molecular sieve not only basically maintains the excellent adsorption performance of the common molecular sieve, but can also greatly reduce the introduction of impurity ions Na+ in the electrolyte system, and thus is one of the most effective and most economical physical methods among methods for removing trace water from lithium ion batteries.

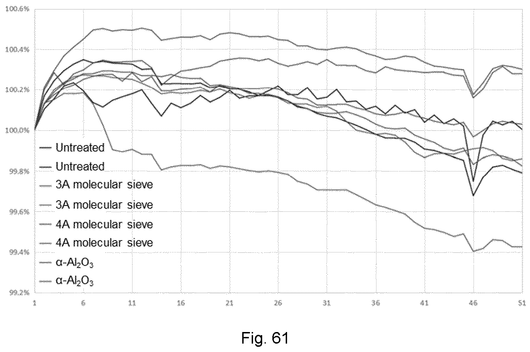

In some embodiments, the material of the adsorption mandrel is replaced with α-Al₂O₃. By comparing the adsorption mandrels made from different materials, it is discovered that α-Al₂O₃ has a better effect of improving the capacity. For specific experimental data, reference is able to be made to Fig. 61. In Fig. 61, 8 high-capacity batteries are selected as experimental samples, and "untreated" in the figure refers to a sample in which an adsorption structure for absorbing impurities in the electrolyte is not disposed in an electrolyte sharing system. "3A molecular sieve" refers to a sample in which the adsorption structure for absorbing impurities in the electrolyte is disposed in the electrolyte sharing system, and the material of the adsorption mandrel in the adsorption structure is a 3A molecular sieve. "4A molecular sieve" refers to a sample in which the adsorption structure for absorbing impurities in the electrolyte is disposed in the electrolyte sharing system, and the material of the adsorption mandrel in the adsorption structure is a 4A molecular sieve. "α-Al₂O₃" refers to a sample in which the adsorption structure for absorbing impurities in the electrolyte is disposed in the electrolyte sharing system, and the material of the adsorption mandrel in the adsorption structure is α-Al₂O₃.

In some embodiments, the adsorption structure may also be set to be a resin package disposed in the first hollow member, and the resin package includes a core layer and a cladding layer wrapped on the core layer.

The core layer is a resign containing a polar amide group 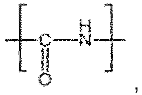 the resign containing the polar amide group includes one or more of polylaurylamide, poly-ω-aminoundecanoyl, poly(tetramethylene adipamide), polycaprolactam, and polyhexamethylene adipamide.

The cladding layer is a filter screen which the electrolyte may freely enter and exit, and in addition, the cladding layer may also prevent the resin material of the core layer from diffusing into the inner cavity of each of the plurality of battery cells to be adsorbed on a pole piece or a diaphragm, such that the performance of the battery cell is damaged. Such resin has high polarity, and is able to absorb micromolecular impurities such as H₂O, PF₅ and HF in the electrolyte, purify the electrolyte, and improve the cycle performance of the high-capacity battery.

As shown in Fig. 18, the liquid injection and replacement mechanism 44 in the present embodiment uses a combined form of a sealing cap + a rubber pad + a liquid injection needle tube, specifically as shown in Fig. 17, that is, the liquid injection and replacement mechanism 44 includes a sealing cap 444, a rubber pad 445 and a liquid injection needle tube; the sealing cap 444 is hermetically installed on an end portion of the first hollow member 43 and is configured for sealing the end portion from the outside; and the rubber pad 445 is fixedly disposed in the first hollow member 43 at a position close to the sealing cap 444, and the rubber pad 445 is able to be configured for inserting the liquid injection needle tube. The main purpose of disposing the sealing cap 444 on the liquid injection and replacement mechanism in this mode is to implement twice sealing on the first hollow member 43 together with the rubber pad 445, thereby improving the overall sealing performance to realize isolation from an external environment, meanwhile, the corrosion to the rubber pad by the external environment due to the direct contact of the rubber pad 445 with the external environment is avoided. In some other embodiments, the sealing cap 444 may also be not required.

In use, the sealing cap 444 is disassembled from the first hollow member 43, then the liquid injection needle tube is inserted into the first hollow member 43 from the rubber pad 445, and electrolyte or a lithium supplementation additive is able to be injected into the electrolyte sharing system or the electrolyte in the electrolyte sharing system is able to be replaced via the liquid injection needle tube.

In order to conveniently fix the rubber pad 445 in the first hollow member 43, in the present embodiment, a fixing ring 446 made from the same material as the first hollow member 43 is provided, the rubber pad 445 is intercalated into the fixing ring 446, and the fixing ring 446 is fixed in the first hollow member 43 by riveting or welding.

In the present embodiment, there is no need to use any electric device in the liquid injection and replacement mechanism on the first hollow member, so that the safety is higher.

### Embodiment 8

The difference from Embodiment 6 and Embodiment 7 lies in that the adsorption mechanism 41 in the present embodiment has a liquid injection and replacement function itself, so that an explosion venting valve is able to be disposed on the first hollow member, and it is not necessary to separately provide the liquid injection and replacement mechanism, so that the high-capacity battery is able to have an impurity adsorption function for the electrolyte, a liquid injection and replacement function and an explosion venting function.

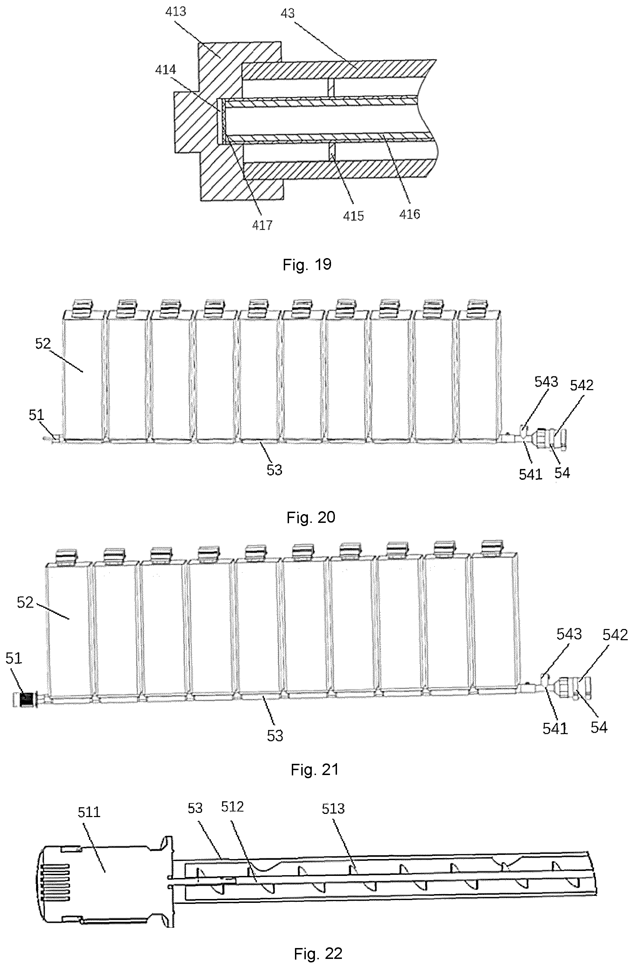

As shown in Fig. 19, in the present embodiment, one end of the first hollow member 43 is provided with an explosion venting valve, the other end thereof is provided with a sealing end cap 413 (for ease of disassembly, the sealing end cap is fixed on the first hollow member in a threaded connection mode), and a positioning blind hole 414 is formed in the sealing end cap 413; a support ring 415 is disposed in the first hollow member 43 (in the present embodiment, the support ring 415 is able to be disposed in a first hollow unit 431 or a second hollow unit 432 of any battery cell in advance); the adsorption mechanism is a double-layer adsorption tube 416, one end of the double-layer adsorption tube 416 is inserted into the positioning blind hole 414 of the sealing end cap 413, a part of the double-layer adsorption tube 416 penetrates through the support ring 415, and the other end thereof is open; an inner-layer tube of the double-layer adsorption tube 416 serves as a liquid injection channel, and an outer tube serves as an adsorption layer; and the end of the double-layer adsorption tube 416 located in the positioning blind hole 414 is provided with a rubber plug 417 for inserting a liquid injection needle tube. The same as Embodiment 6, in order to prevent the double-layer adsorption tube 416 from adsorbing moisture in the air when making contact with the external air, in the present embodiment, the outer layer of the double-layer adsorption tube is also provided with a protective layer soluble in the electrolyte, and the protective layer is preferably made from polymethyl methacrylate. In the present embodiment, the adsorption layer is made from aluminum oxide.

At work, the sealing end cap 413 is able to be disassembled at first, the liquid injection needle tube is inserted into the rubber plug 417, and the liquid injection and replacement process of the high-capacity battery is able to be realized by using the liquid injection needle tube.

During the running process of the high-capacity battery, after the electrolyte dissolves the protective layer, the adsorption layer may adsorb impurities in the electrolyte.

Meanwhile, when thermal runaway occurs in a certain battery cell in the high-capacity battery, a thermal runaway flue gas is able to be released to the outside by the first hollow member and the explosion venting valve and is treated in a single or combined mode of ignition, adsorption or cooling, thereby ensuring the safety of the high-capacity battery.

### Embodiment 9

As shown in Fig. 20, a high-capacity battery in the present embodiment includes a repair apparatus and a plurality of battery cells 52; and the plurality of battery cells 52 are disposed in parallel, the plurality of battery cells 52 are communicated by a first hollow member 53, and then electrolyte regions of the plurality of battery cells and the first hollow member 53 form an electrolyte sharing system of the high-capacity battery. The repair apparatus is a uniform mixing mechanism 51, and an ultrasonic vibration rod is selected as the uniform mixing mechanism 51 in the present embodiment.

In the present embodiment, the uniform mixing mechanism 51 is specifically an ultrasonic vibration rod, the ultrasonic vibration rod is disposed on one end of the first hollow member 53, a part of the ultrasonic vibration rod is located in the first hollow member 53, and the other end of the first hollow member 53 is able to be provided with a liquid injection and replacement mechanism 54. After being powered on, the ultrasonic vibration rod emits ultrasonic waves into the electrolyte, so that the electrolyte in the electrolyte sharing system starts to flow under the action of a vibration force, thereby achieving the purpose of uniformly mixing the electrolyte.

As shown in Fig. 20, in the present embodiment, the liquid injection and replacement mechanism 54 uses the mode of a valve + a liquid extraction and injection device, a valve 541 is a manual or electric stop valve, one port of the valve communicates with the first hollow member 53, and the other end thereof is able to be connected to a liquid extraction and injection device 542. In use, the valve is opened, and the liquid extraction and injection device is used to inject electrolyte or a lithium supplementation additive into the electrolyte sharing system or replace the electrolyte in the electrolyte sharing system. On the basis of the liquid injection and replacement mechanism, in order to further improve the function of the liquid injection and replacement mechanism, the valve may also be selected as a three-way valve, a first port of the three-way valve communicates with the first hollow member, a second port thereof communicates with the liquid extraction and injection device, and a third port 443 thereof is configured for connecting a vacuumizing apparatus. In this way, in addition to a liquid injection and replacement function, a vacuumizing operation may also be performed on the electrolyte sharing system by the liquid injection and replacement mechanism, so as to ensure that the electrolyte is able to smoothly enter the electrolyte sharing system during subsequent liquid injection. In the present embodiment, the liquid extraction and injection device is able to be an electric pump.

In the present embodiment, the first hollow member 53 is actually an elongated hollow tube formed in a splicing mode, and for a specific structure, reference is able to be made to the structures of the first hollow members in Embodiment 1 and Embodiment 2, thus details are not described again in the present embodiment.

### Embodiment 10

As shown in Fig. 21 and Fig. 22, the present embodiment has approximately the same structure as Embodiment 9, and differs from Embodiment 9 in that a different uniform mixing mechanism 51 is used, and the uniform mixing mechanism 51 is an electric stirrer in the present embodiment; and the specific structure of the electric stirrer is shown in Fig. 22, the electric stirrer includes a motor 511, a stirring shaft 512, and spiral blades 513 disposed on the stirring shaft 512. At work, the motor 511 is started, and the stirring shaft 512 may drive the spiral blades 513 to rotate to stir the electrolyte in the electrolyte sharing system, so that the electrolyte starts to flow, thereby achieving the purpose of uniformly mixing the electrolyte. It should be noted that, in order to improve the safety of the high-capacity battery, the motor in the electric stirrer is able to be replaced with a hand wheel, and the stirring shaft is able to be rotated in a manual operation mode.

When the liquid injection and replacement mechanism in Embodiment 9 is replaced with an explosion venting valve, the purpose is that once thermal runaway occurs in a certain battery cell in the high-capacity battery, a thermal runaway flue gas is able to be released to the outside by the first hollow member and the explosion venting valve and is treated in a single or combined mode of ignition, adsorption or cooling, thereby ensuring the safety of the high-capacity battery.

### Embodiment 11

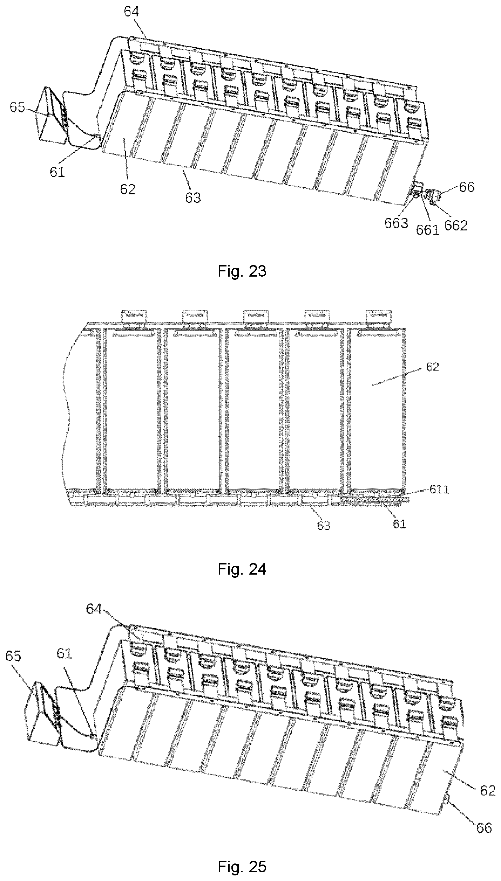

As shown in Fig. 23, a high-capacity battery in the present embodiment includes a repair apparatus and a plurality of battery cells 62; the plurality of battery cells 62 are disposed in parallel (in the present embodiment, two L-shaped connecting plates 64 are used, and the two L-shaped connecting plates 64 respectively conduct positive electrodes and negative electrodes of the plurality of battery cells, so as to realize the parallel disposition of the plurality of battery cells), the plurality of battery cells 62 are communicated by a first hollow member 63, and then electrolyte regions of the plurality of battery cells and the first hollow member 63 form an electrolyte sharing system of the high-capacity battery.

As shown in Fig. 24 and Fig. 25, in the present embodiment, the repair apparatus is a third electrode 61, the third electrode 61 is a silver rod, a sealing plug 611 is able to be disposed on the silver rod, the silver rod is hermetically fixed on one end of the first hollow member 63 by the sealing plug 611 (in order to facilitate assembly and disassembly, the connection mode between the sealing plug 611 and the first hollow member 63 is a threaded connection, and in order to ensure the sealing performance, a threaded connection position may also be coated with a sealant), a part of the silver rod is located inside the first hollow member 63, the other part of the silver rod is located outside the first hollow member 63, and a voltage source 65 is disposed between the part and a positive electrode or a negative electrode of at least one battery cell 62.

In the present embodiment, since the positive electrodes and the negative electrodes of the plurality of battery cells are conducted by using the two L-shaped connecting plates, the voltage source is electrically conducted with the two L-shaped connecting plates directly in the present embodiment. In an embodiment, in general, the high-capacity battery requires a BMS to manage the high-capacity battery, and in order to save the space, the voltage source 65 is able to be optionally integrated on the BMS. After a voltage is applied by the voltage source 65, a potential difference is generated between the silver rod and the positive electrode or the negative electrode of the battery cell 62, so that free lithium ions in the electrolyte are supplemented to each of the plurality of battery cells.

As shown in Fig. 23, in order to facilitate liquid injection of the high-capacity battery in each stage, in the present embodiment, the end of the first hollow member 63 that is away from the silver rod is provided with a liquid injection and replacement mechanism 66; the liquid injection and replacement mechanism 66 uses the mode of a valve + a liquid extraction and injection device, a valve 661 is a manual or electric stop valve, one port of the valve 661 communicates with the first hollow member 63, and the other end thereof is able to be connected with a liquid extraction and injection device 662. In use, the valve is opened, and the liquid extraction and injection device is used to inject electrolyte or a lithium supplementation additive into the electrolyte sharing system or replace the electrolyte in the electrolyte sharing system. On the basis of the above liquid injection and replacement mechanism, in order to further improve the function of the liquid injection and replacement mechanism 66, the valve 661 may also be selected as a three-way valve, a first port of the three-way valve communicates with the first hollow member, a second port thereof communicates with the liquid extraction and injection device, and a third port 663 thereof communicates with a vacuumizing apparatus. In this way, in addition to a liquid injection and replacement function, a vacuumizing operation may also be performed on the electrolyte sharing system by the liquid injection and replacement mechanism, so as to ensure that the electrolyte is able to smoothly enter the electrolyte sharing system during subsequent liquid injection. In the present embodiment, the liquid extraction and injection device is able to be an electric pump.

In the present embodiment, the first hollow member 63 is actually an elongated hollow tube formed in a splicing mode, the specific structure may refer to the structures of the first hollow members in Embodiment 1 and Embodiment 2, and thus details will not be described again in the present embodiment.

### Embodiment 12

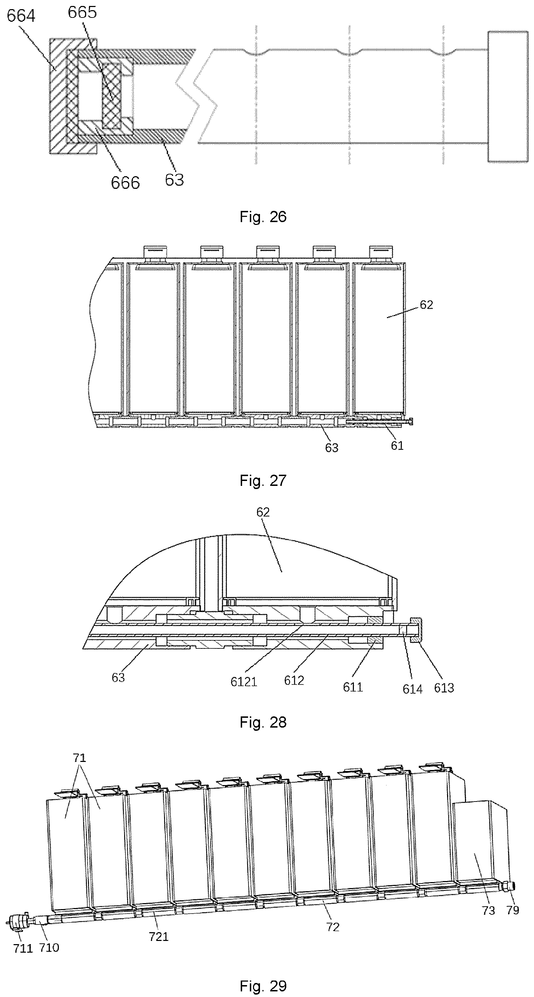

As shown in Fig. 26, the present embodiment has approximately the same structure as Embodiment 11, and differs from Embodiment 11 in that a different liquid injection and replacement mechanism 66 is used, the liquid injection and replacement mechanism 66 in the present embodiment uses a combined form of a sealing cap + a rubber pad + a liquid injection needle tube, that is, the liquid injection and replacement mechanism 66 includes a sealing cap 664, a rubber pad 665 and a liquid injection needle tube; the sealing cap 664 is hermetically installed on an end portion of the first hollow member 63 and is configured for sealing the end portion from the outside; and the rubber pad 665 is fixedly disposed in the first hollow member 63 at a position close to the sealing cap 664, and the rubber pad 665 is able to be configured for inserting the liquid injection needle tube. In use, the sealing cap 664 is disassembled from the first hollow member 63, and then the liquid injection needle tube is inserted into the first hollow member 63 from the rubber pad 665, and electrolyte or a lithium supplementation additive is able to be injected into the electrolyte sharing system or the electrolyte in the electrolyte sharing system is able to be replaced via the liquid injection needle tube. In order to conveniently fix the rubber pad in the first hollow member, in the present embodiment, a fixing ring 666 made from the same material as the first hollow member 63 is provided, the rubber pad 665 is intercalated into the fixing ring 666, and the fixing ring 666 is fixed in the first hollow member 63 by riveting or welding.

### Embodiment 13

As shown in Fig. 27 and Fig. 28, the difference with the high-capacity batteries in Embodiment 11 and Embodiment 12 lies in that the liquid injection and replacement function is integrated on the third electrode 61 for implementation, and it is not necessary to separately dispose the liquid injection and replacement mechanism on the first hollow member. The third electrode 61 includes a fifth hollow member 612, a sealing end cap 613, and a rubber stopper 614; the fifth hollow member is an elongated hollow tube made of silver; the fifth hollow member 612 is hermetically connected with a port of one end of the first hollow member 63 (in the present embodiment, the sealing plug 611 is also hermetically fixed on the first hollow member), a part of the fifth hollow member 612 is located in the first hollow member 63, this part is provided with at least one through hole 6121 for liquid injection and replacement, and the other part of the fifth hollow member 612 is located outside the first hollow member; the sealing end cap 613 is disposed at a port of the other part of the fifth hollow member 612 (in order to facilitate the disassembly of the sealing end cap 613, in the present embodiment, the sealing end cap 613 is in threaded connection with the port of the fifth hollow member, and in order to further ensure the sealing performance, the threaded connection position is able to be coated with a sealant) for isolating the fifth hollow member 612 from the outside; and the rubber stopper 614 is fixedly disposed in the fifth hollow member 612 and is close to one side of the sealing end cap 613, and is configured for inserting the liquid injection needle tube. In order to conveniently fix the rubber pad in the fifth hollow member, in the present embodiment, a support ring made from the same material as the first hollow member 63 is provided, the rubber stopper 614 is intercalated into the support ring, and the support ring is fixed in the fifth hollow member 612 by riveting or welding.

In the present embodiment, in order to facilitate the electric conduction between the third electrode 61 and the voltage source 65, the sealing end cap 613 is able to be set to be a conductive metal member, and by disposing a connecting wire on the sealing end cap 613, the voltage source 65 may apply a voltage to the third electrode subsequently. Of course, in the present embodiment, the above purpose may also be achieved by directly disposing a connecting wire between the fifth hollow member 612 and the voltage source 65.

In order to improve the liquid injection and replacement effect and to ensure the uniformity of the electrolyte in each of the plurality of battery cells in the electrolyte sharing system during the liquid injection and replacement process, the same number of through holes 6121 as the plurality of battery cells may also be formed in a side wall of the fifth hollow member 612 that is located in the first hollow member 63, meanwhile one through hole 6121 is at least correspondingly formed in the position of each of the plurality of battery cells 62, a plurality of second through holes are formed in a tube wall of the liquid injection needle tube, and the plurality of second through holes are in one-to-one correspondence with the plurality of through holes. After the liquid injection needle tube is inserted into the fifth hollow member, in the liquid injection and replacement process, the electrolyte is able to be ejected from the second through holes in the liquid injection needle tube to the through holes corresponding to the fifth hollow member, and finally enters the plurality of battery cells from the openings of the plurality of battery cells, or the electrolyte in the plurality of battery cells is sequentially extracted from the openings of the plurality of battery cells, the through holes and the second through holes.

In the present embodiment, since the liquid injection and replacement function is integrated on the third electrode 61, the end of the first hollow member 63 that is away from the third electrode 61 may also be used, the end portion is provided with an explosion venting valve, and the purpose of disposing the explosion venting valve lies in that: once thermal runaway occurs in a certain battery cell in the high-capacity battery, a thermal runaway flue gas is able to be released to the outside by the hollow member and the explosion venting valve and is treated in a single or combined mode of ignition, adsorption or cooling, thereby ensuring the safety of the high-capacity battery.

Finally, it should be noted that the so-called opening of the battery cell in the above embodiments is formed before or during the process of manufacturing of the high-capacity battery. Specifically, when the battery cell is used alone, a sealing mechanism is required to seal the opening, so as to ensure that the inner cavity of the battery cell is isolated from the external environment. Meanwhile, the sealing mechanism also needs to be opened before or during the process of manufacturing of the high-capacity battery.

The sealing mechanism may use a dissolution sheet made from a material soluble in the electrolyte, the dissolution sheet may also be made from polymethyl methacrylate, after the electrolyte is injected into the first hollow member, the dissolution sheet is able to be dissolved under the action of the electrolyte, the openings on the plurality of battery cells are opened, therefore the communication between the plurality of battery cells is realized, and the establishment of the electrolyte sharing system of the high-capacity battery is completed.

The sealing mechanism may also be a sealing sheet opened by an external force, before the electrolyte is injected into the first hollow member, the sealing sheets on the plurality of battery cells are able to be damaged by a special tool, or the sealing sheets are disassembled from the plurality of battery cells, the openings in the plurality of battery cells are opened, therefore the communication between the plurality of battery cells is achieved, and then the electrolyte is injected into the first hollow member, so that the establishment of the electrolyte sharing system of the high-capacity battery is completed.

In the above embodiments, the repair apparatus is disposed on the electrolyte sharing system (i.e., the first hollow member), and this mode has certain requirements for the structure and installation of the repair apparatus. On this basis, in the present invention, an electrolyte chamber is able to be added to the high-capacity battery with the electrolyte sharing system, and the repair apparatus is connected with the electrolyte chamber, so that the installation of the repair apparatus is more reliable. Meanwhile, the electrolyte chamber may also inject electrolyte into the electrolyte sharing system of the high-capacity battery, so that the electrolyte of the high-capacity battery is always kept within proper range, thereby further improving the performance of the high-capacity battery, and avoiding affecting the performance of the high-capacity battery by excessively little electrolyte.

### Embodiment 14

As shown in Fig. 29, a high-capacity battery provided in the present embodiment includes a plurality of battery cells 71 connected in parallel, and an electrolyte chamber 73, wherein electrolyte regions of the plurality of battery cells 71 communicate with each other to form an electrolyte sharing system 72, the electrolyte sharing system 72 includes a first hollow member 721, the first hollow member 721 is a structure having a cavity, for example, a shared tube or the like, and the first hollow member 721 communicates with inner cavities of the plurality of battery cells 71 to form an electrolyte sharing space, and in this space, the components, environments, temperatures, ion exchange and the like of the electrolyte of the plurality of battery cells 71 are generally maintained to be dynamically consistent, thereby achieving an ideal state in which the electrolyte of the plurality of battery cells 71 is shared and the working states are substantially the same.

In an embodiment, an explosion venting component is able to be disposed on the first hollow member 721, and when thermal runaway occurs in a certain battery cell 71, a high temperature and a high pressure are directionally discharged by the first hollow member 721, and the explosion venting component is able to be an explosion venting valve 79 or an explosion venting film disposed in the first hollow member 721. Meanwhile, an exhaust valve 710 or a vacuumizing device 711 may also be disposed on the first hollow member 721, and is configured for discharging gases in the high-capacity battery during liquid injection and liquid replacement, so as to facilitate subsequent liquid injection and liquid replacement.

In the present embodiment, the electrolyte chamber 73 is connected with the electrolyte sharing system 72 for injecting electrolyte into the electrolyte sharing system 72. Electrolyte is preset in the electrolyte chamber 73, and the electrolyte in the electrolyte chamber 73 communicates with the electrolyte in the electrolyte sharing system 72. When the electrolyte in the electrolyte sharing system 72 is consumed, exhaust or vacuumizing is able to be performed by an exhaust apparatus (e.g., the exhaust valve 710) or a gas extraction apparatus disposed on the first hollow member 721 or a battery shell, to generate a pressure difference between the first hollow member 721 or the battery shell, the electrolyte in the electrolyte chamber 73 enters the electrolyte sharing system 72 by a gravity or a negative pressure, at this time, the electrolyte in the electrolyte chamber 73 is able to be supplemented into the electrolyte sharing system 72, so as to ensure that each of the plurality of battery cells is in a good state in which the electrolyte is sufficient, and this mode greatly prolongs the service life of the high-capacity battery, improves the charging and discharging efficiency, and avoids affecting the performance of the high-capacity battery by excessively light electrolyte.

In the mode of supplementing the electrolyte by the gravity in the present embodiment, certain requirements are proposed for the installation height of the electrolyte chamber and a preset electrolyte amount, in order to enable the electrolyte in the electrolyte chamber 73 to enter the electrolyte sharing system 72 as much as possible, the installation height of the electrolyte chamber 73 is greater than the installation height of the electrolyte sharing system 72, and the preset electrolyte amount in the electrolyte chamber meets the requirement.

### Embodiment 15

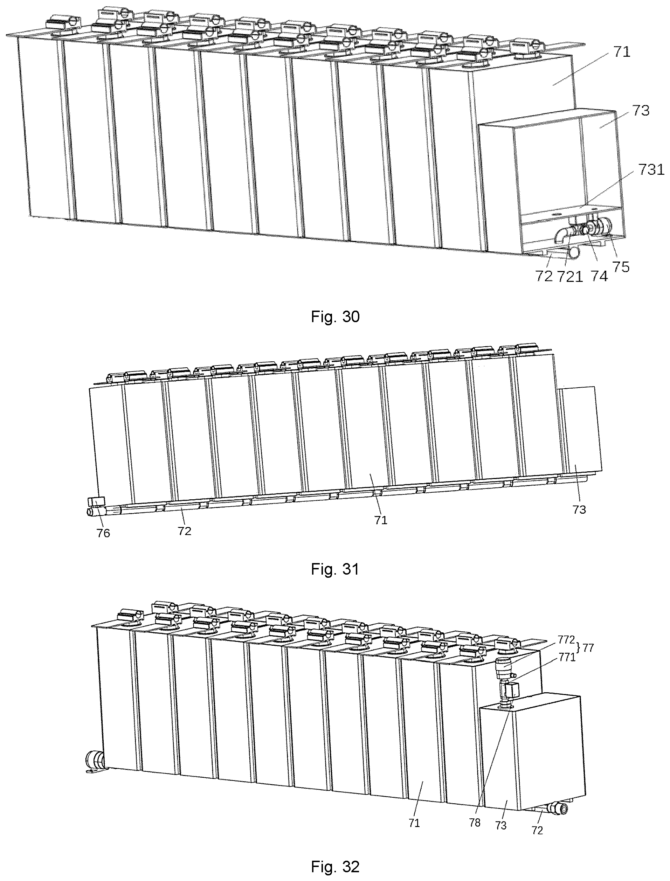

As shown in Fig. 30 and Fig. 31, a high-capacity battery provided in the present embodiment includes a plurality of battery cells 71 connected in parallel, and an electrolyte chamber 73, wherein electrolyte regions of the plurality of battery cells 71 communicate with each other to form an electrolyte sharing system 72, the electrolyte sharing system 72 includes a first hollow member 721, an inner cavity of the first hollow member 721 communicates with inner cavities of the plurality of battery cells 71, and the electrolyte chamber 73 is connected with the first hollow member 721.

In the present embodiment, a control valve 74 is disposed between an inner cavity of the electrolyte chamber 73 and the inner cavity of the first hollow member, and the control valve 74 may regularly supplement electrolyte in the electrolyte sharing system 72. Electrolyte is able to be preset in the electrolyte chamber 73 or not, the control valve 74 is a normally closed valve, which isolates the cavity of the electrolyte sharing system 72 from the cavity of the electrolyte chamber 73, when the electrolyte is preset in the electrolyte chamber 73, the electrolyte sharing system 72 is exhausted first, then the control valve 74 is opened to supplement the electrolyte in the electrolyte chamber 73 into the electrolyte sharing system 72 by gravity (at this time, it is required that the installation height of the electrolyte chamber 73 is relatively high), when the electrolyte is not set, electrolyte is first added into the electrolyte chamber 73, then the electrolyte sharing system 72 is exhausted, and the control valve 74 is then opened to supplement the electrolyte in the electrolyte chamber 73 into the electrolyte sharing system 72 by gravity.

Since quantitative supplementation is not able to be achieved when the electrolyte is supplemented by gravity, at this time, an active liquid supplementation apparatus 75 is able to be added between the inner cavity of the electrolyte chamber 73 and the inner cavity of the first hollow member, and the active liquid supplementation apparatus 75 actively and quantitatively injects the electrolyte in the electrolyte chamber 73 into the electrolyte sharing system 72. The active liquid supplementation apparatus 75 is able to be an apparatus having different structural forms, as long as the electrolyte in the electrolyte chamber 73 is able to be actively conveyed to the electrolyte sharing system 72, for example, a liquid extraction pump, or the like. The active liquid supplementation apparatus 75 is able to be disposed separately, and may also be disposed together with the control valve 74, and when the active liquid supplementation apparatus 75 is disposed separately, the liquid extraction pump actively injects the electrolyte in the electrolyte chamber 73 into the electrolyte sharing system 72. Or, the control valve 74 is opened, and the liquid extraction pump actively injects the electrolyte in the electrolyte chamber 73 into the electrolyte sharing system 72.

The liquid extraction pump and the control valve 74 are able to be installed in a built-in mode, and may also be installed in an external mode. In the case of built-in installation, one end of the first hollow member 721 extends into the electrolyte chamber 73, and the liquid extraction pump and/or the control valve 74 is disposed on the first hollow member in the electrolyte chamber 73. In the case of external installation, one end of the first hollow member 721 is directly connected with a side wall of the electrolyte chamber 73, and the liquid extraction pump and/or the control valve 74 is disposed on the first hollow member 721 outside the electrolyte chamber 73. The external installation has a risk of leakage since a joint is outside the electrolyte chamber 73, and the built-in installation mode may avoid the risk. The built-in installation may also have a plurality of installation modes, for example, the electrolyte chamber 73 is able to be divided into two cavities by a partition plate 731, an upper cavity is configured for filling the electrolyte, a lower cavity is configured for installing the liquid extraction pump and the control valve 74, and one end of the first hollow member 721 directly penetrates through the lower cavity to communicate with an inner cavity of the upper cavity; as another example, there is only one cavity in the electrolyte chamber 73, the length of the first hollow member 721 extending to the electrolyte chamber 73 is moderate, the liquid extraction pump and the control valve 74 are disposed on the first hollow member 721 extending into the electrolyte chamber 73, and at this time, the liquid extraction pump and the control valve 74 is able to be immersed in the electrolyte.

As shown in Fig. 31, in addition, in order to prevent affecting a pressure in the battery by excessive filling of the electrolyte in the electrolyte sharing system 72, a pressure measurement apparatus 76 is able to be disposed on the first hollow member 721 to monitor the pressure in the electrolyte sharing system 72, so as to prevent the generation of potential safety hazards due to the generation of a high pressure in the plurality of battery cells 71 resulting from the excessive filling of the electrolyte.

### Embodiment 16

On the basis of Embodiment 14 and Embodiment 15, the high-capacity battery in the present embodiment is additionally provided with a liquid injection mechanism, and the liquid injection mechanism is configured for injecting electrolyte into the electrolyte chamber 73 or replacing the electrolyte in the electrolyte chamber 73 in a liquid injection and extraction mode.

As shown in Fig. 32, in the present embodiment, the liquid injection mechanism 77 is specifically a liquid injection valve 771 and a liquid injection pump 772, the liquid injection valve 771 is a three-way valve, a first port of the three-way valve communicates with the electrolyte sharing system 72, a second port thereof communicates with the liquid injection pump 772, a third port thereof is connected with a vacuumizing apparatus 78, when electrolyte is supplemented, the liquid injection valve 771 is opened, a vacuumizing device 711 is connected, vacuumizing is able to be first performed on the electrolyte chamber 73 and the electrolyte sharing system 72 by the vacuumizing device, and then electrolyte in an external liquid storage apparatus is supplemented into the electrolyte chamber 73 by the liquid injection valve 771 and the liquid injection pump 772. The above vacuumizing and electrolyte injection operations are repeated for multiple times until the gas in each of the plurality of battery cells 71 is completely extracted, and the electrolyte chamber 73 is also filled to a liquid level of about 70%.

After the high-capacity battery is used for a long time, its performance may not meet the requirements, and at this time, the performance of the high-capacity battery is able to be improved by replacing the electrolyte. The electrolyte is able to be replaced in the following mode: the liquid injection valve 771 is opened, the vacuumizing apparatus 78 is connected to extract the electrolyte outwards, the electrolyte in the electrolyte sharing system 72 and the electrolyte chamber 73 is discharged into a specified container by the liquid injection valve 771 and the liquid injection pump 772 until a certain negative pressure is formed, the operation is stopped, the liquid injection valve 771 is connected with the external liquid storage apparatus, and the electrolyte in the external liquid storage apparatus is supplemented into the electrolyte chamber 73. In order to completely replace the old electrolyte in the high-capacity battery, after the certain negative pressure is formed, the operation is stopped, nitrogen is injected into the inner cavity of the battery, so as to achieve an internal pressure balance. The above liquid extraction and nitrogen adding processes are repeated for multiple times until the electrolyte in the battery is completely extracted. Then, the liquid injection valve 771 is connected with the external liquid storage apparatus, and the electrolyte in the external liquid storage apparatus is supplemented into the electrolyte chamber 73.

### Embodiment 17

On the basis of Embodiment 14 and Embodiment 15, the high-capacity battery in the present embodiment is additionally provided with a liquid injection mechanism, and the electrolyte injection mechanism adds into or replaces the electrolyte in the electrolyte chamber. An opening is formed in a side wall of the electrolyte chamber, and a drain valve is disposed at the bottom of the electrolyte chamber. The liquid injection mechanism is a sealing rubber pad disposed on the electrolyte chamber for sealing the opening, meanwhile an end cap is further disposed on an outer side of the sealing rubber pad, the end cap is able to be hinged to the side wall of the electrolyte chamber, and the sealing rubber pad is able to be configured for inserting a liquid injection needle tube. During liquid injection, the end cap is opened, one end of the liquid injection needle tube filled with electrolyte is inserted into the sealing rubber pad, the electrolyte injection needle tube injects the electrolyte into the electrolyte chamber, after the liquid injection is finished, since the sealing rubber pad has certain plasticity, micropores generated when the liquid injection needle tube is inserted may be extruded to realize sealing, and in order to further ensure the sealing performance, the micropores generated on the sealing rubber pad may also be sealed by the end cap. During liquid replacement, the electrolyte is discharged into a specified container by the drain valve at the bottom of the electrolyte chamber or the valve disposed on the first hollow member, then new electrolyte is added into the electrolyte chamber by the the liquid injection needle tube, and after the liquid injection is finished, the end cap seals the sealing rubber pad on the electrolyte chamber.

### Embodiment 18

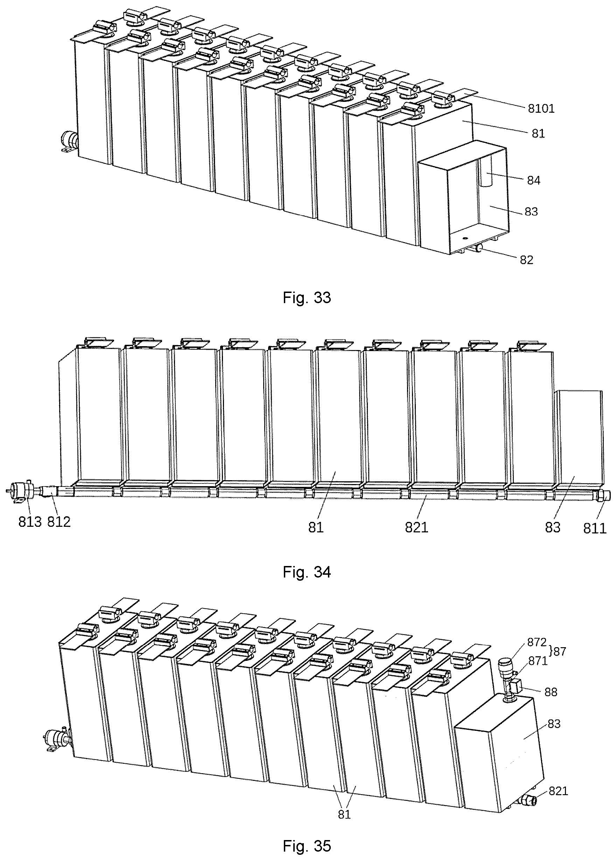

As shown in Fig. 33 and Fig. 34, a high-capacity battery provided in the present embodiment includes an electrolyte chamber 83, a lithium source 84, and a plurality of battery cells 81 connected in parallel, wherein electrolyte regions of the plurality of battery cells 81 communicate with each other to form an electrolyte sharing system 82. The electrolyte sharing system 82 includes a first hollow member 821, the first hollow member 821 is a structure having a cavity, for example, a shared tube or the like, and the first hollow member 821 communicates with inner cavities of the plurality of battery cells 81 to form an electrolyte sharing space, and in this space, the components, environments, temperatures, ion exchange and the like of the electrolyte of the plurality of battery cells 81 are generally maintained to be dynamically consistent, thereby achieving an ideal state in which the electrolyte of the plurality of battery cells 81 is shared and the working states are substantially the same. Meanwhile, an explosion venting component is able to be disposed on the first hollow member 821, and when thermal runaway occurs in a certain battery cell 81, a high-temperature and high-pressure substance is directionally discharged by the first hollow member 821, and the explosion venting component is able to be an explosion venting valve 811 or an explosion venting film disposed in the first hollow member 821. In an embodiment, an exhaust apparatus 812 or a vacuumizing device 813 may also be disposed on the first hollow member 821, and is configured for discharging gases in the high-capacity battery during liquid injection and liquid replacement, so as to facilitate subsequent liquid injection and liquid replacement.

In the present embodiment, the electrolyte in the electrolyte chamber 83 communicates with the electrolyte in the electrolyte sharing system 82, and the lithium source 84 is disposed in the electrolyte chamber 83 and is at least partially soaked in the electrolyte. Meanwhile, the lithium source 84 is conducted with a positive electrode 8101 of at least one battery cell 81, so that lithium ions in the lithium source 84 are released into the electrolyte. Since the shell of each of the plurality of battery cells 81 is electrically conducted with the positive electrode after the high-capacity battery is powered on, the electrolyte chamber 83 and the first hollow member 821 is able to be electrically connected with the shell of the battery cell 81, that is, the electrolyte chamber 83, the first hollow member 821 and the shell of the battery cell 81 are all made from a conductive material, and then the lithium source 84 is electrically connected with a side wall of the electrolyte chamber 83, so that the lithium source 84 is conducted with the positive electrode of at least one battery cell 81. In this way, the installation of the lithium source 84 is relatively simple.

After the high-capacity battery in the present embodiment is powered on, since the shell of each of the plurality of battery cells 81 is electrically conducted with the positive electrode, the lithium source 84 is electrically conducted with the positive electrode of at least one battery cell 81, and the lithium ions released by the lithium source 84 are intercalated into a negative electrode material of each of the plurality of battery cells 81, thereby compensating for lithium ions consumed when a solid electrolyte interphase (SEI) film is formed on the surface of the negative electrode of each of the plurality of battery cells 81. With the continuous work of the high-capacity battery, the lithium source 84 may continuously perform lithium supplementation repair on the high-capacity battery, thereby prolonging the service life of cyclic charging and discharging of the capacity battery.

The lithium source 84 in the present embodiment is a lithium metal or a lithium oxide, since the lithium metal is very active, in order to prevent the lithium rod from reacting with the air before being disposed in the electrolyte sharing system 82, it is also necessary to ensure that the lithium rod may release lithium ions after being disposed in the electrolyte sharing system 82. On this basis, an outer side of the lithium source 84 is provided with a protective layer soluble in the electrolyte, and the protective layer protects the lithium source 84 before being installed in the high-capacity battery, so as to prevent pollution or failure of the lithium source 84 in the early stage of installation. In the running process of the high-capacity battery, the protective layer isolates the lithium source 84 from the electrolyte in the electrolyte chamber 83 in the early stage, after a certain period of time, the protective layer is dissolved under the soaking of the electrolyte, and after the electrolyte dissolves the protective layer, the lithium source 84 is exposed in the electrolyte to start to release lithium ions, so as to supplement lithium to the high-capacity battery. It is discovered in researches that polystyrene (PS), polymethyl methacrylate (PMMA), thermoplastic polyurethane elastomer rubber (TPU), polyacrylate resin copolymer (SMMA) and engineering plastic (ASA) are able to be well dissolved in the electrolyte and do not pollute the electrolyte, especially the polymethyl methacrylate (PMMA) may also serve as an electrolyte additive to improve the performance of the battery after being dissolved in the electrolyte, therefore the protective layer is preferably made from polymethyl methacrylate in the present embodiment.

The lithium source 84 is specifically disposed on an inner wall of the electrolyte chamber 83, and specifically is able to be fixedly disposed on the inner wall of the electrolyte chamber 83, for example, being welded or integrally disposed, and the like; and the lithium source 84 may also be detachably disposed on the inner wall of the electrolyte chamber, for example, by threaded connection or clamping, and the like, the sealing performance needs to be noted during the threaded connection or clamping, a sealing gasket is added or a sealant is coated, and the like, and if a part of the lithium source 84 is exposed from the electrolyte chamber 83, it is necessary to provide a sealing cover or the like to protect the exposed lithium source 84.

### Embodiment 19

As shown in Fig. 35, on the basis of Embodiment 18, a liquid injection function is added to the lithium source 84 in the present embodiment, specifically, the lithium source 84 in the present embodiment is of a hollow structure, at least one end of the hollow structure is provided with a sealing portion, and the hollow structure enables the lithium source 84 to meet the requirement of light weight. Meanwhile, the sealing portion is provided with a liquid injection mechanism 87, so that the lithium source 84 not only has a lithium supplementation function, but also has a liquid injection and replacement function. The liquid injection structure has the following advantages: 1, when the high-capacity battery is manufactured, electrolyte is able to be injected into the electrolyte to form an electrolyte sharing system; 2, after the high-capacity battery is formed, electrolyte or a lithium supplementation additive is able to be added into the high-capacity battery again, so that lithium ions in the electrolyte consumed by an SEI film during formation is able to be compensated, thereby solving the problem of the SEI film consuming irreversible lithium to a certain extent; and 3, after the high-capacity battery runs for a certain number of cycles, the electrolyte of the electrolyte sharing system 82 is able to be regularly supplemented and replaced, thereby further improving the cycle performance of the high-capacity battery.

In the present embodiment, the sealing portion is able to be a sealing film, and the sealing film is able to be made from a material similar to that of the protective layer for sealing the hollow structure, or a sealing film made from other materials may also be used, when electrolyte is added, the sealing portion is dissolved by the electrolyte, and then the electrolyte is injected, at this time, the hollow structure is of a multi-layer tube structure, an inner-layer tube thereof may serve as a liquid injection channel, an intermediate tube serves as a lithium layer, and an outer-layer tube serves as a protective layer soluble in the electrolyte. The liquid injection mechanism 87 is connected with the hollow structure and is configured for adding electrolyte into the electrolyte chamber 83. The liquid injection mechanism 87 is specifically a liquid injection valve 871 and a liquid injection pump 872, the liquid injection valve 871 is a three-way valve, a first port of the three-way valve communicates with an inner cavity of the hollow structure, a second port thereof communicates with the liquid injection pump 872, and a third port thereof is connected with a vacuumizing apparatus 88. When the electrolyte is supplemented, the liquid injection valve 871 is opened, a small amount of electrolyte is added to dissolve the sealing film, or the sealing film is punctured, then a vacuumizing device 813 is connected, vacuumizing is first performed on the electrolyte chamber 83 and the electrolyte sharing system 82 by the vacuumizing device, and then electrolyte in an external liquid storage apparatus is supplemented into the electrolyte chamber 83 via the liquid injection valve 871 and the liquid injection pump 872. After the electrolyte is supplemented, the liquid injection valve 871 is closed, so that the interior of the electrolyte chamber 83 is isolated from the external environment.

In an embodiment, liquid injection mechanisms in other structural forms may also be used, for example, an opening is formed in a side wall of the electrolyte chamber, the sealing portion is a sealing rubber pad, and the liquid injection mechanism is a liquid injection needle tube. During liquid injection, the liquid injection needle tube injects electrolyte into the electrolyte chamber for liquid injection.

### Embodiment 20

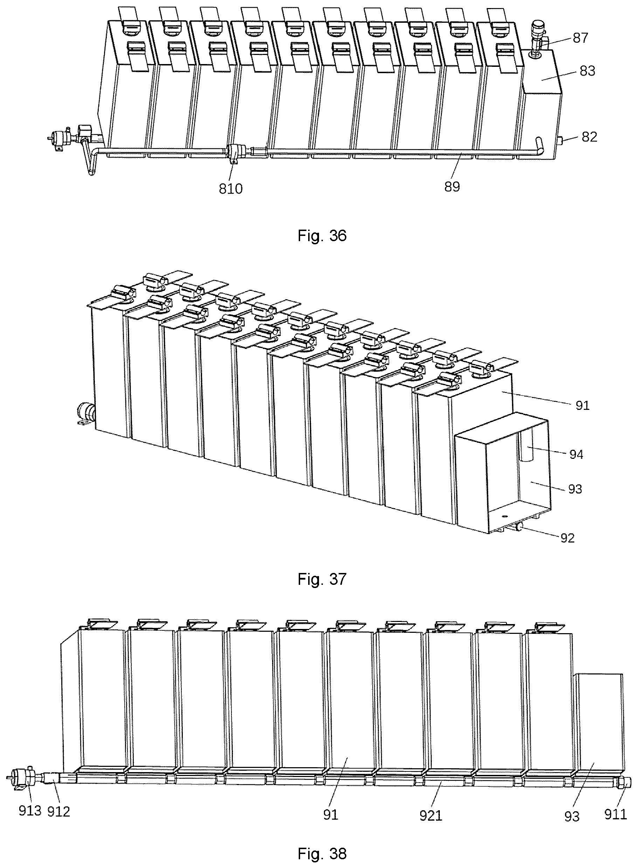

As shown in Fig. 36, on the basis of Embodiment 18 or Embodiment 19, a circulation pipe 89 and a circulation pump 810 may also be added between the electrolyte chamber 83 and the electrolyte sharing system 82, one end of the circulation pipe 89 communicates with the inner cavities of the plurality of battery cells 81, and the other end thereof communicates with the electrolyte chamber 83, so that the circulation pipe 89, the plurality of battery cells 81, the electrolyte chamber 83 and the electrolyte in the electrolyte sharing system 82 form a liquid circulation channel, and the circulation pump 810 provides power for the circulation of the electrolyte in the circulation pipe 89, the plurality of battery cells 81, the electrolyte chamber 83 and the electrolyte sharing system 82. At this time, electrolyte circulation is able to be performed while lithium supplementation is performed on the electrolyte, so that the electrolyte that has been subjected to the lithium supplementation is filled in the plurality of battery cells 81 of the entire high-capacity battery.

### Embodiment 21

As shown in Fig. 37 and Fig. 38, a high-capacity battery provided in the present embodiment includes a plurality of battery cells 91 connected in parallel, an electrolyte chamber 93, and an adsorption mechanism 94, wherein electrolyte regions of the plurality of battery cells 91 communicate with each other to form an electrolyte sharing system 92. In the present embodiment, the electrolyte sharing system 92 includes a first hollow member 921, the first hollow member 921 is a structure having a cavity, for example, a shared tube or the like, and the first hollow member 921 communicates with inner cavities of the plurality of battery cells 91 to form an electrolyte sharing space, and in this space, the components, environments, temperatures, ion exchange and the like of the electrolyte of the plurality of battery cells 91 are generally maintained to be dynamically consistent, thereby achieving an ideal state in which the electrolyte of the plurality of battery cells 91 is shared and the working states are substantially the same. Meanwhile, an explosion venting component is able to be disposed on the first hollow member 921, and when thermal runaway occurs in a certain battery cell 91, a high-temperature and high-pressure substance is directionally discharged by the first hollow member 921, and the explosion venting component is able to be an explosion venting valve 911 or an explosion venting film disposed in the first hollow member 921. In an embodiment, an exhaust apparatus 912 or a vacuumizing device 913 may also be disposed on the first hollow member 921, and is configured for discharging gases in the high-capacity battery during liquid injection and liquid replacement, so as to facilitate subsequent liquid injection and liquid replacement.

In the present embodiment, the electrolyte in the electrolyte chamber 93 communicates with the electrolyte in the electrolyte sharing system 92, the adsorption mechanism 94 is disposed in the electrolyte chamber 93, and specifically may use a molecular sieve or aluminum oxide (wherein the aluminum oxide is preferably α-Al₂O₃) or the like for adsorbing and treating impurities in the electrolyte, so as to improve the performance of the high-capacity battery and prolong the cycle life of the high-capacity battery. The adsorption mechanism 94 performs continuous adsorption treatment on the communicated electrolyte, so that the electrolyte that has been subjected to the adsorption treatment meets the requirement of high performance of the high-capacity battery. The adsorption mechanism 94 is an adsorption rod or an adsorption layer, is disposed on an inner wall of the electrolyte chamber 93, and is able to be specifically fixedly disposed on the inner wall of the electrolyte chamber 93, for example, being welded or integrally disposed, and the like; and the adsorption mechanism 94 may also be detachably disposed on the inner wall of the electrolyte chamber, for example, by threaded connection or clamping, and the like, the sealing performance needs to be noted during the threaded connection or clamping, and a sealing gasket is added or a sealant is coated, etc.

In an embodiment, an outer side of the adsorption mechanism 94 is provided with a protective layer soluble in the electrolyte, and the protective layer protects the adsorption mechanism 94 before being installed in the high-capacity battery, so as to prevent pollution or failure of the adsorption mechanism 94 in the early stage of installation. In the running process of the high-capacity battery, after the electrolyte dissolves the protective layer, the adsorption layer may adsorb impurities in the electrolyte. It is discovered in researches that polystyrene (PS), polymethyl methacrylate (PMMA), thermoplastic polyurethane elastomer rubber (TPU), polyacrylate resin copolymer (SMMA) and engineering plastic (ASA) are able to be well dissolved in the electrolyte and do not pollute the electrolyte, especially the polymethyl methacrylate (PMMA) may also serve as an electrolyte additive to improve the performance of the battery after being dissolved in the electrolyte, therefore the protective layer is preferably made from polymethyl methacrylate in the present embodiment.

### Embodiment 22

The adsorption in Embodiment 21 is static adsorption, the static adsorption may adsorb a certain amount of electrolyte in the electrolyte chamber 93 and the electrolyte sharing system 92. However, with the long-time charging and discharging of the high-capacity battery, the adsorption effect is gradually weakened. On this basis, the present embodiment provides another high-capacity battery.

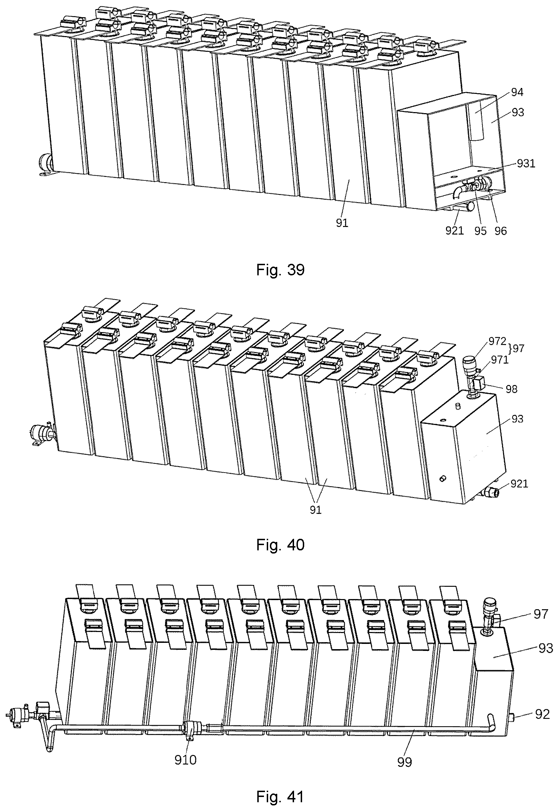

As shown in Fig. 39, the high-capacity battery provided in the present embodiment includes a plurality of battery cells 91 connected in parallel, an electrolyte chamber 93, and an adsorption mechanism 94, wherein electrolyte regions of the plurality of battery cells 91 communicate with each other to form an electrolyte sharing system 92. In the present embodiment, the electrolyte sharing system 92 includes a first hollow member 921, the first hollow member 921 is a structure having a cavity, for example, a shared tube or the like, and the first hollow member 921 communicates with inner cavities of the plurality of battery cells 91 to form an electrolyte sharing space.

In the present embodiment, a control valve 95 and a liquid extraction pump 96 are disposed between an inner cavity of the electrolyte chamber 93 and an inner cavity of the first hollow member 921, and the control valve 95 is a normally closed valve, which isolates the cavity of the electrolyte sharing system 92 from the cavity of the electrolyte chamber 93. After the control valve 95 and the liquid extraction pump 96 are disposed, the electrolyte chamber 93 and the electrolyte sharing system 92 are two independent cavities, electrolyte is able to be not preset in the electrolyte chamber, when it is necessary to adsorb the electrolyte, the electrolyte in the first hollow member 921 is able to be extracted into the electrolyte chamber 93, an adsorption treatment is performed by the adsorption mechanism 94 disposed in the electrolyte chamber 93, the adsorption mechanism 94 may specifically use a molecular sieve, aluminum oxide and the like, and then the electrolyte that has been subjected to the adsorption treatment is returned to the electrolyte sharing system 92. In this way, the adsorption treatment is able to be performed on the electrolyte regularly.

The liquid extraction pump 96 and the control valve 95 are able to be installed in a built-in mode, and may also be installed in an external mode. In the case of built-in installation, one end of the first hollow member 921 extends into the electrolyte chamber 93, and the liquid extraction pump 96 and the control valve 95 are disposed on the first hollow member 921 in the electrolyte chamber 93. In the case of external installation, one end of the first hollow member 921 is directly connected with the interior of the electrolyte chamber 93, and the liquid extraction pump 96 and the control valve 95 are disposed on the first hollow member 921 outside the electrolyte chamber 93. The external installation has a risk of leakage since a joint is outside the electrolyte chamber 93, and the built-in installation mode may avoid the risk. The built-in installation may have a plurality of installation modes, for example, the electrolyte chamber 93 is able to be divided into two cavities by a partition plate 931, an upper cavity is configured for filling the electrolyte, a lower cavity is configured for installing the liquid extraction pump 96 and the control valve 95, and one end of the first hollow member 921 directly penetrates through the lower cavity to communicate with an inner cavity of the upper cavity; and as another example, there is only one cavity in the electrolyte chamber 93, the length of the first hollow member 921 extending to the electrolyte chamber 93 is moderate, the liquid extraction pump 96 and the control valve 95 are disposed on the first hollow member 921 extending into the electrolyte chamber 93, and at this time, the liquid extraction pump 96 and the control valve 95 are able to be immersed in the electrolyte.

In the present embodiment, the adsorption mechanism 94 may use an apparatus in a plurality of structural forms, as long as it meets an adsorption requirement, for example, the adsorption mechanism 94 is an adsorption rod or an adsorption layer or the like, and meanwhile, an outer side of the adsorption mechanism 94 may also be provided with a protective layer soluble in the electrolyte. In the present embodiment, the protective layer is preferably made from polymethyl methacrylate.

### Embodiment 23

As shown in Fig. 40, on the basis of Embodiment 21 and Embodiment 22, the adsorption mechanism 94 in the high-capacity battery in the present embodiment is of a hollow structure, at least one end of the hollow structure is provided with a sealing portion, and the hollow structure enables the adsorption mechanism 94 to meet the requirement of light weight. Meanwhile, the sealing portion is provided with a liquid injection mechanism 97, so that the adsorption mechanism 94 not only has an impurity adsorption function, but also has a liquid injection and replacement function. The liquid injection structure has the following advantages: 1, when the high-capacity battery is manufactured, electrolyte is able to be injected into the electrolyte to form the electrolyte sharing system 92; 2, after the high-capacity battery is formed, electrolyte or a lithium supplementation additive is able to be added into the high-capacity battery again, so that lithium ions in the electrolyte consumed by an SEI film during formation may be compensated, thereby solving the problem of the SEI film consuming irreversible lithium is solved to a certain extent; and 3, after the high-capacity battery runs for a certain number of cycles, the electrolyte of the electrolyte sharing system 92 is able to be regularly supplemented and replaced, thereby further improving the cycle performance of the high-capacity battery.

In the present embodiment, the sealing portion is able to be a sealing film or a sealing rubber pad, and the sealing film or the sealing rubber pad is opened during liquid injection. The hollow structure is of a multi-layer tube structure, an inner-layer tube thereof may serve as a liquid injection channel, an intermediate tube serves as an adsorption layer, and an outer-layer tube serves as a protective layer soluble in the electrolyte. The liquid injection mechanism 97 is connected with the hollow structure and is configured for adding electrolyte into the electrolyte chamber 93. The liquid injection mechanism 97 is specifically a liquid injection valve 971 and a liquid injection pump 972, the liquid injection valve 971 is a three-way valve, a first port of the three-way valve communicates with an inner cavity of the electrolyte chamber 93, a second port thereof communicates with the liquid injection pump 972, and a third port thereof is connected with a vacuumizing apparatus 98. When the electrolyte is supplemented, the liquid injection valve 971 is opened, a vacuumizing device 913 is connected, vacuumizing is able to be first performed on the electrolyte chamber 93 and the electrolyte sharing system 92 by the vacuumizing device, and then electrolyte in an external liquid storage apparatus is supplemented into the electrolyte chamber 93 via the liquid injection valve 971 and the liquid injection pump 972. The above vacuumizing and electrolyte injection operations are repeated for multiple times until the gas in each of the plurality of battery cells 91 is completely extracted, and the electrolyte chamber 93 is also filled to a liquid level of about 70%.

In an embodiment, liquid injection mechanisms in other structural forms may also be used, for example, an opening is formed in a side wall of the electrolyte chamber. The liquid injection mechanism is a sealing rubber pad disposed on the electrolyte chamber for sealing the opening, meanwhile an end cap is further disposed on an outer side of the sealing rubber pad, the end cap is able to be hinged to the side wall of the electrolyte chamber 93, and the sealing rubber pad is able to be configured for inserting a liquid injection needle tube. During liquid injection, the end cap is opened, one end of the liquid injection needle tube filled with electrolyte is inserted into the sealing rubber pad, the electrolyte injection needle tube injects the electrolyte into the electrolyte chamber, after the liquid injection is finished, since the sealing rubber pad has certain plasticity, micropores generated when the liquid injection needle tube is inserted may be extruded to realize sealing, and in order to further ensure the sealing performance, the micropores generated on the sealing rubber pad may also be sealed by the end cap. During liquid replacement, the electrolyte is discharged into a specified container by a drain valve at the bottom of the electrolyte chamber or a valve disposed on the first hollow member, then new electrolyte is added into the electrolyte chamber by the the liquid injection needle tube, and after the liquid injection is finished, the end cap seals the sealing rubber pad on the electrolyte chamber.

### Embodiment 24

As shown in Fig. 41, on the basis of Embodiment 21, Embodiment 22 and Embodiment 23, a circulation pipe 99 and a circulation pump 910 may also be added in the electrolyte chamber 93 and the electrolyte sharing system 92, one end of the circulation pipe 99 communicates with the inner cavities of the plurality of battery cells 91, and the other end thereof communicates with the electrolyte chamber 93, so that the circulation pipe 99, the plurality of battery cells 91, the electrolyte chamber 93 and the electrolyte in the electrolyte sharing system 92 form a liquid circulation channel, and the circulation pump 910 provides power for the circulation of the electrolyte in the circulation pipe 99, the plurality of battery cells 91, the electrolyte chamber 93 and the electrolyte sharing system 92. At this time, electrolyte circulation is able to be performed while an adsorption treatment is performed on the electrolyte, so that the electrolyte that has been subjected to the adsorption treatment is filled in the plurality of battery cells 91 of the entire high-capacity battery. The adsorption mechanism 94 is able to be installed in the electrolyte chamber 93 or in the circulation pipe, as long as the adsorption treatment is able to be performed on the electrolyte, the adsorption mechanism 94 is able to be an adsorption filter screen or the like, which may perform the adsorption treatment on impurities with greater particle sizes in the electrolyte, and the adsorption mechanism 94 may also be an adsorption layer that absorbs water but does not absorb the electrolyte.

In some embodiments, the adsorption mechanism 94 is able to be a lithiated molecular sieve. Compared with a common molecular sieve, the lithiated molecular sieve not only basically maintains the excellent adsorption performance of the common molecular sieve, but can also greatly reduce the introduction of impurity ions Na+ in the electrolyte system, and thus is one of the most effective and most economical physical methods among methods for removing trace water from lithium ion batteries. The electrolyte flows through the lithiated molecular sieve, and is filled in the plurality of battery cells 91 of the entire high-capacity battery by the circulation pipe 99 after being subjected to filtering, adsorption and impurity removal, thereby achieving the purposes of improving the performance of the high-capacity battery and prolonging the cycle life of the high-capacity battery.

In some embodiments, the adsorption mechanism 94 may also use a resin package, and the resin package includes a core layer and a cladding layer wrapped on the core layer.

The core layer is a resign containing a polar amide group 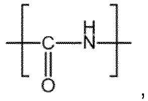 the resign containing the polar amide group includes one or more of polylaurylamide, poly-ω-aminoundecanoyl, poly(tetramethylene adipamide), polycaprolactam, and polyhexamethylene adipamide. The cladding layer is a filter screen which the electrolyte may freely enter and exit, and in addition, the cladding layer may also prevent the resin material of the core layer from diffusing into the inner cavity of each of the plurality of battery cells to be adsorbed on a pole piece or a diaphragm, such that the performance of the battery cell is damaged. Such resin has high polarity, and is able to absorb micromolecular impurities such as H₂O, PF₅ and HF in the electrolyte, purify the electrolyte, and improve the cycle performance of the high-capacity battery.

### Embodiment 25

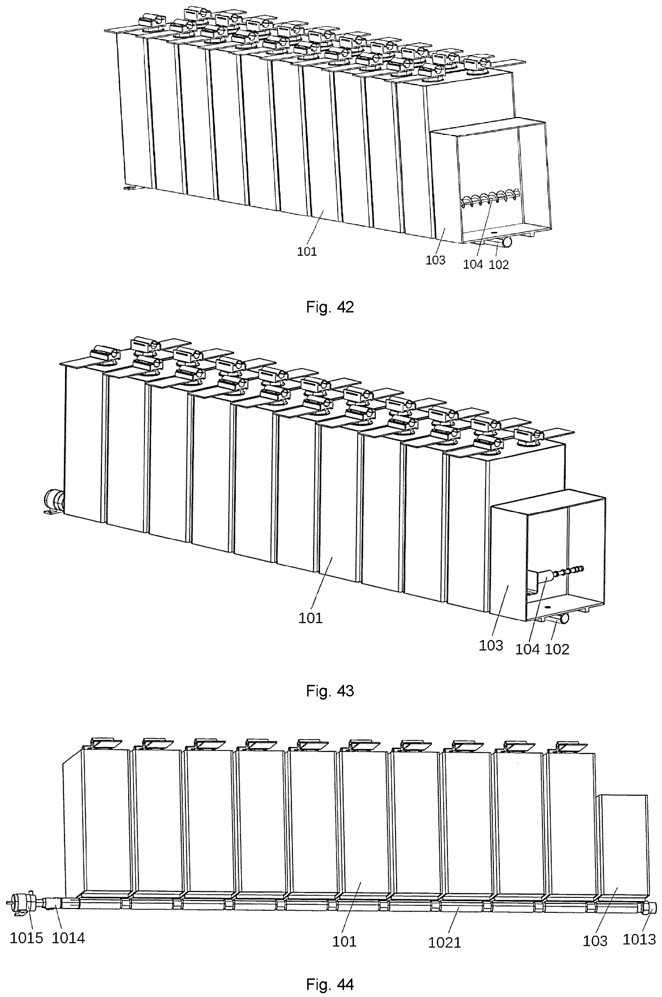

As shown in Figs. 42 to 44, a high-capacity battery provided in the present embodiment includes an electrolyte chamber 103, a uniform mixing mechanism 104, and a plurality of battery cells 101 connected in parallel, wherein electrolyte regions of the plurality of battery cells 101 communicate with each other to form an electrolyte sharing system 102. The electrolyte chamber 103 is connected with the electrolyte sharing system 102; and the uniform mixing mechanism 104 is configured for uniformly mixing electrolyte. In the present embodiment, the electrolyte sharing system 102 includes a first hollow member 1021, the first hollow member 1021 is a structure having a cavity, for example, a shared tube, etc. An explosion venting component is able to be disposed on the first hollow member 1021, and when thermal runaway occurs in a certain battery cell 101, a high-temperature and high-pressure substance is directionally discharged by the first hollow member 1021, and the explosion venting component is able to be an explosion venting valve 1013 or an explosion venting film disposed in the first hollow member 1021. In an embodiment, an exhaust apparatus 1014 or a vacuumizing device 1015 may also be disposed on the first hollow member 1021, and is configured for discharging gases in the high-capacity battery during liquid injection and liquid replacement, so as to facilitate subsequent liquid injection and liquid replacement.

However, when the high-capacity battery is manufactured or configured for a period of time, substances in the electrolyte of the plurality of battery cells may have certain differences, or when the electrolyte is added or supplemented, the electrolyte in the battery cell has certain differences, which may lead to a reduction in the performance of the high-capacity battery, for example, a reduction in the cycle life. At this time, the performance of the high-capacity battery is able to be improved again. In the present invention, by adding the uniform mixing mechanism, the uniform mixing mechanism may uniformly mix original electrolyte in the high-capacity battery (after the high-capacity battery runs for a period of time, the differences between the plurality of battery cells gradually increase, the uniform mixing mechanism is regularly started to mix the original electrolyte in the high-capacity battery, and thus the differences among the plurality of battery cells is able to be compensated to a certain extent), or electrolyte or a lithium supplementation additive is able to be uniformly mixed in the original electrolyte when the electrolyte or the lithium supplementation additive is subsequently supplemented, thereby ensuring the distribution uniformity of lithium ions and further improving the performance of the high-capacity battery.

In the present embodiment, the electrolyte chamber 103 is filled with electrolyte, the electrolyte in the electrolyte chamber 103 communicates with the electrolyte in the electrolyte sharing system 102, and the uniform mixing mechanism 104 is disposed inside the electrolyte chamber 103 or outside the electrolyte chamber 103. Since the electrolyte in the electrolyte chamber 103 communicates with the electrolyte in the electrolyte sharing system 102, the uniform mixing mechanism 104 may continuously and uniformly mix the communicated electrolyte, so that the components, environments, temperatures, ion exchange and the like of the electrolyte of the plurality of battery cells 101 are generally maintained to be dynamically consistent, thereby achieving an ideal state in which the electrolyte of the plurality of battery cells 101 is shared and the working states are substantially the same, and thus enabling the uniformly mixed electrolyte to meet the requirement of high performance of the high-capacity battery.

In the present embodiment, the uniform mixing mechanism 104 is a stirring apparatus, and the stirring apparatus is disposed in the electrolyte chamber 103. Or, the uniform mixing mechanism 104 is a vibration apparatus, and the vibration apparatus is disposed in the electrolyte chamber 103 or on an outer wall of the electrolyte chamber 103. The above stirring apparatus and the vibration apparatus may use existing mature devices as long as the same may uniformly mix the electrolyte. For example, the stirring apparatus may use an electric spiral blade stirrer, which stirs the electrolyte by positively and negatively rotating spiral blades at a high speed (irregularly) regularly, so that the electrolyte starts to flow, thereby achieving the purpose of uniformly mixing the electrolyte. The vibration apparatus may use an existing ultrasonic vibrator or a pulse vibrator, which performs high-frequency vibration/pulse (irregularly) regularly, so that the electrolyte starts to flow under the action of a vibration force or pulses, thereby achieving the purpose of uniformly mixing the electrolyte.

### Embodiment 26

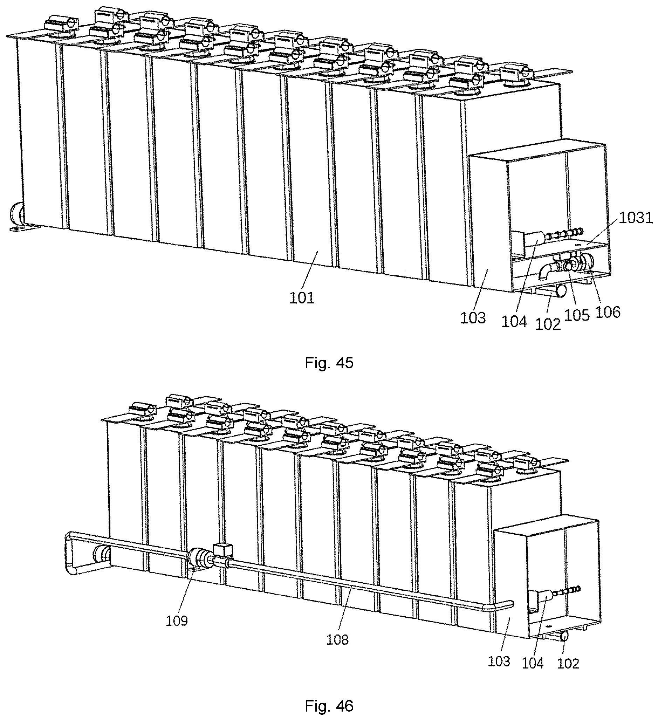

As shown in Fig. 45, a high-capacity battery provided in the present embodiment includes a plurality of battery cells 101 connected in parallel, an electrolyte chamber 103, and a uniform mixing mechanism 104, wherein electrolyte regions of the plurality of battery cells 101 communicate with each other to form an electrolyte sharing system 102. The electrolyte chamber 103 is connected with the electrolyte sharing system 102; and the uniform mixing mechanism 104 is configured for uniformly mixing electrolyte. In the present embodiment, the electrolyte sharing system 102 includes a first hollow member, and the first hollow member is a structure having a cavity, for example, a shared tube, etc.

In the present embodiment, a control valve 105 and a liquid extraction pump 106 are disposed between an inner cavity of the electrolyte chamber 103 and an inner cavity of the first hollow member, and the control valve 105 is a normally closed valve, which isolates the cavity of the electrolyte sharing system 102 from the cavity of the electrolyte chamber 103. The liquid extraction pump 106 is configured for extracting the electrolyte in the first hollow member into the electrolyte chamber 103. After the control valve 95 and the liquid extraction pump 106 are disposed, the electrolyte chamber 103 and the electrolyte sharing system 102 are two independent cavities, electrolyte is able to be not preset in the electrolyte chamber, when it is necessary to uniformly mix the electrolyte, the control valve 105 is opened, the electrolyte in the first hollow member 1021 is extracted into the electrolyte chamber 103 via the liquid extraction pump 106, then the control valve 105 is closed, after the electrolyte is uniformly mixed in the electrolyte chamber 103 (the electrolyte in the electrolyte chamber 103 is uniformly mixed by a stirring apparatus or a vibration apparatus, and specifically, the stirring apparatus or the vibration apparatus in Embodiment 25 is able to be used), the control valve 105 is opened, and then the uniformly mixed electrolyte is returned to the electrolyte sharing system 102. In this way, all electrolyte in the entire high-capacity battery is able to be mixed thoroughly.

The liquid extraction pump 106 and the control valve 105 are able to be installed in a built-in mode, and may also be installed in an external mode. In the case of built-in installation, one end of the first hollow member 1021 extends into the electrolyte chamber 103, and the liquid extraction pump 106 and the control valve 105 are disposed on the first hollow member 1021 in the electrolyte chamber 103. In the case of external installation, one end of the first hollow member 1021 is directly connected with the interior of the electrolyte chamber 103, and the liquid extraction pump 106 and the control valve 105 are disposed on the first hollow member 1021 outside the electrolyte chamber 103. The external installation has a risk of leakage since a joint is outside the electrolyte chamber 103, and the built-in installation may avoid the risk. The built-in installation may have a plurality of installation modes, for example, the electrolyte chamber 103 is able to be divided into two cavities by a partition plate 1031, an upper cavity is configured for filling the electrolyte, a lower cavity is configured for installing the liquid extraction pump 106 and the control valve 105, and one end of the first hollow member 1021 directly penetrates through the lower cavity to communicate with an inner cavity of the upper cavity; and as another example, there is only one cavity in the electrolyte chamber 103, the length of the first hollow member 1021 extending to the electrolyte chamber 103 is moderate, the liquid extraction pump 106 and the control valve 105 are disposed on the first hollow member 1021 extending into the electrolyte chamber 103, and at this time, the liquid extraction pump 106 and the control valve 105 is able to be immersed in the electrolyte.

### Embodiment 27

As shown in Fig. 46, a high-capacity battery provided in the present embodiment includes a plurality of battery cells connected in parallel, an electrolyte chamber 103, and a uniform mixing mechanism 104, wherein electrolyte regions of the plurality of battery cells communicate with each other to form an electrolyte sharing system 102. In the present embodiment, the electrolyte sharing system 102 includes a first hollow member, the first hollow member 1021 is a structure having a cavity, for example, a shared tube, etc.

In the present embodiment, the electrolyte is uniformly mixed in an external circulation mode, wherein the uniform mixing mechanism 104 includes an external circulation pipe 108 and an external circulation pump 109, one end of the external circulation pipe 108 communicates with an inner cavity of the electrolyte sharing system 102, the other end thereof is connected with the electrolyte chamber 103, at this time, the external circulation pipe 108, the plurality of battery cells, the electrolyte chamber 103 and the electrolyte sharing system 102 form a liquid external circulation channel, the external circulation pump 109 is disposed on the external circulation pipe 108 and provides power for circulation of the electrolyte in the external circulation pipe 108, the plurality of battery cells, the electrolyte chamber 103 and the electrolyte sharing system 102. When the electrolyte is uniformly mixed, the electrolyte in the plurality of battery cells enters the electrolyte chamber 103 via the first hollow member, at this time, the electrolyte in the electrolyte chamber 103 is returned to the inner cavities of the plurality of battery cells via the external circulation pipe, and the electrolyte of the entire high-capacity battery is uniformly mixed thoroughly by means of continuous circulation, thereby improving the performance of the high-capacity battery and prolonging the cycle life of the high-capacity battery.

During the above external circulation, the electrolyte in the first hollow member 1021 may also be extracted into the electrolyte chamber 103 by the liquid extraction pump 106, that is, the liquid extraction pump 106 and the external circulation pump 109 work together to perform liquid circulation.

The uniform mixing mechanism 104 further includes a stirring apparatus or a vibration apparatus, the stirring apparatus is disposed in the electrolyte chamber 103, the vibration apparatus is disposed in the electrolyte chamber 103 or on an outer wall of the electrolyte chamber 103, and the stirring apparatus or the vibration apparatus forms a dual mixing function with the external circulation pipe 108 and the external circulation pump 109, so that the consistency of the electrolyte in the entire high-capacity battery is better.

### Embodiment 28

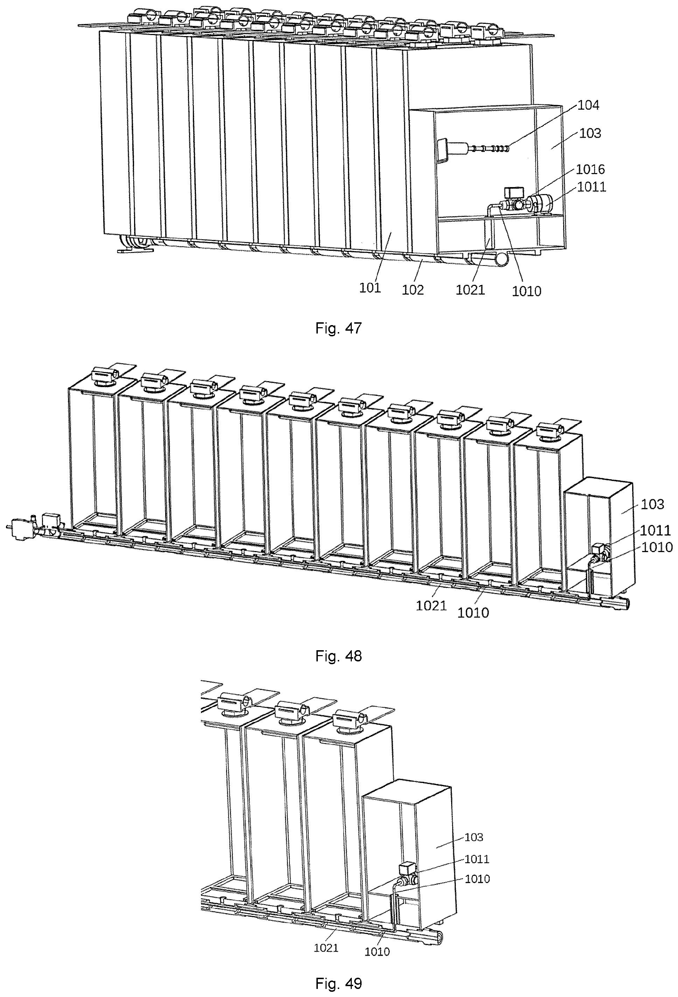

As shown in Figs. 47 to 49, a high-capacity battery provided in the present embodiment includes a plurality of battery cells 101 connected in parallel, an electrolyte chamber 103, and a uniform mixing mechanism 104, wherein electrolyte regions of the plurality of battery cells 101 communicate with each other to form an electrolyte sharing system 102. In the present embodiment, the electrolyte sharing system 102 includes a first hollow member 1021, the first hollow member 201 is a structure having a cavity, for example, a shared tube, etc.

In the present embodiment, the uniform mixing mechanism 104 includes an internal circulation pipe 1010 and an internal circulation pump 1011, the internal circulation pipe 1010 is disposed in the first hollow member 1021, one end of the internal circulation pipe extends into the electrolyte chamber 103, and the internal circulation pump 1011 is disposed on a circulation pipe in the electrolyte chamber 103, that is, an inlet end of the internal circulation pipe is located in the first hollow member 1021, an outlet end thereof is located in the inner cavity of the electrolyte chamber 103, a pipe diameter of the internal circulation pipe needs to be less than the size of the inner cavity of the electrolyte chamber 103, at this time, the electrolyte is extracted from the first hollow member 1021 into the electrolyte chamber 103 via the internal circulation pipe, and then returns to the first hollow member 1021 and the plurality of battery cells 101 via a cavity between the internal circulation pipe and the first hollow member 1021. When internal circulation is performed on the electrolyte, the internal circulation pump 1011 works to extract the electrolyte in the first hollow member 1021 close to the inlet end of the circulation pipe into the electrolyte chamber 103 via the internal circulation pipe, and then the electrolyte in the electrolyte chamber 103 returns to the first hollow member 1021 and the plurality of battery cells 101 via the cavity between the internal circulation pipe and the first hollow member 1021. When the electrolyte is uniformly mixed by internal circulation, since the internal circulation pipe 1010 and the internal circulation pump 1011 are installed in a built-in mode, there is no leakage point during the circulation of the electrolyte, so that the safety of the entire high-capacity battery is better. In an embodiment, an isolation valve 1016 may also be disposed on the circulation pipe.

In an embodiment, the uniform mixing mechanism 104 further includes a stirring apparatus or a vibration apparatus, the stirring apparatus is disposed in the electrolyte chamber 103, the vibration apparatus is disposed in the electrolyte chamber 103 or on the outer wall of the electrolyte chamber 103, and the stirring apparatus or the vibration apparatus forms a dual mixing function with the internal circulation pipe 1010 and the internal circulation pump 1011, so that the consistency of the electrolyte in the entire high-capacity battery is better.

### Embodiment 29

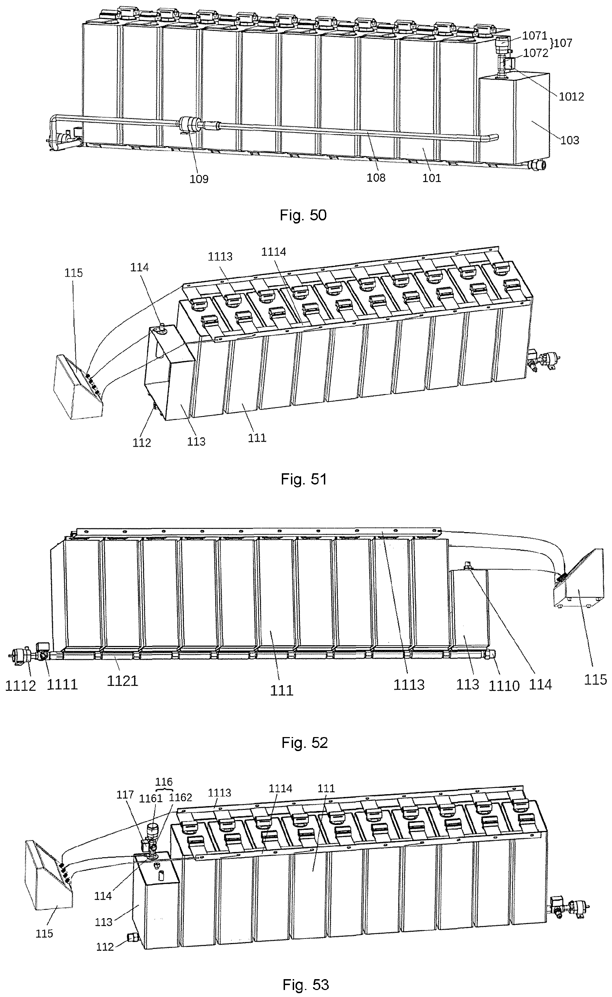

As shown in Fig. 50, on the basis of Embodiment 25, Embodiment 26 and Embodiment 27, a high-capacity battery in the present embodiment may also be additionally provided with a liquid injection mechanism 107, and the liquid injection mechanism 107 is able to be disposed on the electrolyte chamber 103 or the first hollow member 1021. The liquid injection mechanism has the following advantages: 1, when the high-capacity battery is manufactured, electrolyte is able to be injected into the electrolyte to form the electrolyte sharing system 102; 2, after the high-capacity battery is formed, electrolyte or a lithium supplementation additive maybe added into the high-capacity battery again, so that lithium ions in the electrolyte consumed by an SEI film during formation is able to be compensated, thereby solving the problem of the SEI film consuming irreversible lithium to a certain extent; and 3, after the high-capacity battery runs for a certain number of cycles, the electrolyte of the electrolyte sharing system 102 is able to be regularly supplemented and replaced, thereby further improving the cycle performance of the high-capacity battery.

In the present embodiment, the liquid injection mechanism 107 is preferably connected with the electrolyte chamber 103, and is configured for adding electrolyte into the electrolyte chamber 103. The liquid injection mechanism 107 is specifically a liquid injection valve 1071 and a liquid injection pump 1072, the liquid injection valve 1071 is a three-way valve, a first port of the three-way valve communicates with an inner cavity of the electrolyte chamber 103, a second port thereof communicates with the liquid injection pump 1072, and a third port thereof is connected with a vacuumizing apparatus 1012. When the electrolyte is supplemented, the liquid injection valve 1071 is opened, a vacuumizing device 1015 is connected, vacuumizing is able to be first performed on the electrolyte chamber 103 and the electrolyte sharing system 102 by the vacuumizing device, and then electrolyte in an external liquid storage apparatus is supplemented into the electrolyte chamber 103 via the liquid injection valve 1071 and the liquid injection pump 1072. The above vacuumizing and electrolyte injection operations are repeated for multiple times until the gas in each of the plurality of battery cells 101 is completely extracted, and the electrolyte chamber 103 is also filled to a liquid level of about 70%.

In an embodiment, liquid injection mechanisms 107 in other structural forms may also be used, for example, an opening is formed in a side wall of the electrolyte chamber 103, the liquid injection mechanism 107 is a sealing rubber pad disposed on the electrolyte chamber for sealing the opening, and the sealing rubber pad is able to be user for inserting a liquid injection needle tube. During liquid injection, the liquid injection needle tube injects electrolyte into the electrolyte chamber 103 for liquid injection. During liquid replacement, the electrolyte is discharged into a specified container by a drain valve or a valve disposed on the first hollow member 1021, and then new electrolyte is added into the electrolyte chamber 103 by the liquid injection needle tube.

After the liquid injection mechanism 107 injects electrolyte or a lithium supplementation additive into the high-capacity battery, the electrolyte or the lithium supplementation additive may only naturally flow, at this time, the problem of uneven distribution of lithium ions in the plurality of battery cells 101 is generated, such that the performance of the high-capacity battery is affected, at this time, the electrolyte in the entire high-capacity battery is able to be uniformly mixed by using the uniform mixing mechanism 104 in any of Embodiments 25 to 28, thereby improving the performance of the high-capacity battery and prolonging the cycle life of the high-capacity battery.

### Embodiment 30

As shown in Fig. 51 and Fig. 52, a high-capacity battery provided in the present embodiment includes an electrolyte chamber 113, a third electrode 114, and a plurality of battery cells 111 connected in parallel, wherein electrolyte regions of the plurality of battery cells 111 communicate with each other to form an electrolyte sharing system 112. The electrolyte sharing system 112 includes a first hollow member 1121, the first hollow member 921 is a structure having a cavity, for example, a shared tube or the like, and the first hollow member 1121 communicates with inner cavities of the plurality of battery cells 111 to form an electrolyte sharing space, and in this space, the components, environments, temperatures, ion exchange and the like of the electrolyte of the plurality of battery cells 111 are generally maintained to be dynamically consistent, thereby achieving an ideal state in which the electrolyte of the plurality of battery cells 111 is shared and the working states are substantially the same. Meanwhile, an explosion venting component is able to be disposed on the first hollow member 1121, and when thermal runaway occurs in a certain battery cell 111, a high-temperature and high-pressure substance is directionally discharged by the first hollow member 1021, and the explosion venting component is able to be an explosion venting valve 1110 or an explosion venting film disposed in the first hollow member 1021. In an embodiment, an exhaust apparatus 1111 or a vacuumizing device 1112 may also be disposed on the first hollow member 1121, and is configured for discharging gases in the high-capacity battery during liquid injection and liquid replacement, so as to facilitate subsequent liquid injection and liquid replacement.

In the present embodiment, the electrolyte in the electrolyte chamber 113 communicates with the electrolyte in the electrolyte sharing system 112, and the third electrode 114 is disposed in the electrolyte chamber 113 and is at least partially immersed in the electrolyte. Meanwhile, the third electrode 114 is conducted with a positive electrode 1113 or a negative electrode 1114 of at least one battery cell 111, and at this time, a potential difference is generated between the third electrode 114 and the positive electrode 1113 or the negative electrode 1114 of the at least one battery cell 111, so that lithium ions in the electrolyte are intercalated into the plurality of battery cells 111.

In the present invention, the third electrode 114 is disposed on the electrolyte chamber 113, so that the third electrode 114 has a plurality of installation modes, but since the third electrode 114 is at least electrically connected with the positive electrode 1113 or the negative electrode 1114 of one battery cell, the following installation mode is preferentially considered: one end of the third electrode 114 is immersed in the electrolyte of the electrolyte chamber 113, and the other end thereof extends out of the electrolyte chamber 113 to be electrically connected with the positive electrode 1113 or the negative electrode 1114 of the battery cell 111.

In order to ensure a sufficient potential difference between the third electrode 114 and the positive electrode 1113 or the negative electrode 1114 of the battery cell 111, so as to enable the lithium ions of the electrolyte to be smoothly intercalated into each of the plurality of battery cells 111, in the present invention, a voltage source 115 is disposed between the third electrode 114 and the positive electrode 1113 or the negative electrode 114 of the at least one battery cell 111. In addition, in the present invention, a handover switch is further disposed between the third electrode 114 and the positive or negative electrode 1114 of the battery cell 111; and the handover switch controls the third electrode 114 to be electrically conducted with the positive electrode 1113 of the battery cell 111 or controls the third electrode 114 to be electrically conducted with the negative electrode 1114 of the battery cell 111. In the present invention, the potential difference is generated between the third electrode 114 and the positive electrode 1113 or the negative electrode 1114 of the battery cell 111 via the handover switch, so that the material selection of the third electrode 114 has diversity.

Many materials are soluble in the electrolyte and have conductivity, for example, gold, silver, platinum, etc. In the present invention, a silver rod is selected as the third electrode 114 under the consideration of cost. After the electrolyte is injected into the electrolyte sharing system 112 of the high-capacity battery for the first time, the potential difference is generated between the third electrode 114 and the positive electrode 1113 or the negative electrode 1114 of the at least one battery cell 111, and lithium ions in the electrolyte in the electrolyte sharing system 112 are intercalated into the plurality of battery cells 111, thereby compensating for lithium ions consumed when a solid electrolyte interphase (SEI) film is formed on the surface of the negative electrode of each of the plurality of battery cells 111. Similarly, after the high-capacity battery runs for a period of time, capacity attenuation of the battery occurs, electrolyte is able to be injected into the electrolyte sharing system 112 of the high-capacity battery again, so that free lithium ions in the third electrode 114 are intercalated into the plurality of battery cells 111; and by repeating this process, the capacity attenuation speed of the high-capacity battery is able to be effectively delayed, thereby prolonging the service life of cyclic charging and discharging of the high-capacity battery.

The third electrode 114 is specifically disposed on an inner wall of the electrolyte chamber 113, and is able to be specifically fixedly disposed on the inner wall of the electrolyte chamber 113, for example, being welded or integrally disposed, and the like; and the third electrode 114 may also be detachably disposed on the inner wall of the electrolyte chamber, for example, by threaded connection or clamping, and the like, the sealing performance needs to be noted during the threaded connection or clamping, a sealing gasket is added or a sealant is coated, and the like, and if a part of the third electrode 114 is exposed from the electrolyte chamber 113, it is necessary to provide a sealing cover or the like to protect the exposed third electrode 114.

### Embodiment 31

As shown in Fig. 53, on the basis of Embodiment 30, a liquid injection function is added to the third electrode 114 in the present embodiment, specifically, the third electrode 114 in the present embodiment is of a hollow structure, at least one end of the hollow structure is provided with a sealing portion, and the hollow structure enables the third electrode 114 to meet the requirement of light weight. Meanwhile, the sealing portion is provided with a liquid injection mechanism 116, so that the third electrode 114 not only has a lithium supplementation function, but also has a liquid injection and replacement function. The liquid injection structure has the following advantages: 1, when the high-capacity battery is manufactured, electrolyte is able to be injected into the electrolyte to form the electrolyte sharing system 112; 2, after the high-capacity battery is formed, electrolyte or a lithium supplementation additive is able to be added into the high-capacity battery again, so that lithium ions in the electrolyte consumed by an SEI film during formation is able to be compensated; and 3, after the high-capacity battery runs for a certain number of cycles, the electrolyte is able to be regularly supplemented and replaced, thereby further improving the cycle performance of the high-capacity battery.

In the present embodiment, the sealing portion is able to be a sealing film, and the sealing film is able to be made from a material similar to that of the protective layer for sealing the hollow structure, or a sealing film made from other materials may also be used, when electrolyte is added, the sealing portion is dissolved by the electrolyte, the electrolyte is then injected, and at this time, an inner cavity of the hollow structure may serve as a liquid injection channel. The liquid injection mechanism 116 is connected with the hollow structure and is configured for adding electrolyte into the electrolyte chamber 113. The liquid injection mechanism 116 is specifically a liquid injection valve 1162 and a liquid injection pump 1161, the liquid injection valve 1162 is a three-way valve, a first port of the three-way valve communicates with the inner cavity of the hollow structure, a second port thereof communicates with the liquid injection pump 1161, and a third port thereof is connected with a vacuumizing apparatus 117. When electrolyte is supplemented, the liquid injection valve 1162 is opened, a small amount of electrolyte is added to dissolve the sealing film, or the sealing film is punctured, then a vacuumizing device 1112 is connected, vacuumizing is first performed on the electrolyte chamber 113 and the electrolyte sharing system 112 by the vacuumizing device, and then electrolyte in an external liquid storage apparatus is supplemented into the electrolyte chamber 113 via the liquid injection valve 1162 and the liquid injection pump 1161. After the electrolyte is supplemented, the liquid injection valve 1162 is closed, so that the interior of the electrolyte chamber 113 is isolated from an external environment.

In an embodiment, liquid injection mechanisms 116 in other structural forms may also be used, for example, an opening is formed in a side wall of the electrolyte chamber 113, the sealing portion is a sealing rubber pad, and the liquid injection mechanism 116 is a liquid injection needle tube. During liquid injection, the liquid injection needle tube injects electrolyte into the electrolyte chamber 113 for liquid injection.

### Embodiment 32

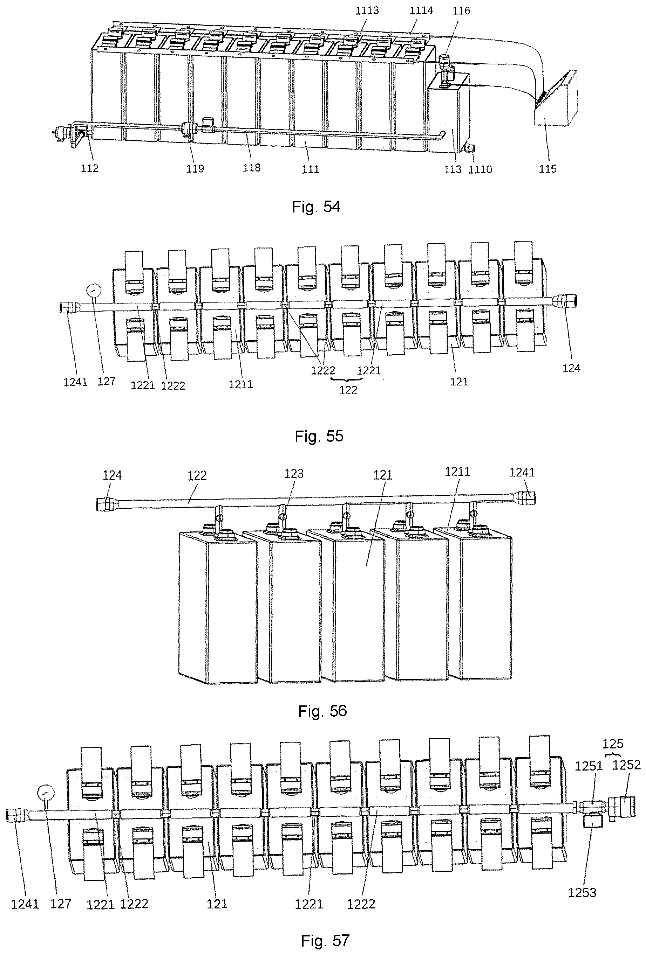

As shown in Fig. 54, on the basis of Embodiment 30 or Embodiment 31, a circulation pipe 118 and a circulation pump 119 may also be added between the electrolyte chamber 113 and the electrolyte sharing system 112, one end of the circulation pipe 118 communicates with the inner cavities of the plurality of battery cells 111, and the other end thereof communicates with the electrolyte chamber 113, so that the circulation pipe 118, the plurality of battery cells 111, the electrolyte chamber 113 and the electrolyte in the electrolyte sharing system 112 form a liquid circulation channel, and the circulation pump 119 provides power for the circulation of the electrolyte in the circulation pipe 118, the plurality of battery cells 111, the electrolyte chamber 113 and the electrolyte sharing system 112. At this time, electrolyte circulation is able to be performed while lithium supplementation is performed on the electrolyte, so that the electrolyte that has been subjected to the lithium supplementation is filled in the plurality of battery cells 111 of the entire high-capacity battery.

Gases are generated during the use of the battery, and if these gases are not able to be discharged in time, the comprehensive performance of the battery is reduced. For the high-capacity battery, there are two gas generation modes: 1, as the number of charging and discharging cycles increases during the use, a gas is continuously and slowly generated in the electrolyte, the gas has the characteristics of a small generation amount and a very long generation time, which even runs through the service life of the entire battery, and if the gas is not discharged in time after being accumulated in the battery to a certain amount, as an internal pressure of the battery shell is continuously increased, the battery shell swells, and after the battery shell swells, the performance of the battery is quickly reduced; and 2, a large amount of thermal runaway flue gas is suddenly generated when thermal runaway occurs in the battery, a large amount of the gas is generated within a short time, if the gas is not able to be discharged in time, explosion is able to be caused, and the explosion is easier to happen when encountering an open fire.

On this basis, on the basis of the above high-capacity battery, the high-capacity battery in the present invention is additionally provided with a gas channel composed of a second hollow member, and the main purpose of disposing the second hollow member is to discharge the two gases in time, thereby avoiding swelling, explosion and the like of the battery shell, and thus improving the safety of the high-capacity battery and prolonging the service life of the high-capacity battery. When thermal runaway occurs in a battery cell, a conventional method is to dispose a pressure relief component on each of the plurality of battery cells for pressure relief, but for the high-capacity battery, if each of the plurality of battery cells is provided with a pressure relief component, the flue gas that has been subjected to pressure relief has a greater possibility of being directly ejected to the surrounding battery cells, resulting in more serious interlocking accidents, therefore a shared explosion venting system appears safer. Therefore, the second hollow member may serve as a shared exhaust channel, and may also directly serve as a shared explosion venting system.

### Embodiment 33

A high-capacity battery in the present embodiment includes a plurality of battery cells connected in parallel, an electrolyte sharing system, a repair apparatus, and an exhaust channel, wherein for the settings of the electrolyte sharing system (not shown in the figure) and the repair apparatus (not shown in the figure), reference is able to be made to the descriptions in Embodiment 1 to Embodiment 32, and thus details will not be repeated herein again. As shown in Fig. 55, in the high-capacity battery provided in the present embodiment, each of the plurality of battery cells 121 includes a shell, an upper cover plate 1211, a lower cover plate, a cylinder, and a battery core; the upper cover plate 1211, the cylinder and the lower cover plate form a battery shell, the upper cover plate 1211 is provided with a positive electrode and a negative electrode, and the battery core is disposed in the battery shell and is mostly immersed in electrolyte, wherein a through hole is formed in the upper cover plate 1211 of each battery shell, and each through hole is in sealed communication with the second hollow member 122 to form the exhaust channel. Since the tops of the plurality of battery cells 121 constituting the high-capacity battery are communicated with each other, if a certain battery cell 121 generates more gases, these excess gases are able to be communicated and exchanged with gases at the tops of the other battery cells 121, in this way, internal gas environments of the plurality of battery cells 121 become more similar, thus forming a shared gas region, so that the plurality of battery cells are in a balanced gas environment, and it is impossible to form a gas difference environment due to the fact that a certain battery cell 121 generates more gases, thereby avoiding the influence of the differences among the plurality of battery cells 121 on the high-capacity battery.

Regarding the specific structure of the second hollow member, reference is able to be made to the settings of the first hollow member, and in addition, the second hollow member and the first hollow member may use the same structural form or different structural forms; however, in principle, if the second hollow member and the first hollow member select the same structural form, it is relatively more conducive to machining and overall quality control. In the present embodiment, the specific connection structure of the second hollow member may use the structure provided in Embodiment 2, specifically, the upper cover plate 1211 is provided with a third hollow unit 1221, and the third hollow units 1221 of the plurality of battery cells 121 are communicated to form the second hollow member 122 (i.e., the exhaust channel). Separate third hollow units 1221 are disposed on the upper cover plates 1211 of the plurality of battery cells, and are finally spliced. Or, in other modes, adjacent third hollow units 1221 are spliced by fourth hollow units 1222. Finally, the tightness of the second hollow member 122 formed after communication should be ensured.

In the present embodiment, the second hollow member 122 is provided with a pressure relief component 124, the pressure relief component 124 is able to be a pressure relief valve 1241, the pressure relief valve 1241 has two functions, one is to regularly or irregularly discharge gases generated in the high-capacity battery, the pressure relief valve 1241 is able to be manually opened for exhausting, at this time, the second hollow member 122 is provided with a pressure measurement apparatus 127 and/or an alarm apparatus, when the gas pressure reaches a set exhaust threshold value, for example, when the gas pressure reaches 0.7 Mpa, the pressure relief valve 1241 is opened for exhausting, and of course, the pressure relief valve 1241 may also use an automatic exhaust mode; and second, when thermal runaway occurs in any battery cell 121, a generated high-pressure gas is discharged by the pressure relief valve 1241.

Of course, an explosion venting film may also be optionally disposed on the second hollow member 122, but when the explosion venting film is disposed, a pressure relief valve 1241 must be disposed on the second hollow member 122 for exhausting, at this time, the pressure relief valve 1241 is disposed on one end of the second hollow member, and the explosion venting film is disposed on the other end of the second hollow member. The explosion venting film is configured for explosion venting during thermal runaway, and the pressure relief valve 1241 is configured for exhausting. When the battery is conventionally used, gases are discharged by the pressure relief valve 1241 to avoid thermal runaway of the high-capacity battery, when thermal runaway occurs in the battery due to external factors such as collision, explosion venting is realized by the explosion venting film. In an embodiment, if the pressure relief valve is configured for explosion venting, a risk of explosion venting failure is able to be generated, and at this time, the explosion venting film is used as an alternative solution to ensure the reliability of explosion venting.

The disposition position and number of the pressure relief components (a joint name of the foregoing pressure relief valve 1241 or explosion venting film) are relatively flexible, for example, there are the following several modes: the pressure relief valve 1241 is disposed on one end of the second hollow member 122; or, the pressure relief valve 1241 is disposed on one end of the second hollow member 122, and the explosion venting film is disposed on the other end of the second hollow member 122, or the pressure relief valves 1241 are disposed on two ends of the second hollow member 122. Preferably, the pressure relief valves 1241 are disposed on the two ends of the second hollow member 122. In general, in the high-capacity battery, thermal runaway generally occurs in a single battery cell 121, the amount and severity of a flue gas generated when the thermal runaway occurs in the single battery cell 121 are mainly related to an ambient temperature and a state of charge of the single battery cell 121 at that time, the higher the state of charge and the higher the temperature are, the greater the amount of generated gas is; and in a special case, when thermal runaway simultaneously occurs in two or more battery cells 121, the amount of generated gas is greater; the gas displacement of the single pressure relief valve 1241 is limited, so that the gas is able to be not effectively discharged in time, resulting in pressure accumulation and burying potential explosion hazards, therefore the two pressure relief valves 1241 form double exhaust to effectively avoid the generation of this problem.

In an embodiment, a standby pressure mechanism may also be added on the second hollow member 122. The standby pressure mechanism is configured for adjusting the pressure in the battery cell 121 to a set value, and performing a safe pressure relief treatment on the battery cell 121 before thermal runaway occurs, so that the safety of the battery cell 121 is better. In a normal use process of the battery, if an internal pressure of the battery reaches an upper limit of a relatively high value, at this time, although the battery may also be normally used, there is an unsafe factor. Therefore, upon monitoring that the pressure is too high, the pressure measurement apparatus 127 and/or the alarm apparatus sends alarm information, after receiving the alarm information, a daily maintainer carries a portable and pressure-adjustable standby pressure mechanism and connects the standby pressure mechanism with the pressure relief valve of the second hollow member 122, performs small-amplitude pressure relief and then performs pressure maintaining by using a pressure adjustment and pressure relief apparatus of the standby pressure mechanism, and repeats the operation for multiple times to slowly reduce the internal pressure of the battery to a normal value.

In the present embodiment, the exhaust channel discharges the gases generated in the high-capacity battery in time to control the internal pressure of the battery, thereby preventing the swelling of the battery and phenomena such as explosion or ignition caused by an increase in the internal pressure of the battery, and effectively avoiding safety problems caused by an excessively high internal pressure of the battery, thus the safety of the high-capacity battery is able to be greatly improved. In an embodiment, the exhaust channel in the present invention may also improve the electrochemical performance of the battery and prolong the service life of the battery, and is able to be better used in a high-temperature-resistant environment.

In the present embodiment, an exhaust hole is formed in the second hollow member for regularly or irregularly discharging the gases generated in the high-capacity battery, and when the exhaust hole is formed, the internal gas tightness of the system during an exhaust process should be at least ensured, so as to avoid introducing new external gases into the high-capacity battery during the exhaust process to bring new pollution to the electrolyte. The exhaust hole is able to be configured for connecting an exhaust apparatus, and when exhaust is required, the exhaust apparatus is connected for exhausting. Of course, a pressure relief valve may also be additionally disposed on the exhaust hole directly, the pressure relief valve is able to be manually opened for exhausting, or an internal pressure monitoring apparatus may also be disposed on the second hollow member, and when the pressure reaches a set exhaust threshold value, the pressure relief valve is electrically and automatically opened for exhausting. An end portion of the second hollow member is provided with a pressure relief valve for discharging a thermal runaway flue gas; of course, an explosion venting film may also be disposed to replace the pressure relief valve, and compared with the pressure relief valve, the explosion venting film has the advantages of a relatively lower cost, however, in view of the use time of the high-capacity battery, when the explosion venting film is selected for use, the stability of the explosion venting film should be ensured during a long-time use process, and it should be specifically ensured that before and after the exhaust process, no leakage is generated at a connection position of the explosion venting film due to repeated impact of the pressure in the second hollow member; and the pressure relief valve has the advantages of being more stable and reliable, but is relatively high in cost, and a specific choice is able to be determined according to the use environment of the high-capacity battery. However, regardless of whether the explosion venting film or the pressure relief valve is selected, it should be ensured that the explosion venting film or the pressure relief valve is able to be opened in time under a set explosion venting pressure.

In an embodiment, the disposition position and number of explosion venting mechanisms (a joint name of the foregoing pressure relief valve or explosion venting film) are relatively flexible, for example, there are the following several modes:
(1) The explosion venting mechanism is only disposed on the second hollow member

The second hollow member mainly serves as an exhaust system for exhausting. For the high-capacity battery, there are two gas generation modes: 1, as the number of charging and discharging cycles increases during the use, a gas is continuously and slowly generated in the electrolyte, the gas has the characteristics of a small generation amount and a very long generation time, which even runs through the service life of the entire battery, and if the gas is not discharged in time after being accumulated in the battery to a certain amount, as an internal pressure of the battery shell is continuously increased, the battery shell swells, and after the battery shell swells, the performance of the battery is quickly reduced; and 2, a large amount of thermal runaway flue gas is suddenly generated when thermal runaway occurs in the battery, a large amount of the gas is generated within a short time, if the gas is not able to be discharged in time, explosion is able to be caused, and the explosion is easier to happen when encountering an open fire.

The main purpose of disposing the second hollow member is to discharge the first gas in time, thereby avoiding the failure of the battery shell, and thus prolonging the service life of the battery; when thermal runaway occurs in a battery cell, a conventional method is to dispose a pressure relief mechanism on each of the plurality of battery cells for pressure relief, but for the high-capacity battery, if each of the plurality of battery cells is provided with a pressure relief mechanism, the flue gas that has been subjected to pressure relief has a greater possibility of being directly ejected to the surrounding battery cells, resulting in more serious interlocking accidents, and thus a shared explosion venting system appears safer. On this basis, the second hollow member serves as an exhaust system and may also be directly used as an explosion venting system, and it is only necessary to add a corresponding explosion venting mechanism. However, it should be noted that the explosion venting mechanism should not conflict with a daily exhaust path.

### (2) The explosion venting mechanism is only disposed on the first hollow member

Compared with the situation in which the explosion venting mechanism is only disposed on the second hollow member, the principle of only disposing the explosion venting mechanism on the first hollow member is the same, but the difference between the two situations lies in the execution process of an explosion venting action; and since the first hollow member is used as an electrolyte sharing system, the interior of the first hollow member is filled with electrolyte, so that if the thermal runaway flue gas is discharged from the first hollow member, the thermal runaway flue gas is able to be discharged after the electrolyte in the electrolyte sharing system is completely extruded out, which proposes higher requirements to the pressure resistance levels of the battery cell shell, the second hollow member and the first hollow member. However, the mode has the advantages that almost all free-state electrolyte in the high-capacity battery is discharged in time, thereby reducing the possibility of thermal runaway being synchronously triggered for this part of electrolyte (the possibility is relatively low), and meanwhile, if an electrolyte collection apparatus is disposed in a system composed of the high-capacity battery, this part of discharged electrolyte is able to be recycled in time for continued use.

### (3) Explosion venting mechanisms are disposed on both the second hollow member and the first hollow member

When the explosion venting mechanisms are disposed on both the second hollow member and the first hollow member, the cost is relatively high, however, when coping with severe short-time thermal runaway of the plurality of battery cells, the dual explosion venting tubes improve the safety of the system; and in addition, although the possibility of occurrence is extremely low, if the thermal runaway simultaneously occurs in two or more battery cells in the high-capacity battery, the discharge amount of an explosion venting path corresponding to a single explosion venting mechanism is relatively limited, and thus dual explosion venting paths greatly improve the discharge efficiency of the thermal runaway flue gas. Of course, in most cases, a single explosion venting pipeline may meet the exhaust requirements of the thermal runaway flue gas, and the other advantage of the dual explosion venting tubes is that if other explosion venting tubes are not able to be opened in time due to a mechanical failure, another path is able to be provided, but it is obvious that the cost of the product is increased. The explosion venting mechanism disposed on the first hollow member is an explosion venting valve.

In summary, the choice for the explosion venting mechanism is able to be comprehensively determined according to actual use conditions.

In order to prevent the situation in which during the exhaust of a certain battery cell in the high-capacity battery, a high-temperature gas discharged from the battery cell affects other battery cells, at this time, a one-way valve with an opening pressure of P1 is disposed on the branch pipe, when the high-pressure gas in any battery cell exceeds P1, the one-way valve is opened to discharge the high-pressure gas in the battery cell into the hollow member, and then the high-pressure gas is discharged by the hollow member. By disposing the one-way valve, firstly, the pressures in the inner cavities of the plurality of battery cells are always below P1, so that the pressures in the plurality of battery cells are kept consistent, and thus the performance of the high-capacity battery is improved. Secondly, by disposing the one-way valve, the inner cavities of the plurality of battery cells are isolated from the second hollow member, therefore during the exhaust of a certain battery cell, no excessive influence is generated on other battery cells, so that the exhaust of the plurality of battery cells does not affect each other. The P1 is determined according to the material and thickness of the shell of the battery cell 11, and is preferably 0.5-0.7 MPa, and the pressure is generally a maximum pressure which a relatively thin battery shell may bear before deformation.

### Embodiment 34

A high-capacity battery in the present embodiment includes a plurality of battery cells connected in parallel, an electrolyte sharing system, a repair apparatus, and an exhaust channel, wherein the exhaust channel is mainly composed of a second hollow member, and regarding the settings of the electrolyte sharing system (not shown in the figure) and the repair apparatus (not shown in the figure), reference is able to be made to descriptions in Embodiment 1 to Embodiment 32, and thus details will not be repeated herein again. As shown in Fig. 56, each of the plurality of battery cells 121 includes a shell, an upper cover plate 1211, a lower cover plate, a cylinder, and a battery core; the upper cover plate 1211, the cylinder and the lower cover plate form a battery shell, the battery core is disposed in the battery shell, and electrolyte is also injected into the battery shell. In the present embodiment, the second hollow member 122 includes a porous tube, wherein the number of holes in the porous tube is the same as the number of the plurality of battery cells 121, through hole in the upper cover plate 1211 of each battery shell communicates with the porous tube, and the specific connection structure thereof may use the structure provided in Embodiment 1.

In order to prevent the situation in which during the exhaust or thermal runaway of a certain battery cell 121 in the high-capacity battery, a high-temperature gas discharged from the battery cell affects other battery cells 121, at this time, a one-way valve 123 with an opening pressure of P1 is disposed on the branch pipe, when the high-pressure gas in any battery cell 121 exceeds P1, the one-way valve 123 is opened to discharge the high-pressure gas in the battery cell 121 into the second hollow member 122, and then the high-pressure gas is discharged by the second hollow member. By disposing the one-way valve, firstly, the pressures in the inner cavities of the plurality of battery cells are always below P1, so that the pressures in the plurality of battery cells are kept consistent, and thus the performance of the high-capacity battery is improved. Secondly, by disposing the one-way valve, the inner cavities of the plurality of battery cells 121 are isolated from the second hollow member 122, therefore during the exhaust of a certain battery cell, no excessive influence is generated on other battery cells 121, so that the exhaust and explosion venting of the plurality of battery cells do not affect each other. The P1 is determined according to the material and thickness of the shell of the battery cell 121, and is preferably 0.5-0.7 MPa, and the pressure is generally a maximum pressure which a relatively thin battery shell is able to bear before deformation.

Of course, when the one-way valve 123 is disposed, a pressure relief component 124 may also be disposed on the second hollow member 122, and the disposition of the pressure relief component 124 may specifically refer to the mode in Embodiment 33, at this time, an opening pressure or a pressure relief pressure on a pressure relief valve 1241 is not required, as long as the high-pressure gas in the second hollow member 122 is able to be discharged in time. In an embodiment, the one-way valve 123 and the pressure relief valve 1241 may also implement double sealing of the inner cavity of the battery cell 121, that is, the one-way valve 123 is first seal, and the pressure relief valve 1241 is second seal.

### Embodiment 35

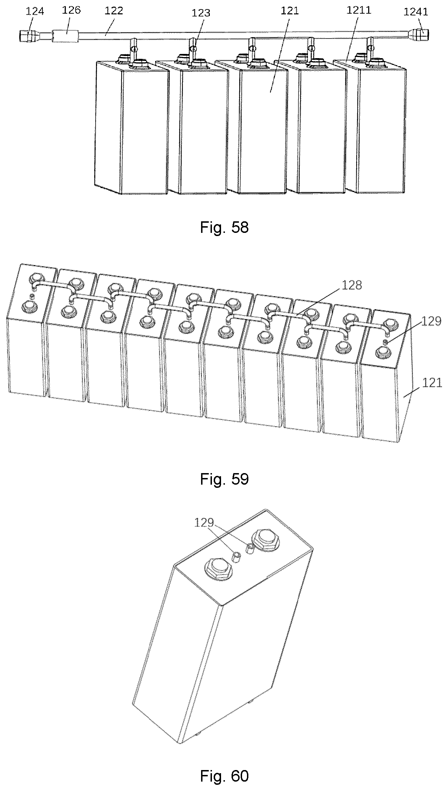

As shown in Fig. 57 and Fig. 58, on the basis of Embodiment 33 and Embodiment 34, in order to further prolong the service life of the high-capacity battery, that is, increase the number of cycles of the high-capacity battery, on the basis of the exhaust channel of the battery cell 121, other performance improvement systems are added:
(1) Liquid injection and replacement mechanism

A liquid injection and replacement mechanism 125 mainly injects electrolyte into the battery cell 121 and/or replace the electrolyte in the battery cell 121; by replacing and injecting the electrolyte, the service life, the number of cycles and the capacity upper limit of the high-capacity battery are effectively improved; the liquid injection and replacement mechanism 125 is able to be additionally disposed on the other end of the second hollow member 122 directly (a pressure relief component is disposed on one end of the second hollow member 122); and the liquid injection and replacement mechanism 125 is connected with the second hollow member 122, and is configured for adding electrolyte into the battery cell 121. The liquid injection and replacement mechanism 125 specifically includes a liquid injection valve 1251 and a liquid injection pump 1252, the liquid injection valve 1251 is a three-way valve, a first port of the three-way valve communicates with the inner cavity of the second hollow member 122, a second port thereof communicates with the liquid injection pump 1252, and a third port thereof is connected with a vacuumizing apparatus 1253. When electrolyte is supplemented, the liquid injection valve 1251 is opened, a vacuumizing device is connected, vacuumizing is able to be first performed on the cavity of the battery and the second hollow member 122 by the vacuumizing device, and then electrolyte in an external liquid storage apparatus is supplemented into the cavity of the battery via the liquid injection valve 1251 and the liquid injection pump 1252. The above vacuumizing and electrolyte injection operations are repeated for multiple times until the gas in each of the plurality of battery cells 101 is completely extracted, and the electrolyte is also injected to a liquid level of about 70%.

After the high-capacity battery is configured for a long time, its performance is able tonot meet the requirements, and at this time, the performance of the high-capacity battery is able to be improved by replacing the electrolyte. The electrolyte is able to be replaced in the following mode: the liquid injection valve 1251 is opened, the vacuumizing apparatus 1253 is connected to extract the electrolyte outwards, the electrolyte in each of the plurality of battery cells 21 is discharged into a specified container by the liquid injection valve 1251 and the liquid injection pump 1252 until the electrolyte is extracted to a certain negative pressure, the liquid injection valve 1251 is connected with the external liquid storage apparatus, and the electrolyte in the external liquid storage apparatus is supplemented into the battery cell. In order to completely replace the old electrolyte in the high-capacity battery, after the electrolyte is extracted to a certain negative pressure, the operation is stopped, nitrogen is injected into the inner cavity of the battery cell, so as to achieve an internal pressure balance. The above liquid extraction and nitrogen adding processes are repeated for multiple times until the electrolyte in the battery is completely extracted. Then, the liquid injection valve is connected with the external liquid storage apparatus, and the electrolyte in the external liquid storage apparatus is supplemented into the battery cell.

### (2) Adsorption apparatus

An adsorption apparatus 126 is disposed in the second hollow member 122, an adsorption material is disposed in the adsorption apparatus 126, the adsorption material may use a hole structure, for example, a molecular sieve, activated carbon and the like may be used, and the adsorption material is configured for adsorbing electrolyte discharged along with gases, so as to prevent the electrolyte from being discharged along with the gases to generate harms.

### Embodiment 36

Different from Embodiment 33 and Embodiment 34, as shown in Fig. 59 and Fig. 60, in the present embodiment, the second hollow member is composed of a plurality sections of hollow sub-members 128; and two through holes are formed in the upper cover plate of each of the plurality of battery cells. The two ends of each section of hollow sub-member 128 respectively communicate with one of the through holes in the upper cover plates of adjacent battery cells; an explosion venting film or an explosion venting valve is disposed on at least one of remaining through holes of two battery cells on the outermost side; and it should be noted that when the explosion venting film or the explosion venting valve is disposed on the remaining through hole of the battery cell on the outermost side, the remaining through hole of the other battery cell on the outermost side needs to be blocked by a plug or a pressure relief valve is installed thereon. Since the tops of the plurality of battery cells constituting the high-capacity battery are communicated with each other, if a certain battery cell generates more gases, these excess gases are communicated and exchanged with gases at the tops of the other battery cells, in this way, internal gas environments of the plurality of battery cells 121 become more similar, thus forming a shared gas region, so that the plurality of battery cells are in a balanced gas environment, and it is impossible to form a gas difference environment due to the fact that a certain battery cell 121 generates more gases, thereby avoiding the influence of the differences among the plurality of battery cells 121 on the high-capacity battery.

In order to facilitate the connection between the hollow sub-members 128 and the through holes, the plurality sections of hollow sub-members 128 in the present embodiment are able to be aluminum tubes, branch tubes 129 (see Fig. 60) are integrally disposed at the through holes in the upper cover plates of the plurality of battery cells, and the two ends of the hollow sub-members are welded with the branch tubes. In the present embodiment, it is not required that the through holes of all battery cells in the high-capacity battery are collinear, so that the requirements for the machining precision are lower.

### Embodiment 37

The present embodiment provides another high-capacity battery. The high-capacity battery includes a battery pack main body; the battery pack main body includes a plurality of battery cells connected in parallel; an inner cavity of each of the plurality of battery cells includes a gas region and an electrolyte region; the electrolyte regions of the plurality of battery cells communicate with each other to form an electrolyte sharing system; and a repair interface is configured on the high-capacity battery, and the repair interface is connected with a repair apparatus to improve the performance of the high-capacity battery and prolong the service life of the high-capacity battery.

The high-capacity battery in the present embodiment does not include a repair apparatus, and only the repair interface is reserved. After the high-capacity battery is configured for a period of time and the capacity thereof is attenuated, for example, the capacity is attenuated to be lower than 95%, the repair apparatus in Embodiment 3 to Embodiment 36 is configured on the repair interface to repair the high-capacity battery, so as to improve the capacity of the high-capacity battery and prolong the cycle life of the high-capacity battery.

The repair interface is able to be specifically configured on the electrolyte sharing system of the high-capacity battery, and may also be disposed on an electrolyte chamber. If the repair interface is configured on the electrolyte sharing system (a first hollow member) of the high-capacity battery, the repair interface is an end portion interface of the first hollow member, which is sealed by a sealing member. When it is necessary to repair the high-capacity battery, the sealing member is disassembled, and a liquid injection and replacement mechanism, a lithium source, an adsorption mechanism, a uniform mixing mechanism, a third electrode or the like are externally connected to or inserted into the end portion interface. If the repair interface is configured on the electrolyte chamber of the high-capacity battery, the repair interface is an opening formed in a side wall of the electrolyte chamber and sealed by the sealing member, when it is necessary to repair the high-capacity battery, the sealing member is disassembled, and the liquid injection and replacement mechanism, the lithium source, the adsorption mechanism, the uniform mixing mechanism, the third electrode or the like are externally connected to or inserted into the opening.

It should be noted that the high-capacity battery with the reserved repair interface has a relatively simple structure, it is unnecessary to perform a greater structural change on an existing high-capacity battery, and it is only necessary to reserve the repair interface, therefore this mode is suitable for most existing high-capacity batteries with electrolyte sharing systems. After the high-capacity battery runs for a period of time, the repair apparatus is externally connected to the repair interface regularly or irregularly to repair the high-capacity battery. It should be noted that, when the high-capacity battery with the repair interface is externally connected with the repair apparatus subsequently, the sealing performance of the joint between the repair interface and the repair apparatus needs to be ensured.

For the high-capacity battery that has been provided with the repair apparatus, since the high-capacity battery has been provided with the repair apparatus, after the high-capacity battery runs for a period of time, it is only necessary to regularly, irregularly or continuously start the repair apparatus (the working state of the repair apparatus is able to be controlled by a battery management system), so as to repair the high-capacity battery. Therefore, the high-capacity battery with the repair apparatus has a simple repair operation, meanwhile, the high-capacity battery of this structure has better sealing performance, and it is unnecessary to break the sealing performance of the high-capacity battery subsequently.

### Embodiment 38

The present embodiment provides a method for repairing a high-capacity battery, wherein the high-capacity battery includes a battery pack main body, and the battery pack main body includes a plurality of battery cells connected in parallel; an inner cavity of each of the plurality of battery cells includes a gas region and an electrolyte region; the electrolyte regions of the plurality of battery cells communicate with each other to form an electrolyte sharing system; after the high-capacity battery is configured for a period of time and the capacity thereof is attenuated, for example, the capacity is attenuated to be lower than 95%, the repair apparatus in Embodiment 3 to Embodiment 36 is used to repair the high-capacity battery, so as to improve the capacity of the high-capacity battery and prolong the cycle life of the high-capacity battery.

The above repair is able to be performed in a running process of the high-capacity battery (in a charging and discharging process), for example, liquid supplementation, lithium supplementation, adsorption and uniform mixing are performed on the electrolyte in the running process, so as to improve the capacity of the high-capacity battery and prolong the cycle life of the high-capacity battery. Meanwhile, the repair may also be performed in a non-charging and discharging process of the high-capacity battery, for example, liquid replacement repair is performed on the high-capacity battery.

## Claims

1. A high-capacity battery, comprising a plurality of battery cells connected in parallel, wherein an inner cavity of each of the plurality of battery cells comprises a gas region and an electrolyte region; and electrolyte regions of the plurality of battery cells communicate with each other to form an electrolyte sharing system.

2. The high-capacity battery as claimed in claim 1, wherein the high-capacity battery further comprises a repair apparatus, the repair apparatus is configured on the electrolyte sharing system to improve a performance of the high-capacity battery and prolong a service life of the high-capacity battery.

3. The high-capacity battery as claimed in claim 2, wherein the repair apparatus comprises a liquid injection and replacement mechanism; and the liquid injection and replacement mechanism is configured for injecting electrolyte into the electrolyte sharing system, or replacing the electrolyte in the electrolyte sharing system in an injection and extraction mode.

4. The high-capacity battery as claimed in claim 3, wherein the electrolyte sharing system comprises a first hollow member, the first hollow member comprises a plurality of first hollow units that are disposed on lower cover plates of the plurality of battery cells and respectively communicate with the electrolyte regions of all of the plurality of battery cells, and a plurality of second hollow units configured for communicating the plurality of first hollow units, the liquid injection and replacement mechanism is disposed on one end of the first hollow member, and the other end of the first hollow member is provided with an explosion venting valve.

5. The high-capacity battery as claimed in claim 4, wherein the liquid injection and replacement mechanism comprises a valve and a liquid extraction and injection device, one end of the valve communicates with the first hollow member, and the other end of the valve communicates with the liquid extraction and injection device.

6. The high-capacity battery as claimed in claim 4, wherein the liquid injection and replacement mechanism comprises a sealing cap and a rubber pad; the sealing cap is hermetically installed on an end portion of the first hollow member and is configured for sealing the end portion of the first hollow member from an outside; and the rubber pad is fixedly disposed in the first hollow member at a position close to the sealing cap, and the rubber pad is able to be configured for inserting a liquid injection needle tube.

7. The high-capacity battery as claimed in claim 6, wherein the liquid injection and replacement mechanism further comprises a third hollow member fixed in the first hollow member; a plurality of first through holes are uniformly formed in the third hollow member; and a forming position of each of the plurality of first through holes corresponds to one battery cell of the plurality of battery cells, a plurality of second through holes are formed in a tube wall of the liquid injection needle tube, and the plurality of second through holes are in one-to-one correspondence with the plurality of first through holes.

8. The high-capacity battery as claimed in claim 2, wherein the repair apparatus comprises at least one lithium source disposed in the electrolyte sharing system, and at least a part of the at least one lithium source is electrically conducted with at least one shell of the plurality of battery cells, so that lithium ions in the at least one lithium source are released and intercalated into a negative electrode material of each of the plurality of battery cells.

9. The high-capacity battery as claimed in claim 8, wherein the electrolyte sharing system comprises a first hollow member, the first hollow member comprises a plurality of first hollow units that are disposed on lower cover plates of the plurality of battery cells and respectively communicate with the electrolyte regions of the plurality of battery cells, and a plurality of second hollow units configured for communicating the plurality of first hollow units, the at least one lithium source is located in the first hollow member, the at least one lithium source is hermetically connected with one end of the first hollow member, and the other end of the first hollow member is provided with a liquid injection and replacement mechanism or an explosion venting valve.

10. The high-capacity battery as claimed in claim 9, wherein each of the at least one lithium source comprises a conductive end cap, a lithium rod and a sealing plug; an outer surface of the conductive end cap is provided with threads, and a central through hole is formed in the conductive end cap; the conductive end cap is in threaded connection with a port of one end of the first hollow member; the lithium rod comprises a conductive section and a lithium supplementation section; the conductive section is located in the central through hole and is in contact with a hole wall of the central through hole, and the lithium supplementation section at least partially extends out of the central through hole and is configured for releasing the lithium ions into the first hollow member; and the sealing plug is disposed in the central through hole and is configured for hermetically isolating the lithium rod from an external environment.

11. The high-capacity battery as claimed in claim 10, wherein the lithium supplementation section is a metal lithium with a protective layer or a lithium oxide provided with the protective layer; the protective layer is dissolved under a soaking of an electrolyte, and once the protective layer is dissolved, the metal lithium or the lithium oxide is in contact with the electrolyte in the electrolyte sharing system.

12. The high-capacity battery as claimed in claim 10, wherein the lithium supplementation section is a fourth hollow member insoluble in an electrolyte, an inner wall of the fourth hollow member is provided with a metal lithium layer or a lithium oxide layer; and a port of an end of the fourth hollow member that is away from the conductive section is provided with a sealing film soluble in the electrolyte.

13. The high-capacity battery as claimed in claim 2, wherein the repair apparatus comprises an adsorption mechanism, which is disposed in the electrolyte sharing system and is configured for absorbing impurities in an electrolyte.

14. The high-capacity battery as claimed in claim 13, wherein the electrolyte sharing system comprises a first hollow member, and the first hollow member comprises a plurality of first hollow units that are disposed on lower cover plates of the plurality of battery cells and respectively communicate with the electrolyte regions of the plurality of battery cells, and a plurality of second hollow units configured for communicating the plurality of first hollow units.

15. The high-capacity battery as claimed in claim 14, wherein one end of the first hollow member is provided with a liquid injection and replacement mechanism or an explosion venting valve, and the adsorption mechanism is inserted into the other end of the first hollow member; and the adsorption mechanism is an adsorption mandrel, the adsorption mandrel is at least partially located in the first hollow member, and a material of the adsorption mandrel is α-Al₂O₃, or the material of the adsorption mandrel is a lithiated molecular sieve.

16. The high-capacity battery as claimed in claim 14, wherein one end of the first hollow member is provided with an explosion venting valve, the other end of the first hollow member is provided with a sealing end cap, and a positioning blind hole is formed in the sealing end cap; a support ring is disposed in the first hollow member; the adsorption mechanism is a double-layer adsorption tube, one end of the double-layer adsorption tube is inserted into the positioning blind hole of the sealing end cap, a part of the double-layer adsorption tube penetrates through the support ring, and the other end of the double-layer adsorption tube is open; an inner-layer tube of the double-layer adsorption tube serves as a liquid injection channel, and an outer tube of the double-layer adsorption tube serves as an adsorption layer; and a rubber plug is disposed on the end of the double-layer adsorption tube that is located in the positioning blind hole for inserting a liquid injection needle tube.

17. The high-capacity battery as claimed in claim 14, wherein the adsorption structure is a resin package disposed in the hollow member, and the resin package comprises a core layer and a cladding layer wrapped on the core layer; and the core layer is resin containing a polar amide group, and the cladding layer is a filter screen which an electrolyte is able to freely enter and exit.

18. The high-capacity battery as claimed in claim 2, wherein the repair apparatus comprises a uniform mixing mechanism; and the uniform mixing mechanism is configured for uniformly mixing an electrolyte in the electrolyte sharing system.

19. The high-capacity battery as claimed in claim 18, wherein the electrolyte sharing system comprises a first hollow member, and the first hollow member comprises a plurality of first hollow units that are disposed on lower cover plates of the plurality of battery cells and respectively communicate with the electrolyte regions of the plurality of battery cells, and a plurality of second hollow units configured for communicating the plurality of first hollow units.

20. The high-capacity battery as claimed in claim 19, wherein the uniform mixing mechanism is an ultrasonic vibration rod; and one end of the first hollow member is provided with a liquid injection and replacement mechanism or an explosion venting valve, and the ultrasonic vibration rod is inserted into the other end of the first hollow member.

21. The high-capacity battery as claimed in claim 19, wherein the uniform mixing mechanism is an electric stirrer, one end of the first hollow member is provided with a liquid injection and replacement mechanism or an explosion venting valve, and the electric stirrer is installed on the other end of the first hollow member.

22. The high-capacity battery as claimed in claim 2, wherein the repair apparatus comprises a third electrode, and the third electrode is made from a conductive material insoluble in an electrolyte; a part of the third electrode is disposed in the electrolyte sharing system and is in contact with the electrolyte, and a potential difference is generated between the third electrode and a positive electrode or a negative electrode of at least one battery cell of the plurality of battery cells, so that lithium ions of the high-capacity battery are supplemented, and thus a repair of the high-capacity battery is completed.

23. The high-capacity battery as claimed in claim 22, wherein a voltage source is disposed between the third electrode and the positive electrode or the negative electrode of the at least one battery cell of the plurality of battery cells, and the third electrode is a silver rod.

24. The high-capacity battery as claimed in claim 22 or 23, wherein the electrolyte sharing system comprises a first hollow member, and the first hollow member comprises a plurality of first hollow units that are disposed on lower cover plates of the plurality of battery cells and respectively communicate with the electrolyte regions of the plurality of battery cells, and a plurality of second hollow units configured for communicating the plurality of first hollow units.

25. The high-capacity battery as claimed in claim 24, wherein one end of the first hollow member is hermetically connected with the third electrode, and a part of the third electrode is located in the first hollow member; and the other end of the first hollow member is provided with a liquid injection and replacement mechanism.

26. The high-capacity battery as claimed in claim 24, wherein the third electrode comprises a fifth hollow member, a sealing end cap and a rubber stopper; the fifth hollow member is hermetically connected with a port of one end of the first hollow member, a part of the fifth hollow member is located in the first hollow member, the part of the fifth hollow member is provided with at least one through hole for liquid injection and replacement, and the other part of the fifth hollow member is located outside the first hollow member; the sealing end cap is disposed a port of the other part of the fifth hollow member and is configured for isolating the fifth hollow member from an outside; the rubber stopper is fixedly disposed in the fifth hollow member, is close to one side of the sealing end cap, and is configured for inserting a liquid injection needle tube; and the other end of the first hollow member is provided with an explosion venting valve.

27. The high-capacity battery as claimed in claim 1, wherein the high-capacity battery further comprises an electrolyte chamber and a repair apparatus, the electrolyte chamber is connected with the electrolyte sharing system, and the repair apparatus is disposed on the electrolyte chamber to improve a performance of the high-capacity battery and prolong a service life of the high-capacity battery.

28. The high-capacity battery as claimed in claim 27, wherein the electrolyte chamber is filled with electrolyte, and the electrolyte in the electrolyte chamber communicates with the electrolyte in the electrolyte sharing system.

29. The high-capacity battery as claimed in claim 28, wherein the electrolyte sharing system comprises a first hollow member, an inner cavity of the first hollow member communicates with the electrolyte regions of the plurality of battery cells, the repair apparatus comprises a control valve and/or an active liquid supplementation apparatus disposed between an inner cavity of the electrolyte chamber and the inner cavity of the first hollow member, and the active liquid supplementation apparatus is configured for actively injecting the electrolyte in the electrolyte chamber into the electrolyte sharing system.

30. The high-capacity battery as claimed in claim 29, wherein one end of the first hollow member extends into the electrolyte chamber, the control valve and the active liquid supplementation apparatus are disposed on the first hollow member in the electrolyte chamber, and a pressure measurement apparatus is disposed on the first hollow member.

31. The high-capacity battery as claimed in any of claims 28-30, wherein the high-capacity battery further comprises a liquid injection mechanism, the liquid injection mechanism is connected with the electrolyte chamber and is configured for adding electrolyte into the electrolyte chamber, and the liquid injection mechanism is a liquid injection valve and a liquid injection pump, which are disposed on the electrolyte chamber.

32. The high-capacity battery as claimed in claim 31, wherein an opening is formed in a side wall of the electrolyte chamber, the liquid injection mechanism is a sealing rubber pad disposed on the electrolyte chamber for sealing the opening, the sealing rubber pad is able to be configured for inserting a liquid injection needle tube, and a drain valve is disposed at the bottom of the electrolyte chamber.

33. The high-capacity battery as claimed in claim 27, wherein the repair apparatus comprises a lithium source, and an electrolyte in the electrolyte chamber communicates with an electrolyte in the electrolyte sharing system; the lithium source is disposed in the electrolyte chamber and is at least partially soaked in the electrolyte in the electrolyte chamber; and the lithium source is conducted with a positive electrode of at least one battery cell of the plurality of the battery cells, so that lithium ions in the lithium source are released in the electrolyte in the electrolyte chamber.

34. The high-capacity battery as claimed in claim 33, wherein the electrolyte sharing system comprises a first hollow member, an inner cavity of the first hollow member communicates with the electrolyte chamber and the electrolyte regions of the plurality of battery cells, the electrolyte chamber and the first hollow member are connected with shells of the plurality of battery cells, and the lithium source is electrically connected with a side wall of the electrolyte chamber.

35. The high-capacity battery as claimed in claim 34, wherein the lithium source is a lithium metal or a lithium oxide, a part of the lithium source soaked in the electrolyte in the electrolyte chamber is provided with a protective layer, the protective layer is configured for isolating the lithium source from the electrolyte in the electrolyte chamber, and the protective layer is dissolved under a soaking of the electrolyte in the electrolyte chamber.

36. The high-capacity battery as claimed in any of claims 33-35, wherein the lithium source is a lithium rod, the lithium rod is of a hollow structure, one end of the hollow structure is provided with a sealing portion, and the sealing portion is provided with a liquid injection and replacement mechanism.

37. The high-capacity battery as claimed in any of claims 33-35, wherein the lithium source is detachably connected with a side wall of the electrolyte chamber.

38. The high-capacity battery as claimed in any of claims 33-35, wherein the high-capacity battery further comprises a circulation pipe and a circulation pump, one end of the circulation pipe communicates with the electrolyte sharing system, and the other end of the circulation pipe is connected with the electrolyte chamber, and the circulation pump provides power for a circulation of an electrolyte in the circulation pipe, the plurality of battery cells, the electrolyte chamber and the electrolyte sharing system.

39. The high-capacity battery as claimed in claim 27, wherein the repair apparatus comprises an adsorption mechanism; and the adsorption mechanism is configured for adsorbing and treating impurities in an electrolyte.

40. The high-capacity battery as claimed in claim 39, wherein an electrolyte in the electrolyte chamber communicates with an electrolyte in the electrolyte sharing system, and the adsorption mechanism is disposed in the electrolyte chamber.

41. The high-capacity battery as claimed in claim 39, wherein the electrolyte sharing system comprises a first hollow member, an inner cavity of the first hollow member communicates with the electrolyte regions of the plurality of battery cells, one end of the first hollow member extends into the electrolyte chamber and is provided with a control valve and a liquid extraction pump, the control valve is configured for separating an electrolyte in the first hollow member from an electrolyte in the electrolyte chamber, the liquid extraction pump is configured for extracting the electrolyte in the first hollow member into the electrolyte chamber, and the adsorption mechanism is disposed in the electrolyte chamber.

42. The high-capacity battery as claimed in any of claims 39-41, wherein the adsorption mechanism is an adsorption rod or an adsorption layer disposed on an inner wall of the electrolyte chamber, an material of the adsorption rod or the adsorption layer is a lithiated molecular sieve or α-Al₂O₃, and a protective layer soluble in the electrolyte is disposed on an outer side of the adsorption mechanism that is in contact with the electrolyte.

43. The high-capacity battery as claimed in any of claims 39-41, wherein the adsorption mechanism is of a hollow structure, an end of the hollow structure is provided with a sealing portion, the sealing portion is provided with a liquid injection mechanism, or the adsorption apparatus is a resin package, and the resin package comprises a core layer and a cladding layer wrapped on the core layer; and the core layer is resin containing a polar amide group, and the cladding layer is a filter screen which the electrolyte is able to freely enter and exit.

44. The high-capacity battery as claimed in any of claims 39-41, wherein the adsorption mechanism is detachably disposed on a side wall of the electrolyte chamber.

45. The high-capacity battery as claimed in any of claims 39-41, wherein the high-capacity battery further comprises a circulation pipe and a circulation pump, one end of the circulation pipe communicates with inner cavities of the plurality of battery cells, and the other end of the circulation pipe communicates with the electrolyte chamber, the circulation pump provides power for a circulation of electrolyte in the circulation pipe, the plurality of battery cells, the electrolyte chamber and the electrolyte sharing system, and the adsorption mechanism is disposed in the electrolyte chamber, or the adsorption mechanism is disposed in the circulation pipe.

46. The high-capacity battery as claimed in claim 27, wherein the repair apparatus comprises a uniform mixing mechanism; and the uniform mixing mechanism is configured for uniformly mixing an electrolyte.

47. The high-capacity battery as claimed in claim 46, wherein the electrolyte chamber is filled with electrolyte, an electrolyte in the electrolyte chamber communicates with an electrolyte in the electrolyte sharing system, and the uniform mixing mechanism is disposed inside the electrolyte chamber or outside the electrolyte chamber.

48. The high-capacity battery as claimed in claim 46, wherein the electrolyte sharing system comprises a first hollow member, an inner cavity of the first hollow member communicates with the electrolyte regions of the plurality of battery cells, one end of the first hollow member extends into the electrolyte chamber and is provided with a control valve and a liquid extraction pump, the control valve is configured for separating an electrolyte in the first hollow member from an electrolyte in the electrolyte chamber, the liquid extraction pump is configured for extracting the electrolyte in the first hollow member into the electrolyte chamber, and the uniform mixing mechanism is disposed inside the electrolyte chamber or outside the electrolyte chamber.

49. The high-capacity battery as claimed in any of claims 46-48, wherein the uniform mixing mechanism is a stirring apparatus, the stirring apparatus is disposed in the electrolyte chamber, or the uniform mixing mechanism is a vibration apparatus, and the vibration apparatus is disposed in the electrolyte chamber or on an outer wall of the electrolyte chamber.

50. The high-capacity battery as claimed in any of claims 46-48, wherein the uniform mixing mechanism comprises an external circulation pipe and an external circulation pump, one end of the external circulation pipe communicates with an inner cavity of the electrolyte sharing system, the other end of the external circulation pipe is connected with the electrolyte chamber, and the external circulation pump is disposed on the external circulation pipe to provide power for a circulation of electrolyte in the external circulation pipe, the plurality of battery cells, the electrolyte chamber and the electrolyte sharing system.

51. The high-capacity battery as claimed in claim 50, wherein the uniform mixing mechanism further comprises a stirring apparatus or a vibration apparatus, the stirring apparatus is disposed in the electrolyte chamber, and the vibration apparatus is disposed in the electrolyte chamber or on an outer wall of the electrolyte chamber.

52. The high-capacity battery as claimed in claim 46, wherein the electrolyte sharing system comprises a first hollow member, an inner cavity of the first hollow member communicates with an inner cavity of the electrolyte chamber and inner cavities of the plurality of battery cells, the uniform mixing mechanism comprises an internal circulation pipe and an internal circulation pump, the internal circulation pipe is disposed in the first hollow member, one end of the internal circulation pipe extends into the electrolyte chamber, and the internal circulation pump is disposed on the internal circulation pipe in the electrolyte chamber.

53. The high-capacity battery as claimed in claim 52, wherein the uniform mixing mechanism further comprises a stirring apparatus or a vibration apparatus, the stirring apparatus is disposed in the electrolyte chamber, and the vibration apparatus is disposed in the electrolyte chamber or on an outer wall of the electrolyte chamber.

54. The high-capacity battery as claimed in any of claims 46-48, claim 52 and claim 53, wherein the high-capacity battery further comprises a liquid injection mechanism, the liquid injection mechanism is disposed on the electrolyte sharing system or the electrolyte chamber and is configured for supplementing electrolyte.

55. The high-capacity battery as claimed in claim 27, wherein the repair apparatus comprises a third electrode; an electrolyte in the electrolyte chamber communicates with an electrolyte in the electrolyte sharing system; the third electrode is disposed in the electrolyte chamber, and the third electrode is made from a conductive material insoluble in the electrolyte; the third electrode is at least partially soaked in the electrolyte of the electrolyte chamber, and is configured for forming a potential difference with a positive electrode or a negative electrode of at least one of the plurality of battery cells, so that lithium ions of the high-capacity battery are supplemented, and thus a repair of the high-capacity battery is completed.

56. The high-capacity battery as claimed in claim 55, wherein one end of the third electrode is immersed in the electrolyte of the electrolyte chamber, and the other end of the third electrode extends out of the electrolyte chamber to be electrically connected with the positive electrode or the negative electrode of the at least one of the plurality of battery cells.

57. The high-capacity battery as claimed in claim 56, wherein a voltage source is further disposed between the third electrode and the positive electrode or the negative electrode of the at least one of the plurality of battery cells, and a handover switch is further disposed between the third electrode and the positive electrode or the negative electrode of the at least one of the plurality of battery cells; and the handover switch controls the third electrode to be electrically conducted with the positive electrode of the at least one of the plurality of battery cells or controls the third electrode to be electrically conducted with the negative electrode of the at least one of the plurality of battery cells, and the third electrode is a silver rod.

58. The high-capacity battery as claimed in any of claims 55-57, wherein the high-capacity battery further comprises a liquid injection mechanism, the liquid injection mechanism is disposed on the third electrode or the electrolyte chamber, the third electrode is of a hollow structure, one end of the hollow structure is provided with a sealing portion, the liquid injection mechanism is connected with the sealing portion, and the third electrode is detachably connected with a side wall of the electrolyte chamber.

59. The high-capacity battery as claimed in any of claims 55-57, wherein the high-capacity battery further comprises a circulation pipe and a circulation pump, one end of the circulation pipe communicates with the electrolyte sharing system, the other end thereof is connected with the electrolyte chamber, and the circulation pump provides power for the circulation of the electrolyte that has been subjected to the lithium supplementation in the circulation pipe, the plurality of battery cells, the electrolyte chamber and the electrolyte sharing system.

60. The high-capacity battery as claimed in any of claims 1-23, claims 27-30, claims 33-35, claims 39-41, claims 46-48 and claims 55-57, wherein the gas regions of the plurality of battery cells communicate with each other via a second hollow member, and the second hollow member is configured for providing a channel to discharge gases in the plurality of battery cells.

61. The high-capacity battery as claimed in claim 60, wherein a pressure relief component is disposed on the second hollow member, and the pressure relief component is configured for discharging a gas in any one of the plurality of battery cells, or the pressure relief component is configured for discharging a thermal runaway flue gas when thermal runaway occurs in any one of the plurality of battery cells, the pressure relief component comprises a pressure relief valve, and the pressure relief valve is disposed on one end or two ends of the second hollow member, or the pressure relief component comprises a pressure relief valve and an explosion venting film, the pressure relief valve is disposed on one end of the second hollow member, and the explosion venting film is disposed on the other end of the second hollow member.

62. The high-capacity battery as claimed in claim 61, wherein the second hollow member comprises third hollow units that are disposed on the upper cover plates of the plurality of battery cells and communicate with the gas regions, and a plurality of fourth hollow units configured for hermetically connecting the third hollow units.

63. The high-capacity battery as claimed in claim 62, wherein a one-way valve with an opening pressure of P1 is disposed in a region between the third hollow unit and the gas regions of the plurality of battery cells, and the P1 is 0.5-0.7 MPa.

64. The high-capacity battery as claimed in claim 60, wherein the second hollow member is composed of a plurality of sections of hollow sub-members; two through holes are formed in an upper cover plate of each of the plurality of battery cells; two ends of each of the plurality of sections of hollow sub-members communicate with one of the through holes in the upper cover plate of an adjacent battery cell of the plurality of battery cells respectively; and at least one of remaining through holes of two battery cells of the plurality of battery cells on an outermost side is provided with an explosion venting valve or an explosion venting film.

65. A high-capacity battery, comprising a battery pack main body, wherein the battery pack main body comprises a plurality of battery cells connected in parallel; an inner cavity of each of the plurality of battery cells comprises a gas region and an electrolyte region; electrolyte regions of the plurality of battery cells communicate with each other to form an electrolyte sharing system; and a repair interface is configured on the high-capacity battery, and the repair interface is connected with a repair apparatus to improve a performance of the high-capacity battery and prolong a service life of the high-capacity battery.

66. A method for repairing a high-capacity battery, wherein the high-capacity battery comprises a battery pack main body, and the battery pack main body comprises a plurality of battery cells connected in parallel; an inner cavity of each of the plurality of battery cells comprises a gas region and an electrolyte region; electrolyte regions of the plurality of battery cells communicate with each other to form an electrolyte sharing system; and after a capacity of the high-capacity battery is attenuated, a repair is performed to the high-capacity battery is able to improve the capacity and prolong a cycle life of the high-capacity battery.

67. The method for repairing the high-capacity battery as claimed in claim 65, wherein the repair is performed in a running process of the high-capacity battery.
